(19) Europäisches Patentamt
European Patent Office
Office européen des brevets

(11) EP 3 975 057 A1

(12) EUROPEAN PATENT APPLICATION

(43) Date of publication:
**30.03.2022 Bulletin 2022/13**

(21) Application number: **21179995.2**

(22) Date of filing: **17.06.2021**

(51) International Patent Classification (IPC):
***G06N 3/04*** *(2006.01)* ***G06N 5/00*** *(2006.01)*
***G06N 7/00*** *(2006.01)* ***G06N 3/08*** *(2006.01)*

(52) Cooperative Patent Classification (CPC):
**G06N 5/003; G06N 3/0445; G06N 7/005;**
G06N 3/08; G06N 10/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2020 JP 2020158476**

(71) Applicant: **FUJITSU LIMITED**
**Kanagawa 211-8588 (JP)**

(72) Inventor: **Handa, Satoshi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

# (54) OPTIMIZATION DEVICE, OPTIMIZATION METHOD, AND OPTIMIZATION PROGRAM

(57) An optimization device performs: specifying, for each of a plurality of replicas each having a plurality of state variables, an amount of change in strength of interaction according to change in a distance between the replica and another replica, in a state space that indicates a space in which a combination of the values of the plurality of state variables may exist, in the case where a value of a first state variable among the plurality of state variables of the replica is updated; and determining, by using a proposal probability according to the amount of change in the strength of the interaction and an acceptance probability according to a target probability distribution in the case where the value of the first state variable is updated, whether or not to update the value of the first state variable.

FIG. 1

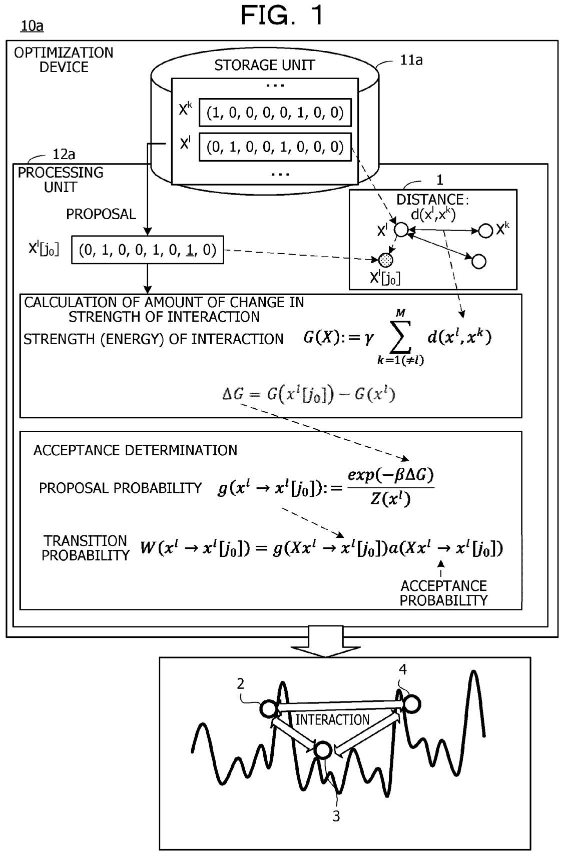


EP 3 975 057 A1

## Description

FIELD

The embodiments discussed herein are related to an optimization device, an optimization method, and an optimization program.

BACKGROUND

One of the problems which Neumann type computers are not good at is a large-scale discrete optimization problem. As a device that calculates the discrete optimization problem, for example, there is an Ising machine (also referred to as a Boltzmann machine) that uses an Ising-type evaluation function (also referred to as an energy function or the like).

In the calculation by the Ising machine, the problem to be calculated is replaced with an Ising model that is a model representing a spin behavior of a magnetic material. Then, a state where a value of the Ising-type evaluation function (corresponding to energy of the Ising model) is minimized is searched for with a Markov-Chain Monte Carlo method. Hereinafter, the Markov-Chain Monte Carlo method is abbreviated as MCMC method. In the MCMC method, for example, a state transition is accepted with an acceptance probability of the state transition defined by a Metropolis method or a Gibbs method.

As a kind of the MCMC method, there is a replica exchange method (also referred to as an exchange Monte Carlo method or parallel tempering method). In the replica exchange method, an operation is performed in which MCMC processes using a plurality of temperatures are performed independently of each other, energies obtained by the MCMC processes are compared for every given number of attempts, and states for two temperatures are exchanged with an appropriate probability. According to the replica exchange, a possibility of being constrained by a local solution is suppressed, and an entire search space may be efficiently searched, as compared with a simulated annealing method in which the temperature is gradually lowered.

Note that, there has conventionally been proposed an information processing device capable of performing probabilistic processing based on the Metropolis method while reducing a physical quantity of a circuit. Furthermore, in the field of molecular dynamics simulation, there has been proposed a technique in which a phase distance between two molecules is calculated to determine whether or not to suppress whether or not to exclude an intermolecular interaction. As techniques for performing solution search by using a plurality of replicas, a method referred to as Collective Monte Carlo (CMC) and a method referred to as robust ensemble (RE) have also been proposed.

Examples of the related art include Japanese Laid-open Patent Publication No. 2019-082793, U.S. Patent Application Publication No. 2019/0087546, Gregoire Clarte and Antoine Diez, "Collective sampling through a Metropolis-Hastings like method: kinetic theory and numerical experiments", arXiv:1909.08988v1 [math.ST], 18 Sep. 2019, and Baldassi, Carlo. et. al., "Unreasonable Effectiveness of Learning Neural Networks: From Accessible States and Robust Ensembles to Basic Algorithmic Schemes", PNAS E7655-E7662, Published online 15 Nov. 2016.

SUMMARY

According to an aspect of the embodiments, there is provided an optimization device including: a storage circuit configured to store, for each of a plurality of replicas, values of a plurality of state variables; and a processing circuit configured to perform processing. In an example, the processing performed by the optimization device includes: specifying, for each of the plurality of replicas, an amount of change in strength of interaction according to change in a distance between the replica and another replica that is a part of a replica group obtained by excluding the replica from the plurality of replicas, in a state space that indicates a space in which a combination of the values of the plurality of state variables may exist, in a case where a value of a first state variable among the plurality of state variables of the replica is updated; and determining, on the basis of a proposal probability according to the amount of change in the strength of the interaction and an acceptance probability according to a target probability distribution in the case where the value of the first state variable is updated, whether or not to update the value of the first state variable.

The object and advantages of the invention will be realized and attained by means of the elements and combinations particularly pointed out in the claims.

It is to be understood that both the foregoing general description and the following detailed description are exemplary and explanatory and are not restrictive of the invention.

ADVANTAGEOUS EFFECTS OF INVENTION

According to one aspect, a solution search capability in a case where a plurality of replicas is used may be improved.

BRIEF DESCRIPTION OF DRAWINGS

FIG. 1 is a diagram illustrating a comparative example of an optimization method according to the present embodiment;
FIG. 2 is a diagram illustrating an example of an optimization method according to a first embodiment;
FIG. 3 is a diagram illustrating an example of a system configuration according to a second embodiment;
FIG. 4 is a diagram illustrating an example of hardware of a server;
FIG. 5 is a diagram illustrating an example of an Ising machine;
FIG. 6 is a schematic diagram of an Ising model;
FIG. 7 is a diagram illustrating an example of replica exchange;
FIG. 8 is a diagram illustrating an example of 1-bit flip under a one-hot constraint;
FIG. 9 is a diagram for describing a 2-Way 1-Hot (2W1H) constraint;
FIG. 10 is a diagram illustrating an example of a solution search function of the Ising machine;
FIG. 11 is a diagram illustrating an example of processing in a solution search engine;
FIG. 12 is a diagram illustrating an example of a first selection method of replicas that provide interaction;
FIG. 13 is a flowchart illustrating an example of a procedure of solution search processing in a case where the first selection method of replicas that provide interaction is used;
FIG. 14 is a flowchart illustrating an example of a procedure of solution search processing for each replica;
FIG. 15 is a flowchart illustrating an example of a procedure for calculating a difference in energy of interaction between replicas;
FIG. 16 is a diagram illustrating an example of a second selection method of replicas that provide interaction;
FIG. 17 is a flowchart illustrating an example of a procedure of solution search processing in a case where the second selection method of replicas that provide interaction is used;
FIG. 18 is a diagram illustrating an example of a third selection method of replicas that provide interaction;
FIG. 19 is a flowchart illustrating an example of a procedure of solution search processing in a case where the third selection method of replicas that provide interaction is used;
FIG. 20 is a flowchart illustrating an example of a procedure of solution search processing for each replica in the third selection method of replicas that provide interaction;
FIG. 21 is a flowchart illustrating an example of a procedure for calculating a difference in energy of interaction between replicas;
FIG. 22 is a diagram illustrating an example of a fourth selection method of replicas that provide interaction;
FIG. 23 is a flowchart illustrating an example of a procedure of solution search processing in a case where the fourth selection method of replicas that provide interaction is used;
FIG. 24 is a flowchart illustrating an example of a procedure of solution search processing for each replica in the fourth selection method of replicas that provide interaction;
FIG. 25 is a flowchart illustrating an example of a procedure of update bit selection processing by a first update bit selection method;
FIG. 26 is a flowchart illustrating an example of a processing procedure of a second update bit selection method;
FIG. 27 is a diagram illustrating an example of selectors connected in a tree shape for selection of an update bit;
FIG. 28 is a flowchart illustrating an example of a processing procedure of a third update bit selection method;
FIG. 29 is a diagram illustrating an energy landscape in a case where repulsive interaction is set between replicas;
FIG. 30 is a diagram illustrating an energy landscape in a case where attractive interaction is set between replicas;
FIG. 31 is a diagram illustrating a first verification example;
FIG. 32 is a diagram illustrating a second verification example (part 1); and
FIG. 33 is a diagram illustrating the second verification example (part 2).

DESCRIPTION OF EMBODIMENTS

To speed up the MCMC method, various methods have been proposed for performing group search by using a large number of replicas. However, in any of the methods, an effect of the group search may not be fully exhibited. For example, in a case where a selection method of a transition destination candidate is 1-bit flip (inversion of a value of one of a plurality of bits), each bit is selected as a subject to be inverted with an equal probability, and a transition probability to a state where the selected bit is inverted is determined on the basis of a difference in energy before and after the transition. Thus, there is a possibility that every replica may change its state according to an energy gradient, and a process of the state transition may follow the same path. As a result, a plurality of replicas may stay in the same local solution, making it difficult to search a state space sufficiently widely.

Note that such a problem occurs not only in a case where state variables take discrete values, but also in an optimization problem in which state variables may take continuous values.

In one aspect of the embodiments disclosed below, there is provided a solution to improve a solution search capability in a case where a plurality of replicas is used.

Hereinafter, the present embodiment will be described with reference to the drawings. Note that each embodiment may be implemented in combination with at least one of other embodiments as long as no contradiction arises.

(Comparative Example)

First, a comparative example of an optimization method according to the present embodiment will be described.

FIG. 1 is a diagram illustrating the comparative example of the optimization method according to the present embodiment.

FIG. 1 illustrates an optimization device 10a that implements a solution search method. The optimization device 10a may be a Neumann type computer or non-Neumann type computer. For example, the optimization device 10a may implement the optimization method by executing an optimization program. Furthermore, the optimization device 10a may be an Ising machine that solves an optimization problem by using an Ising model. The Ising machine includes a quantum computer using a quantum bit, a device that reproduces a quantum phenomenon of a quantum bit on a digital circuit, or the like.

The optimization device 10a includes a storage unit 11a and a processing unit 12a. The storage unit 11a is, for example, a memory or a storage device included in the optimization device 10a. The processing unit 12a is, for example, a processor or an arithmetic circuit included in the optimization device 10a. The arithmetic circuit includes a quantum bit or a neuron circuit that reproduces a mechanism of a quantum bit.

The storage unit 11a stores values of a plurality of state variables for each of a plurality of replicas 2 to 4.

The processing unit 12a solves an optimization problem by using the plurality of replicas 2 to 4. For example, the processing unit 12a obtains a value of a state variable that minimizes a value of an objective function defined according to the optimization problem. The objective function is also referred to as energy of a model that represents the optimization problem. In a case where the optimization problem is represented by an Ising model, a Hamiltonian of the Ising model corresponds to the objective function indicating the energy.

For solution search, the processing unit 12a repeats state transitions (update of the values of the state variables) for each of the plurality of replicas 2 to 4, and calculates a value of the objective function on the basis of the values of the plurality of state variables in a generated state. At that time, the processing unit 12a performs the state transitions of the replicas in consideration of interaction between the replicas. As the interaction between the replicas, for example, an attractive force or a repulsive force according to a distance between the replicas may be considered. A distance between a k-th replica $x^k$ and an l-th replica $x^l$ will be referred to as $d(x^k, x^l)$ (k and l are integers greater than or equal to 1). For example, the processing unit 12a performs the state transitions for each of the plurality of replicas 2 to 4 as follows.

The processing unit 12a specifies an amount of change in strength of interaction according to change in a distance between a replica and another replica in a state space 1 indicating a space in which a combination of values of a plurality of state variables may exist, in a case where a value of a first state variable among the plurality of state variables of the replica is updated. The strength of the interaction is, for example, a value based on the sum of distances to other replicas. The strength of the interaction may also be referred to as energy G(X) of the interaction. The strength of the interaction may be represented by, for example, Equation (15) or (16) described later. The amount of change in the strength of the interaction in a case where a jo-th state variable of the l-th replica is updated may be represented as $\Delta G = G(x^l[j_0]) - G(x^l)$.

Then, the processing unit 12a determines whether or not to update the value of the first state variable in the case where the value of the first state variable (for example, the $j_0$-th state variable) is updated. This determination is made on a probability basis on the basis of a proposal probability ($g(x^l \rightarrow x^l[j_0])$) according to the amount of change in the strength of the interaction and an acceptance probability ($a(x^l \rightarrow x^l[j_0])$) according to a target probability distribution. The target probability distribution is, for example, a Gibbs distribution. A transition probability of the state transition of the replica based on the proposal probability and the acceptance probability follows, for example, a Metropolis-Hastings method.

In a case where the processing unit 12a determines to update the value of the first state variable, the processing unit 12a calculates the value of the objective function on the basis of the values of the plurality of state variables of the replica after the value of the first state variable is updated. Furthermore, the processing unit 12a updates the value of the first state variable of the replica in the storage unit 11a. Then, the processing unit 12a repeats update of a value of one of the plurality of state variables for each of the plurality of replicas 2 to 4, and outputs values of the plurality of state variables when the value of the objective function satisfies a predetermined condition. For example, the processing unit 12 repeats update of the plurality of replicas 2 to 4 a predetermined number of times, and then outputs a combination of the values of the plurality of state variables that minimizes the value of the objective function.

In this way, solution search is performed by the state transitions of the replicas in consideration of the interaction between the replicas. For example, the optimization device 10a may comprehensively search the state space 1 by the plurality of replicas 2 to 4 by taking the interaction between the replicas into consideration. Moreover, by using the Metropolis-Hastings method, the optimization device 10a may incorporate, in an appropriate manner, an influence of the interaction between the replicas into calculation.

Note that the processing unit 12a defines an appropriate distance for the state space 1 and determines a distance between the replicas. Then, the processing unit 12a determines the strength of the interaction between the replicas by using the distance, defines a distribution of transition destination candidates (proposal distribution) in the Metropolis-Hastings method, and incorporates the distribution into the calculation. The Metropolis-Hastings method corresponds to a case where the proposal distribution is asymmetric. Thus, there is a degree of freedom in how to determine the proposal distribution. Therefore, the processing unit 12a uses the degree of freedom in the proposal distribution (definition of the proposal probability) in the Metropolis-Hastings method to introduce the interaction between the replicas within the proposal probability.

As the interaction between the replicas, for example, repulsive interaction may be generated. In this case, the processing unit 12a increases the strength of the interaction in a case where a distance between a replica to be determined for a state transition and another replica increases when the value of the first state variable is updated. The processing unit 12a increases the proposal probability as an amount of increase in the strength of the interaction increases. In addition, as the proposal probability of a state variable is larger, the processing unit 12a increases a probability that the state variable is selected as a candidate for updating the value. As a result, for example, the plurality of replicas 2 to 4 may be distributed into a search space to search the search space efficiently, or it is possible to prevent the plurality of replicas 2 to 4 from being stuck in the same local solution and unable to escape.

Furthermore, as the interaction between the replicas, attractive interaction may also be generated. In this case, the processing unit 12a increases the strength of the interaction in a case where a distance between a replica to be determined for a state transition and another replica decreases when the value of the first state variable is updated. The processing unit 12a increases the proposal probability as an amount of increase in the strength of the interaction increases. Therefore, for example, the plurality of replicas 2 to 4 may be used to intensively search a specific space in the search space, or a replica that is stuck in a local solution and unable to escape may escape from the local solution by an attractive force from another replica.

In a case where the state space 1 is discrete and the value of the state variable may only be binary (for example, "1" or "0"), for example, a Hamming distance (or its monotonically increasing function) may be used as the distance between the two replicas. In this case, the processing unit 12a defines Hamming distances between all replicas, thereby calculating the strength of the interaction between the replicas. The distance between the replicas may be represented by Equation (19) described later.

Note that the processing unit 12a normalizes a proposal probability for updating the value of the first state variable, for example, by a normalization constant. For example, an amount of change in the strength of the interaction in a case where the value of the first state variable is updated is defined as $\Delta G$, and an inverse temperature, which is a reciprocal of a temperature parameter value set in the replica, is defined as $\beta$. At this time, the processing unit 12a uses, as the proposal probability, a value obtained by dividing $\exp(-\beta\Delta G)$ by a predetermined normalization constant. This proposal probability may be represented by, for example, Equation (17) described later. The Gibbs distribution is represented by $\exp(-\beta\Delta G)$, and by using the Gibbs distribution to define the proposal probability, it becomes easy to maintain the Gibbs distribution in the objective function (energy).

Furthermore, the processing unit 12a may use, as the proposal probability, a value obtained by dividing the smaller of 1 and $\exp(-\beta\Delta G)$ by a predetermined normalization constant. The proposal probability may be represented by, for example, Equation (18) described later. Thus, in a case where $\exp(-\beta\Delta G)$ exceeds 1, $\exp(-\beta\Delta G)$ is regarded as 1, and it is possible to reduce a difference in influence on the proposal probability in a case where the amount of change in the strength of the interaction differs significantly between the state variables.

Here, the normalization constant will be described. In a known proposal distribution, a plurality of state variables is selected as transition candidates with an equal probability (1/N) (N is an integer greater than or equal to 1 indicating the number of state variables). In this case, the normalization constant is N (a weight of each transition destination is 1 in common). In the optimization device 10a of FIG. 1, a transition probability of each state variable to be a transition candidate is different, and the normalization constant depends on a current state before transition. Thus, the normalization constant is calculated in the processing unit 12a.

For example, the processing unit 12a uses, as the normalization constant, the sum total of values of $\exp(-\beta\Delta G)$ for the plurality of state variables in a case where each of the plurality of state variables is set as the first state variable. The normalization constant may be represented by, for example, Equation (23) described later. Note that, in a case where the interaction is a linear function of the Hamming distance, the processing unit 12a performs, for each state transition of a replica, difference calculation between normalization constants before and after the state transition, calculates an accumulated value (performs accumulative calculation) of the difference, and uses the accumulated value as the latest normalization constant. The linear function of the Hamming distance is a function as indicated in Equation (19) described later.

In the case where the accumulative calculation of the normalization constant is performed, the processing unit 12a stores, in the storage unit 11a, a normalization constant used for determination of a state variable to be updated, every time the state transition of the replica is performed. Then, the processing unit 12a calculates a value of a normalization constant to be used in a state transition of this time on the basis of a value of the normalization constant used at the time of the state transition of the replica and a difference between values of normalization constants generated before and after a previous state transition. The difference between the values of the normalization constants generated before and after the previous state transition is represented by, for example, Equation (24) described later. With this configuration, the normalization constant may be calculated efficiently.

Note that the processing unit 12a may use, as the strength of the interaction, a value based on the sum of square roots of distances from other replicas. The strength of the interaction in this case is represented by, for example, Equation (16) described later. This allows interaction from another replica that is closer to work relatively stronger than interaction from another replica that is farther away. For example, to prevent the plurality of replicas 2 to 4 from being stuck in the same local solution, escape from the local solution may be promoted by exerting a strong repulsive force between replicas existing in the vicinity of the local solution. In this case, the less an influence of a replica at a position farther away from the local solution, the easier it is to escape from the local solution.

Furthermore, the processing unit 12a may first specify, from among the plurality of state variables, state variables that may accept update of values, and determine, from among the specified state variables, a state variable whose value is to be updated in a state transition of a replica of this time. In this case, for each of the plurality of state variables, the processing unit 12a determines, on a probability basis, whether or not to accept update in a case where the update of the state variable is proposed, on the basis of the acceptance probability. Then, the processing unit 12a determines at least one state variable to be updated by increasing a possibility that a state variable having a higher proposal probability is selected from among the state variables determined to accept the update. With this configuration, it is possible to prevent that rejection of the update of the value of the selected state variable (determination that the update is not accepted) is repeated, and that it takes time to determine the state variable whose value is to be updated.

Incidentally, in the comparative example described above, the processing unit 12a calculates the amount of change in the strength of the interaction in consideration of the strength of the interaction between all the replicas. However, in many cases, an escaping effect from the local solution is obtained even if the interaction between all the replicas is not taken into consideration, and rather, there is a possibility that the state transition may be hindered in the case where the interaction between all the replicas is taken into consideration. For example, there is less need to generate repulsive interaction between replicas that are already in significantly different states (far away). Depending on a situation, the state transition may be hindered by being significantly influenced by a replica that is far away. Furthermore, in a case where attractive interaction is generated, the state transition may be hindered because, when a plurality of replicas is stuck in the same local solution, other replicas are more strongly attracted to the local solution. For this reason, it may be better to limit a range of replicas that provide interaction.

Furthermore, when the total number of replicas is M (M is an integer greater than or equal to 2), the number of times of calculation of a distance between replicas included in Equation (15) or (16) described later, which represents strength of interaction, is M for each replica, and is $M^2$ for the entire optimization device 10a. For example, in the case of M = 100, the number of times of calculation described above is $10^4$, and in the case of M = 1000, the number of times of calculation is $10^6$. Thus, as the number of replicas increases, an amount of calculation increases significantly.

An optimization method according to a first embodiment to be described below makes it possible to suppress the amount of calculation as compared with the optimization method according to the comparative example described above.

[First Embodiment]

FIG. 2 is a diagram illustrating an example of the optimization method according to the first embodiment.

An optimization device 10 includes a storage unit 11 and a processing unit 12 similarly to the optimization device 10a of FIG. 1. The storage unit 11 and the processing unit 12 may be implemented by hardware similar to that of the storage unit 11a described above and the processing unit 12a described above, respectively.

The storage unit 11 has a function similar to that of the storage unit 11a described above. On the other hand, the processing unit 12 has a function described below, which is different from that of the processing unit 12a described above.

The processing unit 12 specifies an amount of change in strength of interaction according to change in a distance between a replica and another replica which is a part of a replica group obtained by excluding the replica from M replicas, in the state space 1 described above, in a case where a value of a first state variable among a plurality of state variables of the replica is updated. For example, in the optimization method according to the first embodiment, processing taking interaction between a part of replicas into consideration is performed instead of processing taking interaction between all the replicas into consideration. For example, as illustrated in FIG. 2, interaction between the replicas 2 and 3 and interaction between the replicas 3 and 4 are taken into consideration, but interaction between the replicas 2 and 4 is not taken into consideration. For example, no interaction is provided between the replicas 2 and 4.

For example, there are the following four selection methods of replicas that provide interaction to each replica. A brief description will be given below.

A first selection method is to periodically provide interaction to M replicas on the basis of a replica number, which is identification information given to each replica to identify each replica. In this method, replicas that provide interaction to a replica with a replica number = l is limited to replicas with replica numbers in a range of $l \pm s$. For example, replicas that are given replica numbers included in the range where a difference from l is s will provide interaction to the replica with the replica number = l. In this method, unlike the comparative example, the strength of the interaction is defined as Equation (27) described later instead of Equation (15) or (16) described later.

A second method is to group M replicas into a plurality of groups on the basis of a replica number given to each replica and to provide interaction only between replicas belonging to different groups. In this method, replicas that provide interaction to the replica with the replica number = l are limited to representative replicas of groups different from a group to which the replica with the replica number = l belongs. In this method, unlike the comparative example, the strength of the interaction is defined as Equation (28) described later instead of Equation (15) or (16) described later.

A third method is to dynamically determine a range of replicas to which interaction is applied. In this method, as in the first method, replicas that provide interaction to the replica with the replica number = l will be limited to the replicas with the replica numbers in the range of $l \pm s_t$, but $s_t$ changes dynamically. Every time processing of repeating a state transition is performed, an average value of distances between the replica with the replica number = l and the replicas with the replica numbers in the range of $l \pm s_t$ is calculated, and on the basis of a result of comparison between the average value and two thresholds ($D_1$ and $D_2$ ($D_1 < D_2$)), $s_t$ decreases or increases. For example, in a case where repulsive interaction is generated, $s_t$ is incremented by one when the average value of the distances described above is smaller than $D_1$, and $s_t$ is decremented by one when the average value of the distances described above is greater than $D_2$. The reverse is true in a case where attractive interaction is generated. In this method, unlike the comparative example, the strength of the interaction is defined as Equation (29) described later instead of Equation (15) or (16) described later.

A fourth method is to randomly determine a range of replicas to which interaction is applied. In this method, every time processing of repeating a state transition is performed, other replicas are adopted with a predetermined probability p as replicas that provide interaction to the replica with the replica number = l. In this method, unlike the comparative example, the strength of the interaction is defined as Equation (31) described later instead of Equation (15) or (16) described later.

Examples using these methods will be described in a second embodiment described later.

Other processing in the optimization method of the first embodiment is the same as the processing in the optimization method of the comparative example. For example, the processing unit 12 specifies the amount of change in the strength of the interaction, which is represented by $\Delta G = G(x^l[j_0]) - G(x^l)$, as described above. Then, on the basis of a proposal probability ($g(x^l \rightarrow x^l[j_0])$) and an acceptance probability ($a(x^l \rightarrow x^l[j_0])$), the processing unit 12 determines whether or not to update a value of the first state variable in a case where the value of the first state variable (for example, the jo-th state variable) is updated on a probability basis. In a case where the processing unit 12 determines to update the value of the first state variable, the processing unit 12 calculates a value of an objective function on the basis of values of the plurality of state variables of the replica after the value of the first state variable is updated. Furthermore, the processing unit 12 updates the value of the first state variable of the replica in the storage unit 11. Then, the processing unit 12 repeats update of a value of one of the plurality of state variables for each of the plurality of replicas, and outputs values of the plurality of state variables when the value of the objective function satisfies a predetermined condition.

In this way, in the optimization method of the first embodiment, solution search is performed for by the state transition of the replica that provides interaction between a part of replicas. For example, the optimization device 10 may comprehensively search the state space 1 by providing the interaction between the replicas. This is because, as described above, an escaping effect from a local solution is obtained in many cases even if the interaction between all the replicas is not taken into consideration.

In this way, since the optimization device 10 provides interaction between a part of replicas instead of providing interaction between all the replicas, the amount of calculation may be suppressed as compared with the optimization device 10 of the comparative example.

[Second Embodiment]

Next, the second embodiment will be described. The second embodiment is an example of a system using an Ising machine that calculates a combination of values of state variables that minimizes a value of an objective function. Note that the Ising machine in the second embodiment is an example of the optimization device 10 indicated in the first embodiment. In the Ising machine, a problem to be solved is represented by an Ising model, and a combination of bit values that makes energy of the Ising model have the minimum value is searched for. An expression (Hamiltonian) for calculating the energy of the Ising model is the objective function.

FIG. 3 is a diagram illustrating an example of a system configuration according to the second embodiment. To a server 100, terminal devices 31, 32, ... are connected via a network 20. The terminal devices 31, 32, ... are computers used by users who request a solution to a combination optimization problem. The server 100 receives the requests for solving the combination optimization problem from the terminal devices 31, 32, ..., and generates a Hamiltonian, which is an energy function of the Ising model corresponding to the combination optimization problem. To the server 100, a control device 200 of an Ising machine 300 is connected. The server 100 inputs a search request for a minimum value of the energy to the control device 200 by using the generated Hamiltonian.

The control device 200 controls the Ising machine 300 and performs solution search of a minimum value of the energy in response to a search request input from the server 100. For example, the control device 200 transmits, to the Ising machine 300, an id of a neuron of a combination destination for each neuron as combination destination information. Furthermore, the control device 200 also transmits, to the Ising machine 300, an initial value of a local field (for example, a bias coefficient), a weight coefficient for which a value is not 0, an annealing condition, and the like.

The Ising machine 300 simulates a state transition of an Ising model using a digital circuit on the basis of the control from the control device 200, and searches for a minimum value of the energy.

FIG. 4 is a diagram illustrating an example of hardware of the server. The entire server 100 is controlled by a processor 101. To the processor 101, a memory 102 and a plurality of peripheral devices are connected via a bus 109. The processor 101 may be a multiprocessor. The processor 101 is, for example, a central processing unit (CPU), a micro processing unit (MPU), or a digital signal processor (DSP). At least a part of functions implemented by execution of a program by the processor 101 may be implemented by an electronic circuit such as an application specific integrated circuit (ASIC) or a programmable logic device (PLD).

The memory 102 is used as a main storage device of the server 100. The memory 102 temporarily stores at least a part of an operating system (OS) program and an application program to be executed by the processor 101. Furthermore, the memory 102 stores various types of data used in processing by the processor 101. As the memory 102, for example, a volatile semiconductor storage device such as a random access memory (RAM) is used.

The peripheral devices connected to the bus 109 include a storage device 103, a graphic processing device 104, an input interface 105, an optical drive device 106, a device connection interface 107, and a network interface 108.

The storage device 103 writes and reads data electrically or magnetically to and from a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

To the graphic processing device 104, a monitor 21 is connected. The graphic processing device 104 displays an image on a screen of the monitor 21 according to an instruction from the processor 101. Examples of the monitor 21 include a display device using an organic electro luminescence (EL) and a liquid crystal display device.

To the input interface 105, a keyboard 22 and a mouse 23 are connected. The input interface 105 transmits signals transmitted from the keyboard 22 and the mouse 23 to the processor 101. Note that the mouse 23 is an example of a pointing device, and other pointing devices may also be used. Examples of the other pointing devices include a touch panel, a tablet, a touch pad, and a track ball.

The optical drive device 106 uses laser light or the like to read data recorded on an optical disk 24 or write data to the optical disk 24. The optical disk 24 is a portable recording medium on which data is recorded so as to be readable by reflection of light. Examples of the optical disk 24 include a digital versatile disc (DVD), a DVD-RAM, a compact disc read only memory (CD-ROM), and a CD-recordable (R)/rewritable (RW).

The device connection interface 107 is a communication interface for connecting the peripheral devices to the server 100. For example, to the device connection interface 107, a memory device 25 and a memory reader/writer 26 may be connected. The memory device 25 is a recording medium having a communication function with the device connection interface 107. The memory reader/writer 26 is a device that writes data to a memory card 27 or reads data from the memory card 27. The memory card 27 is a card-type recording medium.

The network interface 108 is connected to the network 20. The network interface 108 exchanges data with another computer or communication device via the network 20. The network interface 108 is, for example, a wired communication interface connected to a wired communication device such as a switch or a router with a cable. Furthermore, the network interface 108 may be a wireless communication interface that is connected to and communicates with a wireless communication device such as a base station or an access point by radio waves.

The server 100 may implement a processing function of the second embodiment with hardware as described above. Note that the control device 200 may also be implemented by hardware similar to that of the server 100.

FIG. 5 is a diagram illustrating an example of the Ising machine. The Ising machine 300 includes neuron circuits 311, 312, ..., 31n, a control circuit 320, and a memory 330.

Each of the neuron circuits 311 to 31n calculates a first value based on the sum total of products of values of a plurality of weight coefficients indicating whether or not the neuron circuit is connected to a plurality of other neuron circuits than the neuron circuit and a plurality of output signals of the plurality of other neuron circuits. Then, each of the neuron circuits 311 to 31n outputs a bit value of 0 or 1 on the basis of a result of comparison between a threshold and a second value obtained by adding a noise value to the first value. In a case where solution search using a plurality of replicas is performed, solution search for one replica is performed by using a plurality of neuron circuits.

The control circuit 320 performs initial setting processing of the Ising machine 300, and the like on the basis of information supplied from the control device 200. Furthermore, in a case where replica exchange is performed, the control circuit 320 determines whether or not temperature parameter values are exchanged between two replicas, and in a case where the temperature parameter values are exchanged, the control circuit 320 updates the temperature parameter value input to a neuron circuit that performs solution search for each replica.

Moreover, after processing of determining neurons to be updated is repeated a predetermined number of times, the control circuit 320 acquires a bit value of each neuron corresponding to a state variable of one replica held in the memory 330, and transmits the bit value to the control device 200 as a solution to an optimization problem.

The control circuit 320 may be implemented by an electronic circuit for a specific application, such as an ASIC or a field programmable gate array (FPGA), for example. Note that the control circuit 320 may be a processor such as a CPU or a DSP. In that case, the processor performs the processing described above by executing a program stored in a memory (not illustrated).

The memory 330 holds, for example, a bit value of each neuron. The memory 330 may be implemented by, for example, a register or a RAM. The memory 330 may also hold a minimum value of energy and a bit value of each neuron when the minimum value is obtained. In this case, after processing of determining neurons to be updated is repeated a predetermined number of times, the control circuit 320 may acquire, from the memory 330, the minimum value of the energy and the bit value of each neuron when the minimum value is obtained, and transmit the values to the control device 200.

Note that the optimization device 10 indicated in the first embodiment may also be implemented by hardware similar to that of the Ising machine 300 illustrated in FIG. 4.

Next, an Ising-type minimum value solution problem (Ising-type problem) to be solved will be described. The Ising-type problem is represented by an Ising model.

FIG. 6 is a schematic diagram of the Ising model. In an Ising model 30, a plurality of bits 31 is arranged in a grid pattern. Each of the bits 31 imitates a magnet and is also referred to as a spin. Interaction works between adjacent bits. The magnitude of the interaction is represented by a weight coefficient. Energy of the Ising model 30 is represented by the following Equation (1).

$$E(x) = -\sum_{\langle i,j \rangle} W_{ij} x_i x_j - \sum_i b_i x_i \qquad (1)$$

A first term on the right side is to integrate products of values (0 or 1) of two state variables and a weight coefficient for all combinations of N state variables without omission and duplication. An i-th state variable is represented by $x_i$, a j-th state variable is represented by $x_j$, and a weight coefficient indicating strength of combination between $x_i$ and $x_j$ is represented by $W_{ij}$. A second term on the right side is to obtain the sum total of products of a bias coefficient ($b_i$) for each state variable and $x_i$. In a case where $W_{ij}$ is positive, interaction works so that $x_i$ and $x_j$ have the same value. Furthermore, in a case where $W_{ij}$ is negative, interaction works so that $x_i$ and $x_j$ have different values. Note that $W_{ij}$ = $W_{ji}$ and $W_{ii}$ = 0.

The minimum value solution problem is a problem that finds a minimum value of the energy given by Equation (1). The Ising machine 300 solves such a minimum value solution problem by using a Markov-Chain Monte Carlo (MCMC). For example, the Ising machine 300 calculates energy change in a case where one bit is inverted. In a case where an i-th bit is inverted, "$x_i \rightarrow x_i'$ ($\delta x_i = x_i' - x_i$)", and an energy change value is represented by Equation (2).

$$\Delta E_i = E(x)|_{x_i \to x_i'} E(x) = -\delta x_i \left( \sum_j W_{ij} x_j + b_i \right) \quad (2)$$

An expression in parentheses on the right side of Equation (2) represents a local field (total input) of the i-th bit. When an output change $\delta x_i$ and a sign of the local field match, the energy decreases. The Ising machine 300 determines whether or not to accept the inversion of the i-th bit according to increase or decrease of an energy change value $\Delta E_i$. Note that Equation (2) is correct only in a case where only one bit is inverted.

Equation (2) indicating an energy increment may be rewritten as follows.

$$\Delta E_i = \begin{cases} -h_i & for\ x_i = 0 \to 1 \\ +h_i & for\ x_i = 1 \to 0 \end{cases} \quad (3)$$

$$h_i = \sum_j W_{ij} x_j + b_j \quad (4)$$

The local field of the i-th bit is represented by $h_i$. A change $\delta h_i^{(j)}$ of the local field $h_i$ of the i-th bit when a j-th bit $x_j$ is inverted is represented by the following Equation (5).

$$\delta h_i^{(j)} = \begin{cases} +W_{ij} & for\ x_j = 0 \to 1 \\ -W_{ij} & for\ x_j = 1 \to 0 \end{cases} \quad (5)$$

By preparing a register that stores the local field $h_i$, and adding the value indicated in Equation (5) to the stored local field $h_i$ when the j-th bit is inverted, the correct $h_i$ is always obtained.

By the calculation as described above, an energy increment in a case where the i-th bit is inverted may be obtained. The Ising machine 300 determines whether or not to accept the inversion of the i-th bit on the basis of the obtained energy increment. For example, the Ising machine 300 determines whether or not to accept the inversion of the bit according to a Metropolis method. In a case where the Metropolis method is followed, the inversion of the bit is accepted when the energy increment is negative (energy decreases). When the energy increment is positive (energy increases), whether or not to accept the inversion of the bit is determined on the basis of a probability according to the energy increment.

The probability that the inversion of the bit is accepted in a case where the energy increment is positive may be adjusted by using a temperature parameter. For example, as the temperature parameter value increases, the Ising machine 300 increases a probability that the inversion of the bit is accepted in a case where the energy increment is positive. With this configuration, by increasing the temperature parameter value, it is possible to increase a possibility that a state of the energy of the Ising model escapes from a local solution.

When the temperature parameter is defined as T, an inverse temperature $\beta$ = 1/T. For example, the Ising machine 300 performs a probabilistic search by determining, by the following Equation (6), an acceptance probability of a state transition of the i-th state variable, by using the energy change value $\Delta E_{ij}$ and the inverse temperature $\beta$.

$$A(\Delta E_i, \beta) = f(-\beta \Delta E_i) \quad (6)$$

A function f(x) in Equation (6) is the following Equation (7) in the Metropolis method.

$$f(x) = min(1, e^x) \quad (7)$$

Note that, when the temperature parameter value is large, a local search becomes difficult. Thus, the Ising machine 300 performs solution search by using, for example, a plurality of replicas having different temperature parameter values. In this case, the Ising machine 300 may perform replica exchange.

FIG. 7 is a diagram illustrating an example of the replica exchange. In the replica exchange, a plurality of replicas is used. A replica is a copy of a set of state variables of a problem to be solved. The Ising machine 300 sets different values to temperature parameters of the replicas. In the example of FIG. 7, temperature parameters $T_1$, $T_2$, $T_3$, and $T_4$ are set to the four replicas ($T_1 < T_2 < T_3 < T_4$).

The Ising machine 300 changes a state of each of the plurality of replicas by the MCMC. Furthermore, the Ising machine 300 exchanges, according to a predetermined probability, temperature parameter values between replicas which are adjacent each other when being arranged in order of the temperature parameter values. Then, each replica randomly walks in a temperature axis direction. By the random walk of the replica, there is a possibility that even if the replica is stuck in a local solution, the replica may escape from the local solution when the replica moves to a high temperature side. Furthermore, when the replica moves to a low temperature side, a local search may be performed.

By performing group search by using a large number of replicas as in the replica exchange, solution search by the Monte Carlo method may be sped up. However, only by performing group search by using a plurality of replicas, the plurality of replicas stays in the same local solution, and it is difficult to solve a problem of not being able to search a state space sufficiently widely. For example, when the number of state variables (bits) of the Ising model is N, there are $2^N$ states in the state space. Thus, when the number of state variables increases, it is difficult to enjoy benefits of the group search even when the search is performed with the practically possible number of replicas.

Therefore, the Ising machine 300 performs an efficient search in the state space by performing state transitions of replicas by using interaction according to distances between a part of replicas. With this configuration, solution search performance by group search using a plurality of replicas is improved.

For example, the replica exchange allows a wide range of search in the state space. However, in a case where interaction between replicas is not taken into consideration, each replica only performs bit flipping (Markov chain) independently according to a temperature parameter value at that time. By using the interaction between replicas, it is possible to prevent a plurality of replicas from staying in the same local solution at the same time in the Markov chain of individual replicas.

Furthermore, in the case of 1-bit flip, when N bits are selected with an equal probability as a selection method of a transition destination candidate, a transition probability is determined only by the energy change value $\Delta E_i$. In this case, since every replica changes its state only according to an energy gradient, it is highly possible that the same path is followed and the state space may not be searched sufficiently widely. Moreover, when every replica is stuck in the same local solution ($\Delta E_i > 0$ for all bits i), escape from the local solution is also difficult.

The Ising machine 300 uses the Metropolis-Hastings method instead of the Metropolis method to calculate an acceptance probability of whether or not to accept a transition. This allows an influence of interaction between replicas to be incorporated into the calculation in an appropriate manner.

For example, a probability of proposing the next state X' from a current state x is defined as $g(X \to X')$, and a probability that this state transition is accepted is defined as $A(X \to X')$. A probability $W(X \to X')$ of the transition from the state X to the state X' is obtained by the following Equation (8).

$$W(X \to X') = g(X \to X')A(X \to X') \qquad (8)$$

When a function (objective function) representing a target probability distribution (for example, Gibbs distribution) is defined as n(X), detailed balance conditions are as follows.

$$\pi(X)W(X \to X') = \pi(X')W(X' \to X) \qquad (9)$$

$$\therefore \pi(X)g(X \to X')A(X \to X') = \pi(X')g(X' \to X)A(X' \to X) \qquad (10)$$

From Equation (10), the acceptance probability that satisfies a detailed balance is as indicated in Equation (11).

$$A(X \to X')/A(X' \to X) = [g(X' \to X)/g(X \to X')] \cdot [\pi(X')/\pi(X)] \qquad (11)$$

In a case where the Metropolis-Hastings method is applied, the acceptance probability is given by the following Equation (12).

$$A(X \to X') = min\left[1, \frac{g(X' \to X)\pi(X')}{g(X \to X')\pi(X)}\right] \qquad (12)$$

This acceptance probability satisfies the detailed balance conditions even in a case where the proposal probability is asymmetric and $g(X \to X') \neq g(X' \to X)$. Furthermore, in a case where the proposal probability is symmetric and $g(X \to X') = g(X' \to X)$, a Metropolis acceptance probability as indicated in Equation (13) is obtained.

$$A(X \to X') = min\left[1, \frac{\pi(X')}{\pi(X)}\right] \qquad (13)$$

When 1-bit flip is considered here, in a case where interaction between replicas is not taken into consideration, N bits are selected as candidates for inversion with an equal probability, and the proposal probability is as indicated in Equation (14).

$$g(X \to X') = \frac{1}{N} \qquad (14)$$

Note that the Metropolis-Hastings method corresponds to a case where a proposal distribution indicated by the proposal probability is asymmetric. Thus, there is a degree of freedom in how to determine the proposal distribution. Therefore, the Ising machine 300 introduces interaction between replicas into the proposal probability.

For example, the Ising machine 300 defines an appropriate distance for the state space, which is a discrete space, and determines a distance between replicas. The Ising machine 300 determines interaction between the replicas by using the distance between the replicas, defines a distribution of transition destination candidates (proposal distribution) in the Metropolis-Hastings method, and incorporates the distribution into calculation of the acceptance probability.

An example of the distance between the replicas is a Hamming distance (or its monotonically increasing function) of states of two replicas. The Ising machine 300 defines Hamming distances between all replicas, thereby introducing interaction between the replicas.

In the proposal distribution as indicated in Equation (14), since transition candidates are selected with an equal probability of 1/N, a normalization constant is N (a weight of each transition destination is 1 in common). In a case where interaction between replicas is introduced, weights of the transition candidates are different, and the normalization constant depends on a current state before transition. Although the Ising machine 300 also needs to calculate the normalization constant, in a case where the interaction is a linear expression of the Hamming distance, the normalization constant may be easily calculated by a difference calculation (accumulative calculation).

Hereinafter, a method of calculating a proposal probability in consideration of a distance between replicas will be specifically described. First, a general system of the proposal probability is defined as follows.

A system including M replicas (M is an integer greater than or equal to 1) will be considered. A state variable of a first replica is defined as $x^l = (x_1^l, x_2^l, ..., x_N^l)$, $x_j^l \in \{0, 1\}$. A distance (increasing function of the distance) between two replicas $x^l$ and $x^k$ is defined as $d(x^l, x^k)$, and energy of interaction is given as G(x). The energy of the interaction may be defined in several ways, for example, as indicated in Equation (15) or (16), in a case where the interaction between all replicas is taken into consideration.

$$G(X) := \gamma \sum_{k=1(\neq l)}^{M} d(x^l, x^k) \qquad (15)$$

$$G(X) := \gamma \sum_{k=1(\neq l)}^{M} \sqrt{d(x^l, x^k)} \quad (16)$$

Here, $\gamma$ is a constant of a real number. When $\gamma$ is a positive value, the interaction may be regarded as attractive interaction, and when $\gamma$ is a negative value, the interaction may be regarded as repulsive interaction.

The number of times of calculation of the distance between the replicas included in Equation (15) or (16) is M for each replica, and is $M^2$ for the entire Ising machine 300. As the number of replicas increases, an amount of calculation increases significantly. Thus, in the Ising machine 300, processing is performed by providing interaction between a part of the M replicas. For example, there are the following four selection methods of replicas that provide interaction to each replica, and G(x) defined in each of the four methods is different. G(x) used in each of the methods will be described later.

By using G(x), the proposal probability is given as $g(x^l \rightarrow x^l[j_0])$. A state where a $j_0$-th bit of $x^l$ is flipped is represented by $x^l[j_0]$. The proposal probability may be defined as indicated in Equation (17) or (18), for example.

$$g(x^l \rightarrow x^l[j_0]) := \frac{exp(-\beta \Delta G)}{Z(x^l)} \quad (17)$$

$$g(x^l \rightarrow x^l[j_0]) := \frac{min[1, exp(-\beta \Delta G)]}{Z(x^l)} \quad (18)$$

Here, $Z(x^l)$ is a normalization constant, and a calculation method will be described later.

In a case where a linear function of the Hamming distance is used as the distance between the replicas, the distance between the replicas may be defined by Equation (19).

$$d(x^l, x^k) := \sum_{j=1}^{N} \left(x_j^l - x_j^k\right)^2 = \sum_{j=1}^{N} \left(x_j^l + x_j^k - 2x_j^l x_j^k\right) \quad (19)$$

In this case, $\Delta G = G(x^l[j_0]) - G(x^l)$ and $g(x^l \rightarrow x^l[j_0])$ may be calculated as follows.

$$\Delta G = \gamma(1 - 2x_{j_0}^l) \sum_{k=1(k\neq l)}^{M} \left(1 - 2x_{j_0}^k\right) \quad (20)$$

$$g(x^l \rightarrow x^l[j_0]) = \frac{1}{Z(x^l)} exp\left(-\beta\gamma(1 - 2x_{j_0}^l) \sum_{k=1(k\neq l)}^{M} \left(1 - 2x_{j_0}^k\right)\right) \quad (21)$$

In this way, the proposal probability that reflects the interaction between the replicas may be calculated. Next, a definition of the acceptance probability will be described.

The acceptance probability $a(x^l \rightarrow x^l[j_0])$ of a general system may be defined as follows when a Metropolis standard is adopted.

$$a(x^l \to x^l[j_0]) = min\left[1, \frac{g(x^l[j_0] \to x^l)}{g(x^l \to x^l[j_0])}\frac{\pi(x^l[j_0])}{\pi(x^l)}\right]$$

$$= min\left[1, \frac{Z(x^l)}{Z(x^l[j_0])}exp\big(\beta(2\Delta G - \Delta E)\big)\right] \quad (22)$$

Then, a transition probability becomes $W(x^l \to x^l[j_0]) = g(x \to x^l[j_0]) \times a(x^i \to x^l[j_0])$. Thus, three amounts, $\Delta E$, $\Delta G$, and the normalization constant Z are used in these calculations.

Here, a method of calculating the normalization constant Z will be described by taking the case where the linear function of the Hamming distance is used as the distance between the replicas as an example. Since a normalization constant $Z(x^l)$ is in a state where a proposal candidate only flipped one bit in a replica l, the normalization constant $Z(x^l)$ is calculated by the following Equation (23) as the sum total.

$$Z(x^l) = \sum_{j=1}^{N} exp(-\beta\Delta G) = \sum_{j=1}^{N} exp(-\beta(G(x^l[j]) - G(x^l))) \quad (23)$$

When the normalization constant is to be calculated with Equation (23), the sum of exponential functions will be calculated for the number of all spins, and an amount of calculation will be enormous. Therefore, the Ising machine 300 suppresses the amount of calculation by performing a difference calculation (accumulative calculation) on the basis of the fact that 1-bit flip is performed. A difference between normalization constants in a case where only a j-th bit of the replica l is flipped is as indicated in the following Equation (24).

$$Z(x^l[j_0]) - Z(x^l) = exp(+\beta\Delta G) - exp(-\beta\Delta G) \quad (24)$$

The Ising machine 300 may obtain a normalization constant after bit flipping by adding the difference between the normalization constants, which is obtained by calculating the right side of Equation (24), to a normalization constant before bit flipping. Note that, in a case where bit flipping is accepted, the Ising machine 300 stores the normalization constant at that time in the register or the memory, and uses the normalization constant to calculate a normalization constant in the next bit flipping.

Next, a method of calculating $\Delta G$ will be described by taking the case where the linear function of the Hamming distance is used as the distance between the replicas as an example. The calculation of $\Delta G$ is generally a difference calculation between distances between replicas (or increasing functions of the distances). In a simple difference calculation, the Hamming distance between the replicas before and after a transition needs to be stored. However, when a specific shape of the distance (or increasing function of the distance) is known, by performing a difference calculation, it is possible to perform rewriting to an amount depending only on a current state as indicated in Equations (25) and (26).

$$\Delta G = \gamma \sum_{k=1(\neq l)}^{M} d(x^l[j_0], x^k) - \gamma \sum_{k=1(\neq l)}^{M} d(x^l, x^k) \quad (25)$$

$$\frac{\Delta G}{\gamma} = M - 2d\big(\widetilde{x_{j_0}}(l), \widetilde{x_{j_0}}\big) - 1 \quad (26)$$

In Equation (26), $x_{j0}(l)$ (with a tilde on top of x) is a bit string $x_{j0}(l)$ (with a tilde on top of x) = $(x_j^l, x_j^l, ..., x_j^l)$. Furthermore, $x_{j0}$ (with a tilde on top of x) is a vector of a bit string $x_{j0}$ (with a tilde on top of x) = $(x_j^1, x_j^2, ..., x_j^M)$.

By using Equation (26), in the case where the linear function of the Hamming distance is used as the distance

between the replicas, $\Delta G$ may be described only by the Hamming distance between vectors of the newly introduced bit strings. Thus, only the Hamming distance needs to be updated.

Note that the case of 1-bit flip is assumed in the above description, but there is a case where a plurality of bits is flipped in one state transition. An example of such a case is a case of solving a problem with a one-hot constraint.

The one-hot constraint is a constraint that "only one variable has a value of 1 in a certain set of variables". This constraint is applied to various problems such as a quadratic assignment problem (QAP) and a vehicle routing problem (VRP).

FIG. 8 is a diagram illustrating an example of 1-bit flip under the one-hot constraint. In the example of FIG. 8, bits indicating state variables of an Ising model are divided into groups each including four bits. The one-hot constraint allows only one of bits belonging to the same group to be "1". When 1-bit flip is performed under such a one-hot constraint, only one bit is inverted in one state transition, resulting in a constraint violation state. When 1-bit flip is performed once more, a condition of the constraint may be satisfied.

In this way, in a case of solving a problem with the one-hot constraint, 1-bit flip is inefficient. Thus, the Ising machine 300 may flip a plurality of bits in one state transition.

The one-hot constraint includes 1-Way 1-Hot (1W1H) and 2-Way 1-Hot (2W1H). The 1W1H is a constraint that only one bit has a value of "1" in each group when bits are grouped by one way. The example illustrated in FIG. 8 is the 1W1H, and by flipping two bits in one state transition, it is possible to perform a state transition while satisfying the constraint.

In the 2W1H, bits are grouped by two ways. In this case, the bits belong to two groups generated by different ways. Furthermore, also in the 2W1H, there is a constraint that only one bit has a value of "1" in each group.

FIG. 9 is a diagram for describing the 2W1H constraint. In FIG. 9, N bits are elements of an $n \times n$ (n is an integer of greater than or equal to 1) square matrix. $N = n^2$ holds. In the 2W1H, there is a constraint that each of the sum of bit values in one row and the sum of bit values in one column is "1". For example, the constraint is satisfied in a case where only one of the bits in the same row has a value of "1" and only one of the bits in the same column has a value of "1". In a case where there is the 2W1H constraint, by flipping four bits in one state transition, it is possible to perform a state transition while satisfying the constraint.

Here, when m = 1, 2, ..., N, a state transition, an energy change value $\Delta E$, and a local field update amount $\Delta h$ for each of 1-bit flip, 2-bit flip in the 1W1H, and 4-bit flip in the 2W1H are represented as follows.

< 1-bit flip> · State transition: $x_i \rightarrow x_i + \Delta x_i$ · Energy change value: $\Delta E_i = -h_i \cdot \Delta x_i$ · Local field update amount: $\Delta h_m = W_{mi} \cdot \Delta x_i$

<1W1H (2-bit flip)> · State transition: $x_i$: $1 \rightarrow 0$, $x_j$: $0 \rightarrow 1$ · Energy change value: $\Delta E_j = h_i - h_j$ · Local field update amount: $\Delta h_m = -W_{mi} + Wmj$

<2W1H (4-bit flip)> · State transition: $x_i$: $1 \rightarrow 0$, $x_j$: $0 \rightarrow 1$, $x_k$: $0 \rightarrow 1$, $x_l$: $1 \rightarrow 0$ · Energy change value: $\Delta E_j = (h_i + h_l) - (h_j + h_k) - (W_{il} + W_{jk})$ ·Local field update amount: $\Delta h_m = W_{mj} + W_{mk} - (W_{mi} + W_{ml})$

The constraint to be applied is specified by a user, for example, when the user gives an instruction to solve of a problem. The Ising machine 300 calculates $\Delta E$ according to the specified constraint and inverts one or a plurality of bits with a transition probability according to a distance between replicas.

Next, a solution search function by the Ising machine 300 in consideration of a distance between replicas will be described.

FIG. 10 is a diagram illustrating an example of the solution search function of the Ising machine. The Ising machine 300 includes a data reception unit 340, a solution search engine 350, and a solution output unit 360. The data reception unit 340 and the solution output unit 360 are functions implemented by the control circuit 320 illustrated in FIG. 5. The solution search engine 350 is a function implemented by the control circuit 320 illustrated in FIG. 5 controlling the neuron circuits 311, 312, ..., 31n and the memory 330.

The data reception unit 340 receives, from the control device 200, information used for solving a problem to be solved. For example, the data reception unit 340 acquires parameters such as the temperature, the number of replicas, the magnitude of interaction between replicas, the number of iterations (the number of iterations of a state transition), and an initial state. In addition, the data reception unit 340 acquires data such as a weight matrix (coefficient of a quadratic expression) that includes, as an element, a weight coefficient of an Ising model representing the problem to be solved, a bias matrix (coefficient of a linear expression), a constant term, and group information of the one-hot constraint. Moreover, the data reception unit 340 acquires parameters described later for determining a range to which interaction between replicas is applied. The data reception unit 340 transmits the received information to the solution search engine 350.

The solution search engine 350 uses a plurality of replicas to search for a solution that minimizes energy. For that purpose, the solution search engine 350 includes a replica storage unit 351 and a plurality of replica solution search units 352a, 352b, ..., 352n. The replica storage unit 351 is implemented by using, for example, the memory 330 illustrated in FIG. 5. Each of the plurality of replica solution search units 352a, 352b, ..., 352n is implemented by using a neuron circuit for each bit included in the Ising model.

The replica storage unit 351 stores a state of a replica. For example, replicas are updated in order, but states of the replicas before the update are used to calculate interaction between the replicas. Thus, the replica storage unit 351 stores the states of the replicas before the update. The state of the replica is represented by a value of a bit corresponding to a state variable, and a value of a parameter such as a temperature parameter.

Each of the replica solution search units 352a, 352b, ..., 352n respectively performs solution search by a replica. For example, each of the replica solution search units 352a, 352b, ..., 352n calculates interaction between replicas while exchanging information indicating a state of each replica with other replica solution search units via the replica storage unit 351 and performs solution search.

FIG. 11 is a diagram illustrating an example of processing in the solution search engine. For example, the replica solution search unit 352a stores a weight coefficient ($W_{ij}$). The replica solution search unit 352a uses the weight coefficient ($W_{ij}$) and a current value of each bit ($x_1^1, x_2^1, ..., x_N^1$) to calculate a local field ($h_1, h_2, ..., h_N$) on the basis of Equation (4). Next, the replica solution search unit 352a calculates, on the basis of Equation (26), a difference in energy ($\Delta G_1, \Delta G_2, ..., \Delta G_N$) of interaction between replicas in a case where each bit flips. At this time, the replica solution search unit 352a acquires information (each bit value) indicating a state of another replica (a part of a replica group excluding a replica for which the replica solution search unit 352a is in charge of solution search from M replicas) from the replica storage unit 351, calculates a distance to the another replica, and by using a result of the calculation, calculates the difference in energy of interaction between replicas.

Furthermore, the replica solution search unit 352a uses a value of a local field ($h_1, h_2, ..., h_N$) to calculate an energy change value ($E_1, E_2, ..., E_N$). Note that a calculation expression of the energy change value differs depending on whether 1-bit flip, 1W1H, or 2W1H is applied. For example, in the case of 1-bit flip, the energy change value is "$\Delta E_i = -h_i \cdot \Delta x_i$". In the case of 1W1H (2-bit flip), the energy change value is "$\Delta E_j = h_i - h_j$". In the case of 2W1H (4-bit flip), the energy change value is $\Delta E_j = (h_i + h_l) - (h_j + h_k) - (W_{il} + W_{jk})$.

The replica solution search unit 352a subtracts a positive offset value $E_{off}$ from the energy change value $\Delta E$. A predetermined value is added to the offset value $E_{off}$ in a case where a bit to be flipped may not be selected. The increase in the offset value $E_{off}$ is repeated until a bit to be flipped is selected. By the increase in the offset value $E_{off}$ in this way, a time during which energy of a replica stays at a local minimum value is shortened. Note that an initial value of the offset value $E_{off}$ is, for example, "0".

The replica solution search unit 352a selects a bit to be flipped (update bit) on the basis of the energy change value $\Delta E$ in a case where each bit is flipped (value obtained by subtraction of the offset value $E_{off}$ in a case where the offset value $E_{off}$ is other than "0"). There are various update bit selection methods (see FIGs. 25 to 28). Depending on the update bit selection method, acceptance of update of any bit may be rejected in selection of an update bit, and an update bit may not be selected. For example, in a case where an update bit may not be selected, the replica solution search unit 352a increases the offset value $E_{off}$ and selects an update bit again.

In a case where an update bit may be selected, the replica solution search unit 352a flips a value of the update bit and generates a state of a replica after update "$x_1^1, x_2^1, ..., x_N^1$".

The replica solution search units 352b, ..., 352n other than the replica solution search unit 352a also generates states of replicas after update in a similar manner to the replica solution search unit 352a.

The states of the replicas "$x_1^1, x_2^1, ..., x_N^1$", "$x_1^2, x_2^2, ..., x_N^2$", ..., "$x_1^N, x_2^N, ..., x_N^N$" generated by the replica solution search units 352a, 352b, ..., 352n are held by the replica storage unit 351. Each of the replica solution search units 352a, 352b, ..., 352n may calculate a difference in energy of interaction between replicas at the next state update by referring to the replica storage unit 351.

Hereinafter, a procedure of solution search by the solution search engine 350 will be described in detail.

The procedure of solution search differs depending on the selection methods of replicas that provide interaction to each replica.

(First Selection Method of Replicas That Provide Interaction)

The first selection method is to periodically provide interaction to M replicas on the basis of a label (replica number) given to each replica, and replicas that provide interaction to a replica with a replica number = l is limited to replicas with replica numbers in a range of l ± s.

In the first selection method, strength of the interaction provided to the replica with the replica number = l may be defined by, for example, the following Equation (27) instead of Equation (15) or (16).

$$G(x^l) := \gamma \sum_{k=l-s}^{l+s} d(x^l, x^k) \quad (27)$$

For example, the strength of the interaction is defined on the basis of a distance between the replica with the replica number = l and the replicas with the replica numbers in the range of l ± s.

FIG. 12 is a diagram illustrating an example of the first selection method of replicas that provide interaction.

FIG. 12 illustrates an example in which 12 replicas are given replica numbers from 1 to 12, and for these replicas, s = 2 holds in which s determines a range of replicas that provide interaction to each replica (range of application of interaction). As illustrated in FIG. 12, replicas that provide interaction to a replica with a replica number = 1 are replicas with the replica numbers in a range of 1 ± 2. In this case, 1 - 2 will be a negative replica number. To avoid generation of a negative replica number, it is assumed that the replica numbers circulate such that a previous number of l = 1 is l = 12 (l = 12 is followed by l = 1), as in the example of FIG. 12. For example, it is assumed that k = l ± s mod M is the range of replicas that provide interaction to the replica with the replica number = l. For example, replicas given replica numbers included in a range between the remainder obtained by dividing l - s by M and the remainder obtained by dividing l + s by M are in the range of replicas that provide interaction to the replica with the replica number = l. As a result, in Equation (27), in the case of k = M + 1, k = 1 holds, and in the case of k = -2, k = M - 1 holds.

FIG. 13 is a flowchart illustrating an example of a procedure of solution search processing in a case where the first selection method of replicas that provide interaction is used. Hereinafter, the processing illustrated in FIG. 13 will be described along step numbers.

[Step S100] The solution search engine 350 sets, in the replica solution search units 352a, 352b, ..., 352n, a range to which interaction between replicas is applied. The range of application of the interaction is applied is determined by the parameter (s) described above. For example, s is supplied from the control device 200 to the solution search engine 350 via the data reception unit 340.

[Step S101] The solution search engine 350 sets initial states (each bit value, temperature parameter values, and the like) of a plurality of replicas in the replica solution search units 352a, 352b, ..., 352n to which the replicas are to be assigned. Each of the replica solution search units 352a, 352b, ..., 352n calculates initial energy, an initial distance between replicas, initial normalization constants, and the like on the basis of the initial states of the assigned replicas.

[Step S102] The solution search engine 350 causes the replica solution search units 352a, 352b, ..., 352n to execute solution search for each replica. The details of the solution search processing for each replica will be described later (see FIG. 14).

[Step S103] The solution search engine 350 determines whether or not an end condition of solution search is satisfied. For example, the solution search engine 350 determines that the end condition is satisfied in a case where the number of times the processing of Step S102 is repeated reaches a predetermined number of times. In a case where the end condition is satisfied, the solution search engine 350 advances the processing to Step S108. Furthermore, in a case where the end condition is not satisfied, the solution search engine 350 advances the processing to Step S104.

[Step S104] The solution search engine 350 selects a pair of replicas that are adjacent when the plurality of replicas is arranged in order of temperature parameter values.

[Step S105] The solution search engine 350 determines whether or not to perform temperature exchange between the selected pair of replicas. For example, the solution search engine 350 obtains an exchange probability according to a Metropolis-Hastings standard on the basis of a difference in energy between replicas and a temperature parameter value of each replica. Then, when the exchange probability is 1, the solution search engine 350 determines that the temperature exchange is performed. Furthermore, when the exchange probability is less than 1, the solution search engine 350 generates a random number between 0 and 1, for example, and when a value of the random number is equal to or less than the exchange probability, the solution search engine 350 determines that the temperature exchange is performed.

[Step S106] When it is determined that the temperature exchange is performed, the solution search engine 350 exchanges the temperature parameter values of the selected pair of replicas.

[Step S107] The solution search engine 350 determines whether or not all pairs of adjacent replicas have been selected. In a case where there is a pair that has not been selected, the solution search engine 350 advances the processing to step S104. Furthermore, in a case where all the pairs have been selected, the solution search engine 350 advances the processing to step S102.

[Step S108] The solution search engine 350 outputs, as a solution, a state of a replica that minimizes the energy.

In this way, efficient solution search is performed by using a plurality of replicas while performing replica exchange.

Next, the solution search processing for each replica will be described in detail.

FIG. 14 is a flowchart illustrating an example of the procedure of the solution search processing for each replica. Hereinafter, the processing illustrated in FIG. 14 will be described along step numbers.

[Step S110] Each of the replica solution search units 352a, 352b, ..., 352n in the solution search engine 350 calculates, for the assigned replicas, a difference in energy ($\Delta G_1$, $\Delta G_2$, ..., $\Delta G_N$) of interaction between the replicas. The details of the calculation processing of the difference in energy of the interaction between the replicas will be described later (see FIG. 15).

[Step S111] Each of the replica solution search units 352a, 352b, ..., 352n calculates, for the assigned replicas, energy change values ($\Delta E_1$, $\Delta E_2$, ..., $\Delta E_N$).

[Step S112] Each of the replica solution search units 352a, 352b, ..., 352n increments the number of iterations.

[Step S113] Each of the replica solution search units 352a, 352b, ..., 352n determines whether or not iterations have been performed a predetermined number of times. In a case where the iterations have been performed the predetermined number of times, each of the replica solution search units 352a, 352b, ..., 352n ends the solution search processing for each replica. In a case where the number of iterations has not reached the predetermined number of times, each of the replica solution search units 352a, 352b, ..., 352n advances the processing to Step S114.

[Step S114] Each of the replica solution search units 352a, 352b, ..., 352n performs update bit selection processing. The details of the update bit selection processing will be described later (see FIGs. 25 to 28).

[Step S115] Each of the replica solution search units 352a, 352b, ..., 352n determines whether or not an update bit has been selected. In a case where the update bit has not been selected, each of the replica solution search units 352a, 352b, ..., 352n advances the processing to Step S114. Furthermore, in a case where the update bit has been selected, each of the replica solution search units 352a, 352b, ..., 352n advances the processing to Step S116.

[Step S116] Each of the replica solution search units 352a, 352b, ..., 352n updates information regarding the replica. For example, each of the replica solution search units 352a, 352b, ..., 352n flips a state of a selected bit, and updates a local field h of each bit, energy E of the replica, a distance d between the replica and another replica, and a normalization constant Z. Thereafter, each of the replica solution search units 352a, 352b, ..., 352n advances the processing to Step S110.

Next, the calculation processing of the difference in energy ($\Delta G_1$, $\Delta G_2$, ..., $\Delta G_N$) of the interaction between the replicas will be described in detail.

FIG. 15 is a flowchart illustrating an example of a procedure for calculating the difference in energy of the interaction between the replicas. Hereinafter, the processing illustrated in FIG. 15 will be described along step numbers.

[Step S120] Each of the replica solution search units 352a, 352b, ..., 352n calculates a Hamming distance between a replica for which the replica solution search unit is in charge of solution search and any other replica. In the first selection method of replicas that provide interaction, each of the replica solution search units 352a, 352b, ..., 352n calculates a Hamming distance between the replica for which the replica solution search unit is in charge of solution search and a replica with a replica number in a range of $\pm$ s with respect to a replica number of the replica for which the replica solution search unit is in charge of solution search.

[Step S121] Each of the replica solution search units 352a, 352b, ..., 352n calculates, for each bit of the assigned replica, the difference in energy ($\Delta G_1$, $\Delta G_2$, ..., $\Delta G_N$) of the interaction between the replicas before and after a transition in a case where the corresponding bit is flipped. For example, the difference in energy of the interaction between the replicas in a case where a first bit is flipped is $\Delta G_1$. In the first selection method of replicas that provide interaction, the difference in energy of the interaction is calculated by using strength of the interaction obtained by substituting the Hamming distance calculated in the processing of Step S120 into Equation (27).

[Step S122] Each of the replica solution search units 352a, 352b, ..., 352n calculates normalization constants Z of the assigned replicas. For example, in a case where the distance between the replicas is a linear expression of the Hamming distance, each of the replica solution search units 352a, 352b, ..., 352n may calculate a difference between normalization constants before and after a state transition. In a case where the difference is calculated, each of the replica solution search units 352a, 352b, ..., 352n may obtain the latest normalization constant by integrating differences between normalization constants for each state transition.

In the first selection method of replicas that provide interaction, the number of times of calculation of the distance between the replicas, which is calculated each time the processing of repeating a state transition is performed, is 2sM times. Thus, when s is small, the number of times of calculation may be significantly reduced compared to the number of times of calculation ($M^2$ times) in a case where interaction between all the replicas is taken into consideration.

Note that, although it is not possible to directly observe states of all the replicas, by setting a range providing interaction to each replica to a range of $\pm$ s in replica numbers, it may be expected that an influence of each interaction between replicas will spread to the entire replica group.

(Second Selection Method of Replicas That Provide Interaction)

The second selection method is to group M replicas into a plurality of groups on the basis of a label given to each replica and to provide interaction only between replicas belonging to different groups. In this method, replicas that provide interaction to the replica with the replica number = l are limited to representative replicas of groups different from a group to which the replica with the replica number = l belongs.

In the second selection method, strength of the interaction provided to the replica with the replica number = l may be defined by, for example, the following Equation (28) instead of Equation (15) or (16).

$$G(x^l) := \gamma \sum_{k=1(\neq r)}^{R} d\left(x^l, x_{rep}^{(k)}\right) \quad (28)$$

In Equation (28), r represents a group number of a group to which the replica with the replica number = l belongs, and R represents the total number of groups. Furthermore, $x^{(k)}_{rep}$ represents a representative replica in a group with a group number k. As in Equation (28), the strength of the interaction is defined on the basis of a distance between the replica with the replica number = l and a representative replica in a group with a group number other than a group number = r.

FIG. 16 is a diagram illustrating an example of the second selection method of replicas that provide interaction.

FIG. 16 illustrates an example in which nine replicas are grouped into three groups. Replicas with replica numbers = 1, 2, and 3 belong to a group with a group number = 1, replicas with replica numbers = 4, 5, and 6 belong to a group with a group number = 2, and replicas with replica numbers = 7, 8, and 9 belong to a group with a group number = 3.

Furthermore, in the example of FIG. 16, in each group, a replica with an intermediate replica number is set as a representative replica. For example, a representative replica of the group with the group number = 1 is the replica with the replica number = 2, a representative replica of the group with the group number = 2 is the replica with the replica number = 5, and a representative replica of the group with the group number = 3 is the replica with the replica number = 8.

In the example of FIG. 16, replicas that provide interaction to the replica with the replica number = 1 are the replica with the replica number = 5 belonging to the group with the group number = 2 and the replica with the replica number = 8 belonging to the group with the group number = 3.

FIG. 17 is a flowchart illustrating an example of a procedure of the solution search processing in a case where the second selection method of replicas that provide interaction is used. Hereinafter, the processing illustrated in FIG. 17 will be described along step numbers.

[Step S130] The solution search engine 350 sets, in the replica solution search units 352a, 352b, ..., 352n, grouping information indicating which group each replica belongs to. The grouping of replicas is performed in advance by, for example, the control device 200 given the total number of groups R from the server 100, and a group number is associated with each replica number. The grouping information obtained as a result of the grouping is supplied to the solution search engine 350 via the data reception unit 340.

[Step S131] The solution search engine 350 sets, in the replica solution search units 352a, 352b, ..., 352n, information indicating a representative replica of each group. The representative replica of each group is determined, for example, by the control device 200. For example, as in FIG. 16, in each group, a replica with an intermediate replica number is determined as a representative replica. The information indicating the determined representative replica of each group is supplied to the solution search engine 350 via the data reception unit 340.

The subsequent processing (Steps S132 to S139) is the same as the processing of FIG. 13 (Steps S101 to S108) except for the processing of Step S133.

The solution search processing for each replica in Step S133 is performed in the same processing procedure as that illustrated in FIG. 14. However, among the processing contents of Step S110, the processing of Steps S120 and S121 illustrated in FIG. 15 is different from that of the case where the first selection method of replicas that provide interaction is applied. For example, each of the replica solution search units 352a, 352b, ..., 352n performs the following processing in the processing of Steps S120 and S121.

In the processing of Step S120, each of the replica solution search units 352a, 352b, ..., 352n recognizes, on the basis of the grouping information, a group which a replica for which the replica solution search unit is in charge of solution search belongs to. Then, each of the replica solution search units 352a, 352b, ..., 352n calculates, on the basis of the information indicating the representative replica, a Hamming distance between the replica for which the replica solution search unit is in charge of solution search and a representative replica of each of other groups.

In the processing of Step S121, in the second selection method of replicas that provide interaction, the difference in energy of the interaction is calculated by using strength of the interaction obtained by substituting the Hamming distance calculated as described above into Equation (28).

In the second selection method of replicas that provide interaction, the number of times of calculation of the distance between the replicas, which is calculated each time the processing of repeating a state transition is performed, is M(R - 1) times. Thus, when R is small, the number of times of calculation may be significantly reduced compared to the number of times of calculation ($M^2$ times) in a case where interaction between all the replicas is taken into consideration.

In such a method, states of replicas belonging to the same group transition in the same way, and a state space is searched for each group.

(Third Selection Method of Replicas That Provide Interaction)

The third selection method is to dynamically determine a range of replicas to which interaction is applied. In this method, as in the first method, replicas that provide interaction to the replica with the replica number = l will be limited to the replicas with the replica numbers in the range of $l \pm s_t$, but $s_t$ changes dynamically. Every time processing of repeating a state transition is performed, an average value of distances between the replica with the replica number = l and the replicas with the replica numbers in the range of $l \pm s_t$ is calculated, and on the basis of a result of comparison between the average value and two thresholds ($D_1$ and $D_2$ ($D_1 < D_2$)), $s_t$ decreases or increases. For example, in a case where repulsive interaction is generated, $s_t$ is incremented by one when the average value of the distances described above is smaller than $D_1$, and $s_t$ is decremented by one when the average value of the distances described above is greater than $D_2$. The reverse is true in a case where attractive interaction is generated. Note that a change width of $s_t$ is not limited to $\pm$ 1, but may be $\pm$2 or may be a larger change width.

In the third selection method, strength of the interaction provided to the replica with the replica number = l may be defined by, for example, the following Equation (29) instead of Equation (15) or (16).

$$G(x^l) := \gamma \sum_{k=l-s_t}^{l+s_t} d(x^l, x^k) \tag{29}$$

As in Equation (29), the strength of the interaction is defined on the basis of distances between the replica with the replica number = l and the replicas with the replica numbers in the range of $l \pm s_t$.

Note that an average value $d_t$ of the distances between the replica with the replica number = l and the replicas with the replica numbers in the range of $l \pm s_t$ is represented by the following Equation (30).

$$d_t := \frac{1}{2s_t} \sum_{k=l-s_t}^{l+s_t} d(x^l, x^k) \tag{30}$$

FIG. 18 is a diagram illustrating an example of the third selection method of replicas that provide interaction.

FIG. 18 illustrates an example in which 12 replicas are given replica numbers from 1 to 12, and for these replicas, $s_t$ = 2 holds when $s_t$ that determines a range of replicas that provide interaction to each replica (range of application of interaction) is a certain number of iterations t.

At this time, in a case where repulsive interaction is too strong (in the case of the above-described average value $d_t > D_2$), $s_t$ is decremented by one, and $s_{t+1}$ at the next number of iterations t + 1 is 1.

Note that, similarly to the first selection method, to avoid generation of a negative replica number, it is assumed that the replica numbers circulate such that a previous number of l = 1 is l = 12 (l = 12 is followed by l = 1), as in the example of FIG. 18. For example, it is assumed that $k = l \pm s_t \bmod M$ is the range of replicas that provide interaction to the replica with the replica number = l.

FIG. 19 is a flowchart illustrating an example of a procedure of the solution search processing in a case where the third selection method of replicas that provide interaction is used. Hereinafter, the processing illustrated in FIG. 19 will be described along step numbers.

[Step S140] The solution search engine 350 sets, in the replica solution search units 352a, 352b, ..., 352n, the above-described two thresholds ($D_1$ and $D_2$ ($D_1 < D_2$)). For example, $D_1$ and $D_2$ are determined by the server 100, input to the control device 200, and supplied to the solution search engine 350 via the data reception unit 340.

[Step S141] In processing of Step S141, processing similar to the processing of Step S101 of FIG. 13 is performed. Note that, the solution search engine 350 further performs initialization to t = 0, and sets, in the replica solution search units 352a, 352b, ..., 352n, an initial value $s_0$ of the above-described $s_t$. For the initial value $s_0$, $s_0$ = 0 holds in a case where repulsive interaction is generated, and $s_0$ = 1 holds in a case where attractive interaction is generated. Furthermore, the solution search engine 350 initializes the above-described average value dt of the distances to $d_0$ = 0.

The subsequent processing (Steps S142 to S148) is the same as the processing of FIG. 13 (Steps S103 to S108) except for the processing of Step S142.

In the third selection method of replicas that provide interaction, the solution search processing for each replica in Step S142 is performed, for example, as follows.

FIG. 20 is a flowchart illustrating an example of the procedure of the solution search processing for each replica in the case where the third selection method of replicas that provide interaction is used. Hereinafter, the processing illustrated in FIG. 20 will be described along step numbers.

[Step S150] Each of the replica solution search units 352a, 352b, ..., 352n in the solution search engine 350 determines whether or not $d_t < D_1$ holds. In a case where it is determined that $d_t < D_1$ holds, each of the replica solution search units 352a, 352b, ..., 352n advances the processing to Step S151. Furthermore, in a case where it is determined that $d_t < D_1$ does not hold, each of the replica solution search units 352a, 352b, ..., 352n advances the processing to Step S152.

[Step S151] Each of the replica solution search units 352a, 352b, ..., 352n updates $s_t$. In a case where a repulsive force is generated as interaction, $s_t$ is updated so that $s_t = s_t + 1$ holds, and in a case where an attractive force is generated as interaction, $s_t$ is updated so that $s_t = s_t - 1$ holds.

[Step S152] Each of the replica solution search units 352a, 352b, ..., 352n determines whether or not $d_t > D_2$ holds. In a case where it is determined that $d_t > D_2$ holds, each of the replica solution search units 352a, 352b, ..., 352n advances the processing to Step S153. Furthermore, in a case where it is determined that $d_t > D_2$ does not hold, each of the replica solution search units 352a, 352b, ..., 352n advances the processing to Step S154.

[Step S153] Each of the replica solution search units 352a, 352b, ..., 352n updates $s_t$. In a case where a repulsive force is generated as interaction, $s_t$ is updated so that $s_t = s_t - 1$ holds, and in a case where an attractive force is generated as interaction, $s_t$ is updated so that $s_t = s_t + 1$ holds.

The subsequent processing (Steps S154 to S160) is the same as the processing of FIG. 14 (Steps S111 to S116) except for the processing of Step S154. When the processing of Step S160 is completed, the processing from Step S150 is repeated by using the number of iterations t incremented in the processing of Step S156.

Next, the calculation processing of the difference in energy ($\Delta G_1$, $\Delta G_2$, ..., $\Delta G_N$) of the interaction between the replicas, which is the processing of Step S154, will be described in detail.

FIG. 21 is a flowchart illustrating an example of a procedure for calculating the difference in energy of the interaction between the replicas. Hereinafter, the processing illustrated in FIG. 21 will be described along step numbers.

[Step S170] Each of the replica solution search units 352a, 352b, ..., 352n calculates a Hamming distance between a replica for which the replica solution search unit is in charge of solution search and any other replica. In the third selection method of replicas that provide interaction, each of the replica solution search units 352a, 352b, ..., 352n calculates a Hamming distance between the replica for which the replica solution search unit is in charge of solution search and a replica with a replica number in a range of $\pm s_t$ with respect to a replica number of the replica for which the replica solution search unit is in charge of solution search.

[Step S171] Each of the replica solution search units 352a, 352b, ..., 352n calculates, for each bit of the assigned replicas, the difference in energy ($\Delta G_1$, $\Delta G_2$, ..., $\Delta G_N$) of the interaction between the replicas before and after a transition in a case where the corresponding bit is flipped. In the third selection method of replicas that provide interaction, the difference in energy of the interaction is calculated by using strength of the interaction obtained by substituting the Hamming distance calculated in the processing of Step S170 into Equation (29).

[Step S172] Each of the replica solution search units 352a, 352b, ..., 352n calculates normalization constants Z of the assigned replicas.

[Step S173] Each of the replica solution search units 352a, 352b, ..., 352n calculates dt represented by Equation (30) by using the Hamming distance calculated in the processing of Step S170.

In the third selection method of replicas that provide interaction, the number of times of calculation of the distance between the replicas, which is calculated each time the processing of repeating a state transition is performed, is $2s_tM$ times. Thus, when $s_t$ is small, the number of times of calculation may be significantly reduced compared to the number of times of calculation ($M^2$ times) in a case where interaction between all the replicas is taken into consideration.

In a case where repulsive interaction is generated, the fact that an average of distances between replicas is too small ($d_t < D_1$) is indication that the replicas are in a similar state and do not reflect an intended effect of interaction. Thus, $s_t$ increases in the next number of iterations. Furthermore, the fact that an average of distances between replicas is too large ($_dt > D_2$) is indication that the replicas are in significantly different states and also do not reflect an intended effect of interaction. Thus, $s_t$ decreases in the next number of iterations. The reverse is true in a case where attractive interaction is generated. In this way, generation of unnecessary interaction may be suppressed.

(Fourth Selection Method of Replicas That Provide Interaction)

The fourth method is to randomly determine a range of replicas to which interaction is applied. In this method, every time processing of repeating a state transition is performed, other replicas are adopted with a predetermined probability p as replicas that provide interaction to the replica with the replica number = I. When the range of replicas (a set of replicas) that provide interaction to the replica with the replica number = I at a certain number of iterations t is defined as $C_I(t)$, strength of the interaction may be defined by, for example, the following Equation (31) instead of Equation (15) or (16).

$$G(x^l) := \gamma \sum_{k \in C_l(t)} d(x^l, x^k) \quad (31)$$

FIG. 22 is a diagram illustrating an example of the fourth selection method of replicas that provide interaction.

FIG. 22 illustrates presence or absence of interaction between four replicas. In the example of FIG. 22, $C_1(t)$, which is a range of replicas that provide interaction to a replica with a replica number = 1, is {3, 4}. For example, two replicas with replica numbers = 3 and 4 provide interaction to the replica with the replica number = 1. Furthermore, $C_2(t)$, which is a range of replicas that provide interaction to a replica with a replica number = 2, is $\varphi$ (representing an empty set). For example, no replica provides interaction to the replica with the replica number = 2. Furthermore, $C_3(t)$, which is a range of replicas that provide interaction to the replica with the replica number = 3, is {1, 4}. For example, two replicas with the replica numbers = 1 and 4 provide interaction to the replica with the replica number = 3. $C_4(t)$, which is a range of replicas that provide interaction to the replica with the replica number = 4, is {1, 3}. For example, two replicas with the replica numbers = 1 and 3 provide interaction to the replica with the replica number = 4.

FIG. 23 is a flowchart illustrating an example of a procedure of the solution search processing in a case where the fourth selection method of replicas that provide interaction is used. Hereinafter, the processing illustrated in FIG. 23 will be described along step numbers.

[Step S180] The solution search engine 350 sets, in the replica solution search units 352a, 352b, ..., 352n, the above-described probability p. For example, the probability p is determined by the server 100, input to the control device 200, and supplied to the solution search engine 350 via the data reception unit 340.

[Step S181] In processing of Step S181, processing similar to the processing of Step S101 of FIG. 13 is performed. Note that the solution search engine 350 further performs initialization to t = 0.

The subsequent processing (Steps S182 to S188) is the same as the processing of FIG. 13 (Steps S103 to S108) except for the processing of Step S182.

In the fourth selection method of replicas that provide interaction, the solution search processing for each replica in Step S182 is performed, for example, as follows.

FIG. 24 is a flowchart illustrating an example of the procedure of the solution search processing for each replica in the fourth selection method of replicas that provide interaction. Hereinafter, the processing illustrated in FIG. 24 will be described along step numbers.

[Step S190] Each of the replica solution search units 352a, 352b, ..., 352n in the solution search engine 350 calculates the above-described $C_l(t)$. Each of the replica solution search units 352a, 352b, ..., 352n sets $C_l(t) = \varphi$, for example, in a case where a replica number of its own replica is defined as l. Then, each of the replica solution search units 352a, 352b, ..., 352n repeats processing of giving a random number $U_1$ of [0, 1] to each replica number except for l, and adding, when $p < U_1$ holds, the replica number to $C_l(t)$, in ascending order of the replica number up to a replica number = M.

The subsequent processing (Steps S191 to S197) is the same as the processing of FIG. 14 (Steps S111 to S116) except for the processing of Step S191. When the processing of Step S197 is completed, the processing from Step S190 is repeated by using the number of iterations t incremented in the processing of Step S193.

The processing procedure of the calculation processing of the difference in energy ($\Delta G_1, \Delta G_2, ..., \Delta G_N$) of the interaction between the replicas of Step S191 is the same as the processing procedure illustrated in FIG. 15. However, the processing of Steps S120 and S121 of FIG. 15 is different from that of the case where the first selection method of replicas that provide interaction is applied. For example, each of the replica solution search units 352a, 352b, ..., 352n performs the following processing in the processing of Steps S120 and S121.

In the processing of Step S120, each of the replica solution search units 352a, 352b, ..., 352n calculates a Hamming distance between a replica with a replica number included in $C_l(t)$ and the replica with the replica number = l, for which the replica solution search unit is in charge of solution search.

In the processing of Step S121, in the second selection method of replicas that provide interaction, the difference in energy of the interaction is calculated by using strength of the interaction obtained by substituting the Hamming distance calculated as described above into Equation (31).

An expected value (average amount of calculation) of the number of times of calculation of a distance between replicas may be represented by the following Equation (32) by using the probability p.

$$E\left[\sum_{<i,j>} 1\{i \leftrightarrow j\}\right] = \sum_{<i,j>} P(i \leftrightarrow j) = p \times \frac{M(M-1)}{2} \quad (32)$$

In Equation (32), each of i and j represents a replica number, and "i ←→ j" represents that interaction is provided between replicas with the replica numbers = i and j. E represents the expected value, and P represents a probability that interaction is provided between the replicas with the replica numbers = i and j. Furthermore, 1{i ←→ j} is an indicator function that becomes 1 in a case where interaction is given between the replicas with the replica numbers = i and j, and 0 in a case where no interaction is given.

As in Equation (32), the average amount of calculation is pM(M - 1)/2, and when order of p is small enough to be 1/M, the number of times of calculation may be significantly reduced compared to the number of times of calculation ($M^2$ times) in a case where interaction between all replicas is taken into consideration.

In such a method, by randomly limiting a range to which interaction is provided at each number of iterations, a possibility that interaction may be provided even between replicas with a large difference in replica numbers is increased. For example, there is a possibility that interaction is provided between replicas regardless of a difference in replica numbers, and it is possible to suppress bias in a range of application of interaction depending on a replica number.

(Update Bit Selection Method)

Next, the update bit selection method in Step S114 of FIG. 14 and Step S158 of FIG. 20 will be described. As the update bit selection method, for example, the following three methods may be considered.

A first update bit selection method is an original Boltzmann method. A second update bit selection method is a method of performing parallel calculation of energy and referring first to a direction in which energy decreases to perform bit update efficiently. A third update bit selection method is a rejection-free method in which bit flipping always occurs in one iteration.

FIG. 25 is a flowchart illustrating an example of a procedure of the update bit selection processing by the first update bit selection method. Hereinafter, the processing illustrated in FIG. 25 will be described along step numbers.

[Step S201] Each of the replica solution search units 352a, 352b, ..., 352n selects a bit j according to a proposal probability $g(x^l \to x^l[j])$ taking a distance between the replicas into consideration.

[Step S202] Each of the replica solution search units 352a, 352b, ..., 352n determines whether or not to flip the selected bit according to an acceptance probability $a(x^l \to x^l[j])$ of the Metropolis standard.

Although the first update bit selection method is a simple method, in which calculation is easy, a proposal to flip the selected bit may be rejected. In a case where the proposal is rejected, each of the replica solution search units 352a, 352b, ..., 352n determines "NO" in Step S115 of FIG. 14 (or Step S159 of FIG. 20), and repeats the update bit selection processing.

In the first update bit selection method, there is a possibility that the acceptance probability becomes small due to an influence of bias in a proposal distribution, and only rejection occurs. Thus, in a case where the proposal of an update bit is rejected, each of the replica solution search units 352a, 352b, ..., 352n may increase an offset value $E_{off}$ to increase a probability that an update bit is selected in the next bit update. For example, each of the replica solution search units 352a, 352b, ..., 352n adds a predetermined value to the offset value $E_{off}$ when there is no direction in which energy decreases (a difference in energy becomes positive for any bit update).

Furthermore, each of the replica solution search units 352a, 352b, ..., 352n may apply the second update bit selection method of performing parallel calculation of energy and referring first to a direction in which energy decreases to perform bit update efficiently.

FIG. 26 is a flowchart illustrating an example of a processing procedure of the second update bit selection method. Hereinafter, the processing illustrated in FIG. 26 will be described along step numbers.

[Step S211] Each of the replica solution search units 352a, 352b, ..., 352n determines, for all bits, whether or not to perform flipping in a case where a corresponding bit is selected, according to an acceptance probability $a(x^l \to x^l[j])$ of the Metropolis standard. Each of the replica solution search units 352a, 352b, ..., 352n sets a flag indicating a result of the determination in association with each bit.

[Step S212] Each of the replica solution search units 352a, 352b, ..., 352n selects an update bit by referring to the flag of each bit and using selectors connected in a tree shape to give a gradient that takes a distance between the replicas into consideration.

FIG. 27 is a diagram illustrating an example of the selectors connected in a tree shape for the selection of an update bit. According to an energy change value $\{\Delta E_i\}$ of a state transition of each of a plurality of bits, the control circuit 320 determines, for each replica, whether or not to allow the state transition with the acceptance probability of the above-described Equations (6) and (7). Then, the control circuit 320 selects, by the selectors connected in a tree shape, one of the bits determined to accept the state transition. The control circuit 320 outputs a number of the selected bit and transition propriety F.

In this way, the control circuit 320 may increase a probability that an update bit may be selected by performing parallel search for each of the plurality of bits.

For performing the parallel search, the control circuit 320 includes the following circuit configuration. As an example, description will be given by setting the number of bits to 32. In the example of FIG. 27, it is assumed that only one of the bits is selected as an update bit.

The control circuit 320 includes comparison circuit units 51 to 54 and a selector unit 60.

The comparison circuit units 51 to 54 receive, from the neuron circuits 311, 312, ..., 31n, the energy change value $\{\Delta E_i\}$ in a case where each of a plurality of state variables is transitioned. The comparison circuit units 51 to 54 determine whether or not to accept each state transition on the basis of $\{\Delta E_i\}$, and output the transition propriety {fi}. Each of the comparison circuit units 51 to 54 includes eight (= 32/4) comparators. The total number of all comparators included in the comparison circuit units 51 to 54 is 32.

For example, the comparison circuit unit 51 includes comparators C0, C1, ..., C7. The comparison circuit unit 52 includes comparators C8, C9, ..., C15. The comparison circuit unit 53 includes comparators C16, C17, ..., C23. The comparison circuit unit 54 includes comparators C24, C25, ..., C31. A comparator Ci (i is an integer of 0 to 31 in the example of FIG. 27) receives $\Delta E_i$ and outputs transition propriety $f_i$ according to determination based on $\Delta E_i$. In the determination by the comparator Ci, an acceptance probability calculated by using the energy change value $\Delta E_i$ and a value of a temperature parameter T is compared with a random number value u ($0 \leqq u \leqq 1$). For example, when the random number value u is equal to or less than the acceptance probability, the comparator Ci determines that flipping of an i-th bit is accepted.

In the comparison circuit units 51 to 54, a value represented by "$T \times \log(u)$" may also be calculated in advance. This value is a value that causes, on a probability basis, a state transition that increases energy, and may also be referred to as thermal excitation energy or thermal noise. The comparator Ci compares $\Delta E_i$ with the thermal excitation energy, and for example, when the thermal excitation energy is larger, determines that the flipping of the i-th bit is accepted.

To the selector unit 60, an output value of the comparator Ci is input as a state transition candidate. Then, the selector unit 60 selects and outputs any one of a plurality of state transition candidates. The selector unit 60 has an n-stage (n is an integer of greater than or equal to 2) selector tree for performing the selection. In the example of FIG. 27, n = 5.

A first stage (1st) of the selector tree includes partial selector units 60a and 60b. A second stage (2nd) of the selector tree includes a partial selector unit 60c. A third stage (3rd) of the selector tree includes a partial selector unit 60d. A fourth stage (4th) of the selector tree includes a partial selector unit 60e. A fifth stage (5th) of the selector tree includes a partial selector unit 60f.

Each of the partial selector units 60a, 60b, ..., 60f includes, for example, one or a plurality of selectors that select and output one of two inputs according to a selection random number. A selector 61 is one of the plurality of selectors, and the other selectors have configurations similar to the configuration of the selector 61. Two inputs to the selector 61 are identification values $N_i$ and $N_j$ for specifying transition numbers of i and j, transition propriety information $f_i$ and $f_j$, and proposal probabilities $g(x^l \to x^l[i])$ and $g(x^l \to x^l[j])$. Outputs of the selector 61 are propriety information $f_o$ obtained as a logical sum of the transition propriety information $f_i$ and $f_j$, an identification value $N_o$ for specifying the selected transition number of i or j, and a proposal probability $g(x^l \to x^l[o])$ of a selected bit.

In a case where either one of the transition propriety information $f_i$ and $f_j$ is 1 (acceptable) and the other is 0 (unacceptable), the selector 61 always selects the acceptable bit. In a case where both of the transition propriety information $f_i$ and $f_j$ are 0, the selector 61 may perform the selection in any way.

In a case where both of the transition propriety information $f_i$ and $f_j$ are 1, the selector 61 selects, by using a candidate selection random number, one with a probability according to a proposal probability. For example, the selector 61 divides, according to a ratio of the proposal probabilities $g(x^l \to x^l[i])$ and $g(x^l \to x^l[j])$, a range from 0 to 1 into two sections corresponding to the bits i and j. Then, the selector 61 selects a bit corresponding to a section including the candidate selection random number. Then, the selector 61 generates and outputs the identification value $N_o$ of the bit selected as a result of the selection.

In the example of FIG. 27, selectors other than the selector 61 are abbreviated. A portion represented by a black circle in FIG. 27 corresponds to one selector. Each of the partial selector units 60a, 60b, and 60c includes eight selectors. The partial selector unit 60d includes four selectors. The partial selector unit 60e includes two selectors. The partial selector unit 60f includes one selector. Each selector in the partial selector units 60a to 60f performs selection processing similar to that performed by the selector 61, so that possibility that bits with a higher proposal probability according to a distance between replicas are selected is increased and one bit is output as a state transition candidate.

As illustrated in FIG. 27, the control circuit 320 performs parallel search for a state transition, and uses a binary tree structure of selectors as a knockdown method (or also referred to as a tournament method) to narrow down state transition candidates to one. A bit whose energy is decreased by flipping is determined to be acceptable by the comparator. Thus, when there is at least one bit whose energy is decreased by flipping, an update bit may be selected with one selection by the selector unit 60. Furthermore, even in a case where a local solution is reached and energy increases even when any bit is flipped, there is a possibility that flipping of any one bit may be accepted on the basis of the random number value u and the value of the temperature parameter T. When flipping of any one bit is accepted, an update bit may be selected with one selection by the selector unit 60. Moreover, since the proposal probability that reflects the distance between the replicas is used at the time of the selection by the selector, the higher the proposal probability of the bit, the more likely the bit is to be selected as an update bit.

Note that, in a case where the transition propriety information output by the selector unit 60 is 0 (unacceptable), each of the replica solution search units 352a, 352b, ..., 352n increases an offset value and repeats the update bit selection processing. With this configuration, a possibility that an update bit may be selected early is increased.

FIG. 28 is a flowchart illustrating an example of a processing procedure of the third update bit selection method. In the third update bit selection method, an update bit may be selected in the following one step.

[Step S231] Each of the replica solution search units 352a, 352b, ..., 352n calculates, by using a transition probability $W(x^l \to x^l[j_0]) = g(x^l \to x^l[j_0]) \times a(x^l \to x^l[j_0])$ of each bit, a rejection-free transition probability $W(x^l \to x^l[j_0])$ (with a tilde on top of W) indicated in the following Equation (33).

$$\widetilde{W}(x^l \to x^l[j_0]) = \frac{W(x^l \to x^l[j_0])}{\sum_{j=1}^{N} W(x^l \to x^l[j])} \tag{33}$$

Then, each of the replica solution search units 352a, 352b, ..., 352n selects one of bits as an update bit according to the rejection-free transition probability. By normalizing transition probabilities of bits in this way so that the sum of acceptance probabilities is 1, it is possible to always select an update bit in one update bit selection processing.

As described above, the Ising machine 300 according to the second embodiment reflects interaction between replicas in a proposal probability and performs solution search by using a plurality of replicas. With this configuration, when a combination optimization problem is solved on the basis of the Metropolis-Hastings method, each replica is expected to search a state space separately while maintaining a distribution of a convergence destination, and solving performance is improved. For example, a possibility of reaching an optimum solution increases, and energy may decrease quickly.

Furthermore, the Ising machine 300 does not take interaction between all replicas into consideration, but takes interaction between a part of replicas into consideration. Thus, the number of times of calculation may be reduced compared to the number of times of calculation ($M^2$ times) of a distance between replicas in a case where the interaction between all replicas is taken into consideration. For example, according to the above-described four selection methods of replicas that provide interaction, the number of times of calculation described above may be suppressed to an extent that the number of times of calculation may be represented by a linear expression of M.

FIG. 29 is a diagram illustrating an energy landscape in a case where repulsive interaction is set between replicas. Among a plurality of replicas 71 to 73, repulsive interaction is provided between the replicas 71 and 72 and between the replicas 72 and 73. No repulsive interaction is provided between the replicas 71 and 73. In this case, the replicas 71 and 72 and the replicas 72 and 73 repel each other, so that a wide search space may be efficiently searched.

FIG. 30 is a diagram illustrating an energy landscape in a case where attractive interaction is set between replicas. Attractive interaction is provided between a plurality of replicas 74 and 75. Since the replicas 74 and 75 are attracted to each other, it becomes easier to escape from a local solution, and a possibility of reaching a global solution increases as the entire group. On the other hand, no attractive interaction is provided between the replica 74 and a replica 76. In this case, it is suppressed that the replica 76 is attracted to the replica 74 and stuck in the local solution.

Next, verification examples in which an effect has been confirmed will be described with reference to FIGs. 31 to 33.

FIG. 31 is a diagram illustrating a first verification example. FIGs. 32 and 33 are diagrams illustrating a second verification example.

The examples illustrated in FIGs. 31 to 33 are results of verification of some instances of a representative combination optimization problem called a quadratic assignment problem (QAP). The above-described Equation (17) is used to calculate a proposal probability of each bit according to a proposal distribution. As energy of interaction between replicas, the linear function of the Hamming distance indicated in the above-described Equation (19) is used. As the update bit selection method, the third update bit selection method (rejection-free) is used. Furthermore, the total number of replicas M = 30.

In the example of FIG. 31, in a solution search method that uses a 1-bit flip transition and replica exchange, a difference in energy decrease depending on presence or absence of interaction between replicas is compared. A horizontal axis indicates the number of iterations of a state transition, and a vertical axis is a minimum value of energy obtained at that time. When $\gamma$ (referred to as "gamma" in FIG. 31) is used as a parameter of repulsive interaction, energy decreases in the cases of gamma = 0 and gamma < 0 (the cases without and with the repulsive interaction) is compared.

In the example of FIG. 31, the energy decreases faster in the case where repulsive interaction is introduced (gamma-3) than in the case where interaction is not introduced (gamma-0).

By introducing interaction between replicas in this way, solution search performance is improved. Moreover, since the interaction between replicas is reflected in a proposal probability and an objective function is not modified, it is possible to perform solution search by using an appropriate objective function (for example, a function indicating a Gibbs distribution).

In the examples illustrated in FIGs. 32 and 33, the first selection method of replicas that provide interaction is used, and a difference in energy decrease is compared in a case where the above-described s, which determines a range of application of interaction, is changed in a range of 1 to 15. Note that s = 0 indicates a case where interaction is not applied.

As illustrated in FIGs. 32 and 33, the wider the range of application of interaction (FIG. 33), the faster energy decreases. However, also in a case where the range of application of interaction is narrow (FIG. 32), convergence to lower energy occurs than in a case where interaction is not applied.

Note that the method referred to as Collective Monte Carlo (CMC) indicated in Gregoire Clarte and Antoine Diez, "Collective sampling through a Metropolis-Hastings like method: kinetic theory and numerical experiments", arXiv:1909.08988v1 [math.ST], 18 Sep. 2019 is a method that may be applied only to an objective function whose domain is a real number, and may not be directly applied to an objective function of an Ising machine whose domain is a binary discrete space (binary variable). Furthermore, in the CMC, although the number (density) of replicas that are close to each other is counted, when states of all replicas are seen in the case of 1-bit flip, the number (density) does not change significantly before and after the flipping. Thus, a ratio of density of the number of replicas before and after flipping of a certain bit becomes close to 1, and when a binary discrete space is used as a domain, an effect of interaction between replicas will be reduced. On the other hand, in the method indicated in the second embodiment, application to a combination optimization problem with a binary discrete space as a domain is possible, and solving performance is also improved.

Furthermore, the method referred to as robust ensemble (RE) indicated in Baldassi, Carlo. et. al., "Unreasonable Effectiveness of Learning Neural Networks: From Accessible States and Robust Ensembles to Basic Algorithmic Schemes", PNAS E7655-E7662, Published online 15 Nov. 2016 employs a method of directly adding interaction between replicas to an objective function. Thus, there is no guarantee that an original objective function is optimized. On the other hand, in the method indicated in the second embodiment, interaction between replicas is reflected in a proposal probability, and solution search using an appropriate objective function may be performed.

[Other Embodiments]

In the second embodiment, temperature exchange is performed between replicas. However, it is also possible to perform solution search individually with a plurality of replicas without performing temperature exchange between the replicas. Even in that case, a solution search capability is improved by performing solution search in consideration of interaction between the replicas.

Furthermore, in the second embodiment, a problem is solved by using the Ising model with a binary discrete space as a domain. However, application is also possible in a case where a problem is solved by using, as a replica, a model with a real number as a domain.

Moreover, in the second embodiment, the Ising machine 300 including the plurality of neuron circuits 311, 312, ..., 31n performs solution search. However, the same processing may be implemented by a Neumann type computer having a similar hardware configuration to that of the server 100 illustrated in FIG. 3. In that case, the Ising machine 300 executes solution search processing similar to that of the second embodiment by executing, for example, a program recorded in a computer-readable recording medium. A program in which processing contents to be executed by the Ising machine 300 are described may be recorded in various recording media. For example, a program to be executed by the Ising machine 300 may be stored in the storage device. The processor of the Ising machine 300 loads at least one of programs in the storage device on the memory and executes the program. Furthermore, it is also possible to record the program to be executed by the Ising machine 300 in a portable recording medium such as the optical disk, the memory device, or the memory card. The program stored in the portable recording medium may be executed after being installed on the storage device, for example, under control of the processor of the Ising machine 300. Furthermore, the processor of the Ising machine 300 may directly read and execute the program from the portable recording medium.

The embodiments have been illustrated as described above, but the configuration of each unit described in the embodiments may be replaced with another configuration having a similar function. Furthermore, any other components and steps may be added. Moreover, any two or more configurations (features) of the above-described embodiments may be combined.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An optimization device comprising:

   a storage unit that stores, for each of a plurality of replicas, values of a plurality of state variables; and specifying, for each of the plurality of replicas, an amount of change in strength of interaction according to change in a distance between the replica and another replica that is a part of a replica group obtained by excluding the replica from the plurality of replicas, in a state space that indicates a space in which a combination of the values of the plurality of state variables may exist, in a case where a value of a first state variable among the plurality of state variables of the replica is updated; and
   determining, on the basis of a proposal probability according to the amount of change in the strength of the interaction and an acceptance probability according to a target probability distribution in the case where the value of the first state variable is updated, whether or not to update the value of the first state variable.

2. The optimization device according to claim 1, wherein
   each of the plurality of replicas is given a replica number which is identification information that identifies each of the plurality of replicas, and
   the another replica is given a second replica number included in a range in which a difference from a first replica number that is identification information that identifies the replica is a predetermined value.

3. The optimization device according to claim 2, wherein the processing unit changes the predetermined value on the basis of a result of comparison between an average value of the distances and a first threshold or a second threshold greater than the first threshold.

4. The optimization device according to claim 3, wherein, in a case where the interaction of a repulsive force is generated, the processing unit increases the predetermined value when the average value is smaller than the first threshold, and decreases the predetermined value when the average value is greater than the second threshold.

5. The optimization device according to claim 3, wherein, in a case where the interaction of an attractive force is generated, the processing unit decreases the predetermined value when the average value is smaller than the first threshold, and increases the predetermined value when the average value is greater than the second threshold.

6. The optimization device according to any one of claims 2 to 5, wherein, when the predetermined value is defined as s, the number of the plurality of replicas is defined as M, the first replica number is defined as I, and the replica numbers are assumed to circulate, the another replica is given the second replica number included in a range between a remainder obtained by dividing I - s by M and a remainder obtained by dividing I + s by M.

7. The optimization device according to claim 1, wherein
   the plurality of replicas is grouped into a plurality of groups, and a representative replica is set in each of the plurality of groups, and
   the another replica with respect to the replica that belongs to a first group among the plurality of groups is the representative replica of another group other than the first group among the plurality of groups.

8. The optimization device according to claim 1, wherein the processing unit adopts each of the plurality of replicas other than the replica as the another replica with a predetermined probability.

9. An optimization method implemented by an optimization device, the optimization method comprising:

   specifying, for each of a plurality of replicas that has a plurality of state variables, an amount of change in strength of interaction according to change in a distance between the replica and another replica that is a part of a replica group obtained by excluding the replica from the plurality of replicas, in a state space that indicates a space in which a combination of the values of the plurality of state variables may exist, in a case where a value of a first state variable among the plurality of state variables of the replica is updated; and
   determining, on the basis of a proposal probability according to the amount of change in the strength of the interaction and an acceptance probability according to a target probability distribution in the case where the value of the first state variable is updated, whether or not to update the value of the first state variable.

10. The optimization method according to claim 9, wherein

each of the plurality of replicas is given a replica number which is identification information that identifies each of the plurality of replicas, and
the another replica is given a second replica number included in a range in which a difference from a first replica number that is identification information that identifies the replica is a predetermined value.

**11.** The optimization method according to claim 10, wherein the processing unit changes the predetermined value on the basis of a result of comparison between an average value of the distances and a first threshold or a second threshold greater than the first threshold.

**12.** The optimization method according to claim 11, wherein, in a case where the interaction of a repulsive force is generated, the processing unit increases the predetermined value when the average value is smaller than the first threshold, and decreases the predetermined value when the average value is greater than the second threshold.

**13.** The optimization method according to claim 11, wherein, in a case where the interaction of an attractive force is generated, the processing unit decreases the predetermined value when the average value is smaller than the first threshold, and increases the predetermined value when the average value is greater than the second threshold.

**14.** The optimization method according to any one of claims 10 to 13, wherein, when the predetermined value is defined as s, the number of the plurality of replicas is defined as M, the first replica number is defined as I, and the replica numbers are assumed to circulate, the another replica is given the second replica number included in a range between a remainder obtained by dividing I - s by M and a remainder obtained by dividing I + s by M.

**15.** The optimization method according to claim 9, wherein
the plurality of replicas is grouped into a plurality of groups, and a representative replica is set in each of the plurality of groups, and
the another replica with respect to the replica that belongs to a first group among the plurality of groups is the representative replica of another group other than the first group among the plurality of groups.

**16.** An optimization program comprising instructions which, when the program is executed by a computer, causes the computer to carry out processing, the processing including:

specifying, for each of a plurality of replicas that has a plurality of state variables, an amount of change in strength of interaction according to change in a distance between the replica and another replica that is a part of a replica group obtained by excluding the replica from the plurality of replicas, in a state space that indicates a space in which a combination of the values of the plurality of state variables may exist, in a case where a value of a first state variable among the plurality of state variables of the replica is updated; and
determining, on the basis of a proposal probability according to the amount of change in the strength of the interaction and an acceptance probability according to a target probability distribution in the case where the value of the first state variable is updated, whether or not to update the value of the first state variable.

FIG. 1

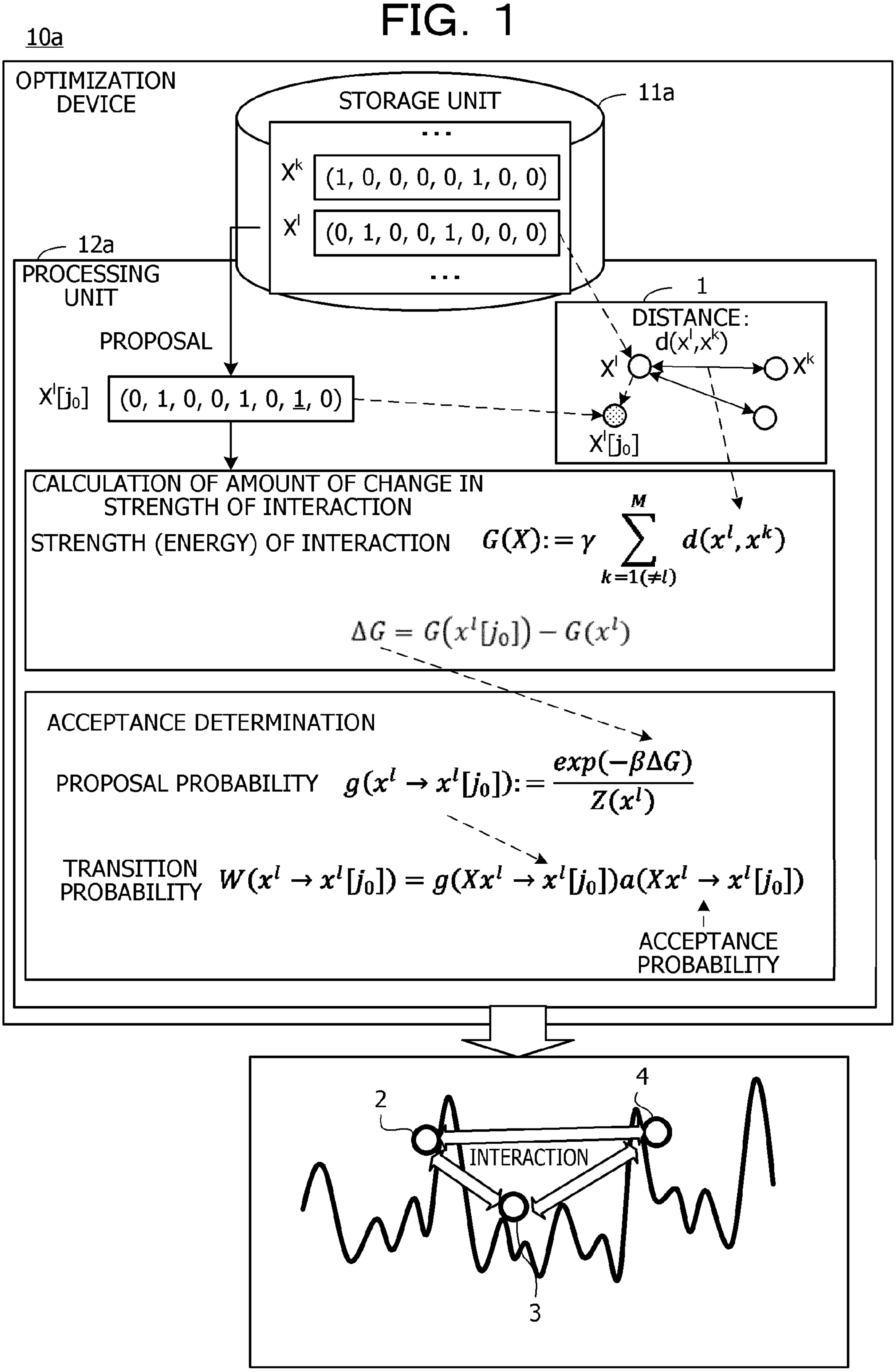
10a
OPTIMIZATION DEVICE
STORAGE UNIT
11a
X^k (1, 0, 0, 0, 0, 1, 0, 0)
X^l (0, 1, 0, 0, 1, 0, 0, 0)
12a
PROCESSING UNIT
PROPOSAL
X^l[j0] (0, 1, 0, 0, 1, 0, 1, 0)
1
DISTANCE: d(x^l,x^k)
X^l
X^k
X^l[j0]
CALCULATION OF AMOUNT OF CHANGE IN STRENGTH OF INTERACTION
STRENGTH (ENERGY) OF INTERACTION $G(X):=\gamma\sum_{k=1(\neq l)}^{M} d(x^l,x^k)$
$\Delta G = G(x^l[j_0]) - G(x^l)$
ACCEPTANCE DETERMINATION
PROPOSAL PROBABILITY $g(x^l \rightarrow x^l[j_0]):=\frac{exp(-\beta\Delta G)}{Z(x^l)}$
TRANSITION PROBABILITY $W(x^l \rightarrow x^l[j_0]) = g(Xx^l \rightarrow x^l[j_0])a(Xx^l \rightarrow x^l[j_0])$
ACCEPTANCE PROBABILITY
2
4
INTERACTION
3

FIG. 2

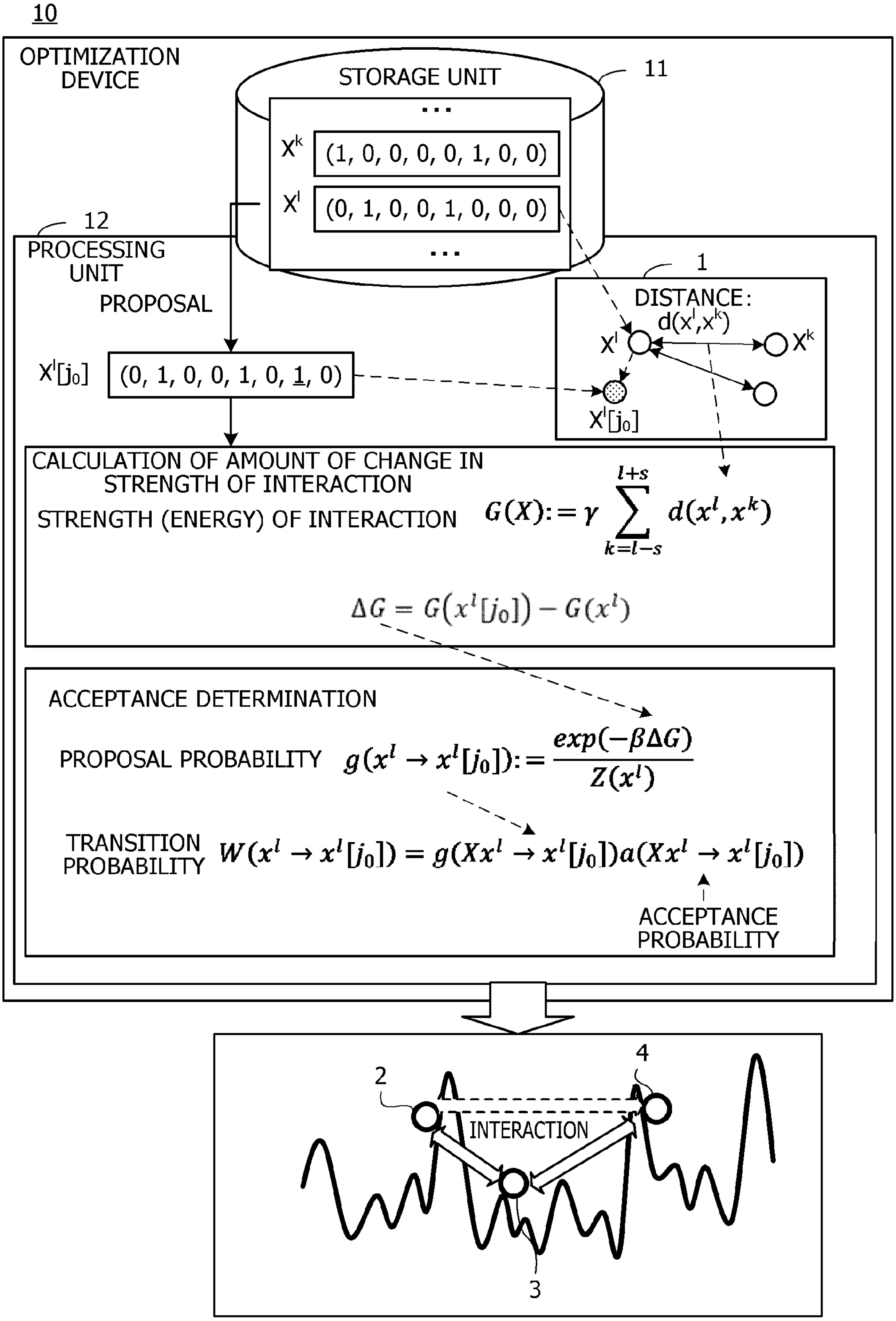
10
OPTIMIZATION DEVICE
STORAGE UNIT
11
$X^k$ (1, 0, 0, 0, 0, 1, 0, 0)
$X^l$ (0, 1, 0, 0, 1, 0, 0, 0)
12
PROCESSING UNIT
PROPOSAL
$X^l[j_0]$ (0, 1, 0, 0, 1, 0, 1, 0)
1
DISTANCE: $d(x^l,x^k)$
$X^l$
$X^k$
$X^l[j_0]$
CALCULATION OF AMOUNT OF CHANGE IN STRENGTH OF INTERACTION
STRENGTH (ENERGY) OF INTERACTION $G(X) := \gamma \sum_{k=l-s}^{l+s} d(x^l, x^k)$
$\Delta G = G(x^l[j_0]) - G(x^l)$
ACCEPTANCE DETERMINATION
PROPOSAL PROBABILITY $g(x^l \rightarrow x^l[j_0]) := \frac{exp(-\beta \Delta G)}{Z(x^l)}$
TRANSITION PROBABILITY $W(x^l \rightarrow x^l[j_0]) = g(Xx^l \rightarrow x^l[j_0])a(Xx^l \rightarrow x^l[j_0])$
ACCEPTANCE PROBABILITY
2
4
INTERACTION
3

FIG. 3

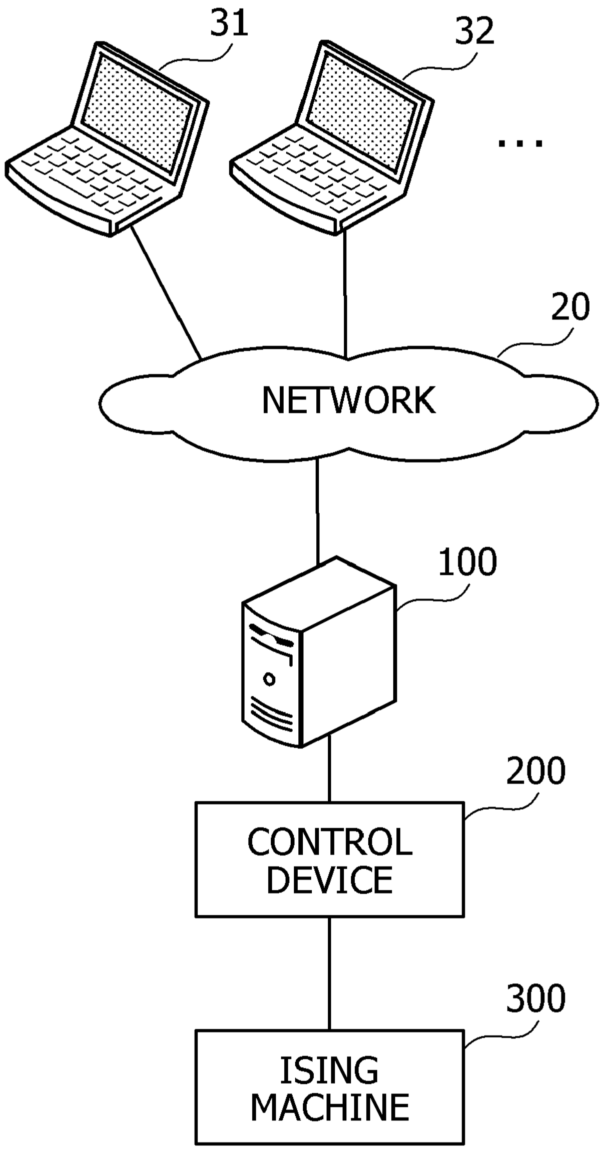

FIG. 4

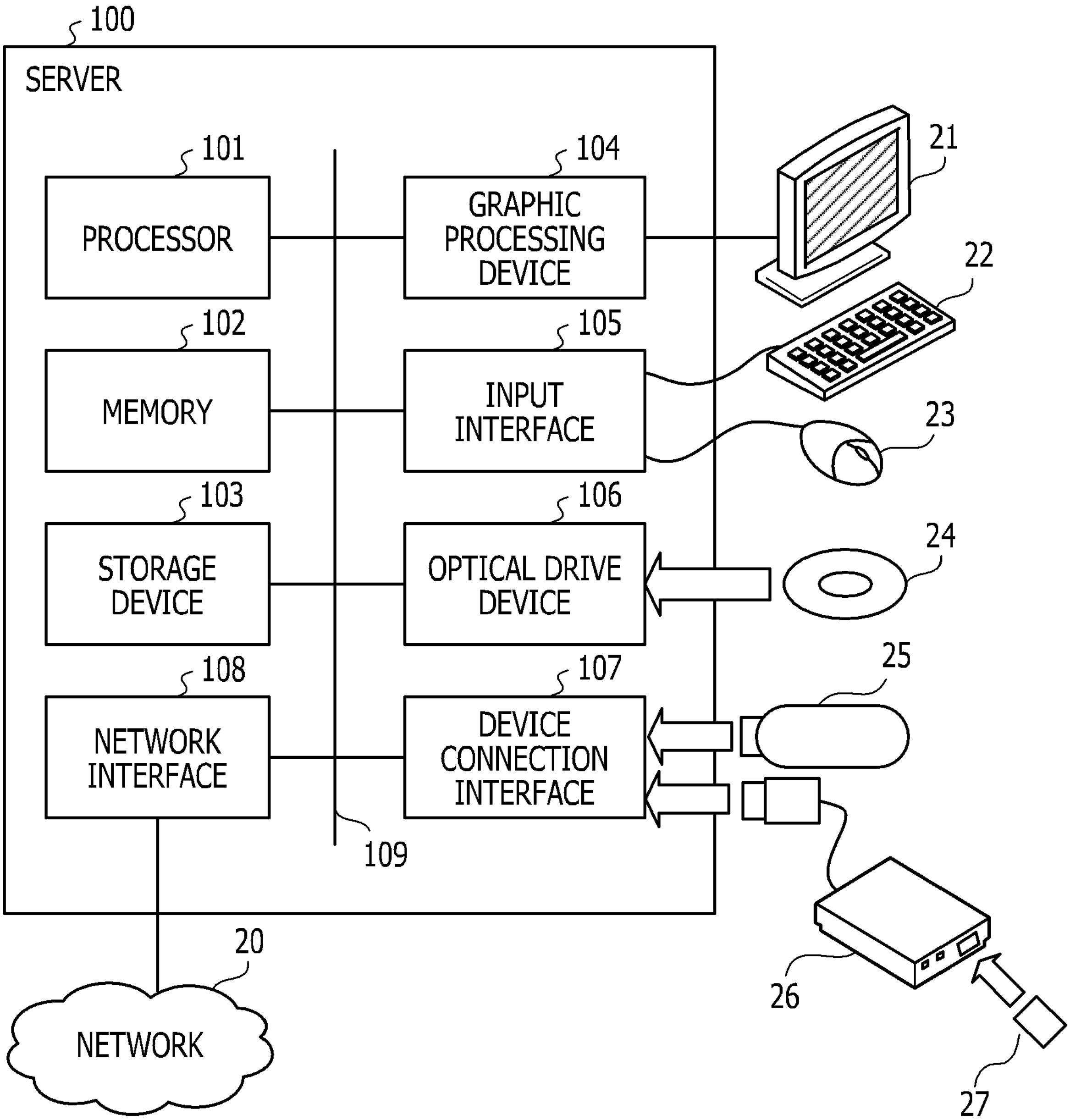
100
SERVER
101
PROCESSOR
102
MEMORY
103
STORAGE DEVICE
108
NETWORK INTERFACE
104
GRAPHIC PROCESSING DEVICE
105
INPUT INTERFACE
106
OPTICAL DRIVE DEVICE
107
DEVICE CONNECTION INTERFACE
109
20
NETWORK
21
22
23
24
25
26
27

FIG. 5

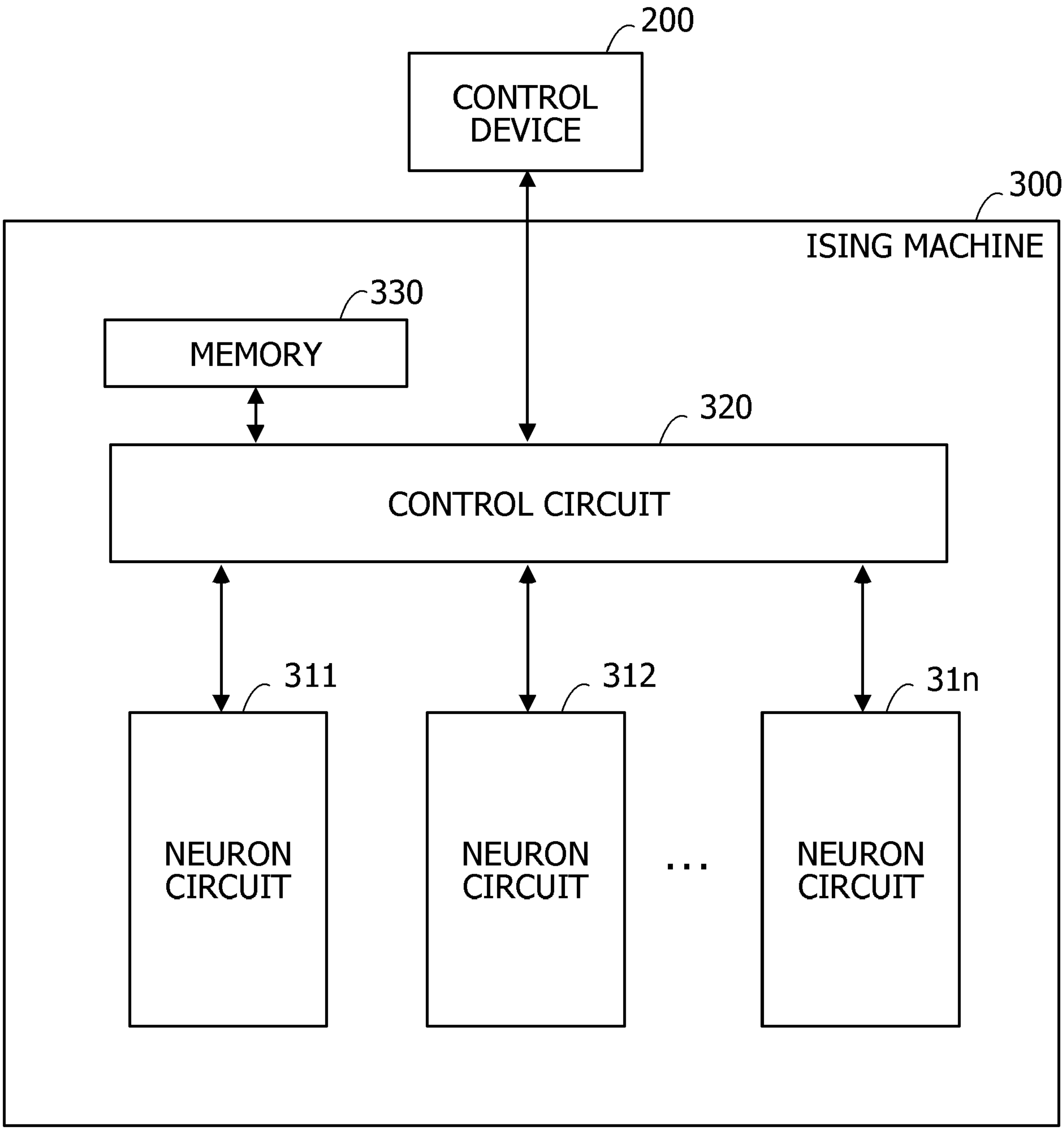
200
CONTROL DEVICE
300
ISING MACHINE
330
MEMORY
320
CONTROL CIRCUIT
311
312
31n
NEURON CIRCUIT
NEURON CIRCUIT
...
NEURON CIRCUIT

FIG. 6

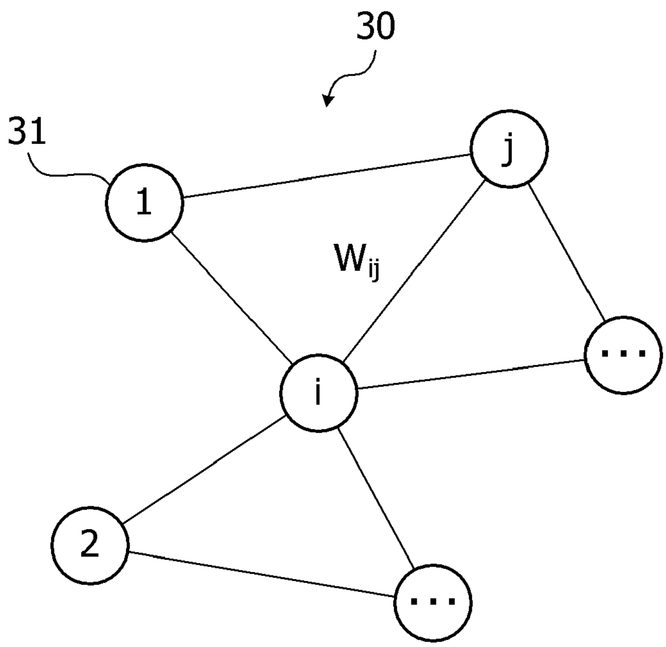

FIG. 7

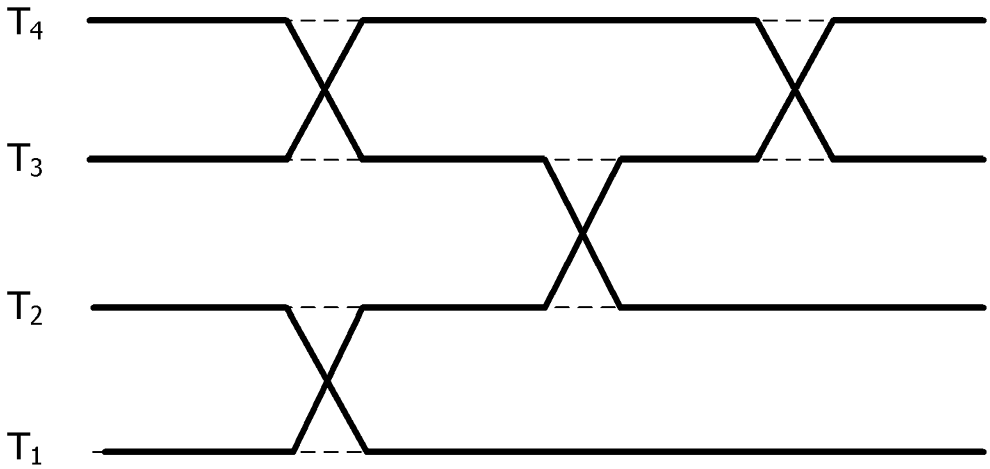

FIG. 8

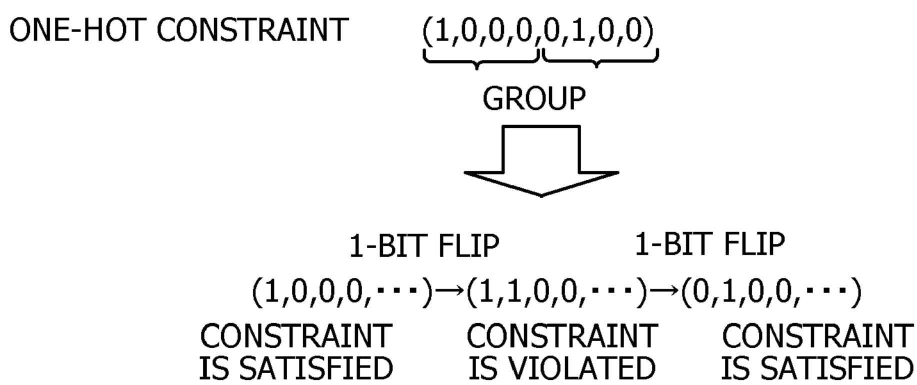
ONE-HOT CONSTRAINT
(1,0,0,0,0,1,0,0)
GROUP
1-BIT FLIP
1-BIT FLIP
(1,0,0,0,･･･)→(1,1,0,0,･･･)→(0,1,0,0,･･･)
CONSTRAINT IS SATISFIED
CONSTRAINT IS VIOLATED
CONSTRAINT IS SATISFIED

FIG. 9

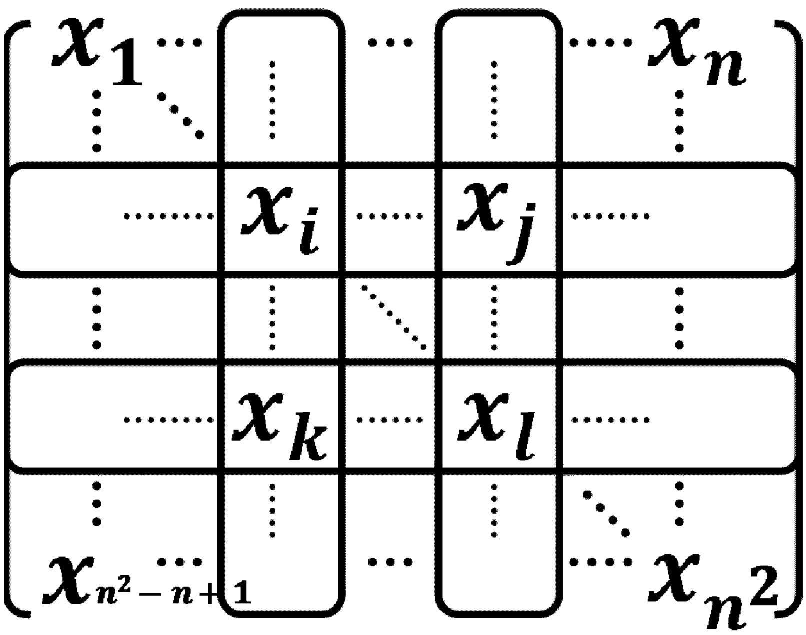

FIG. 10

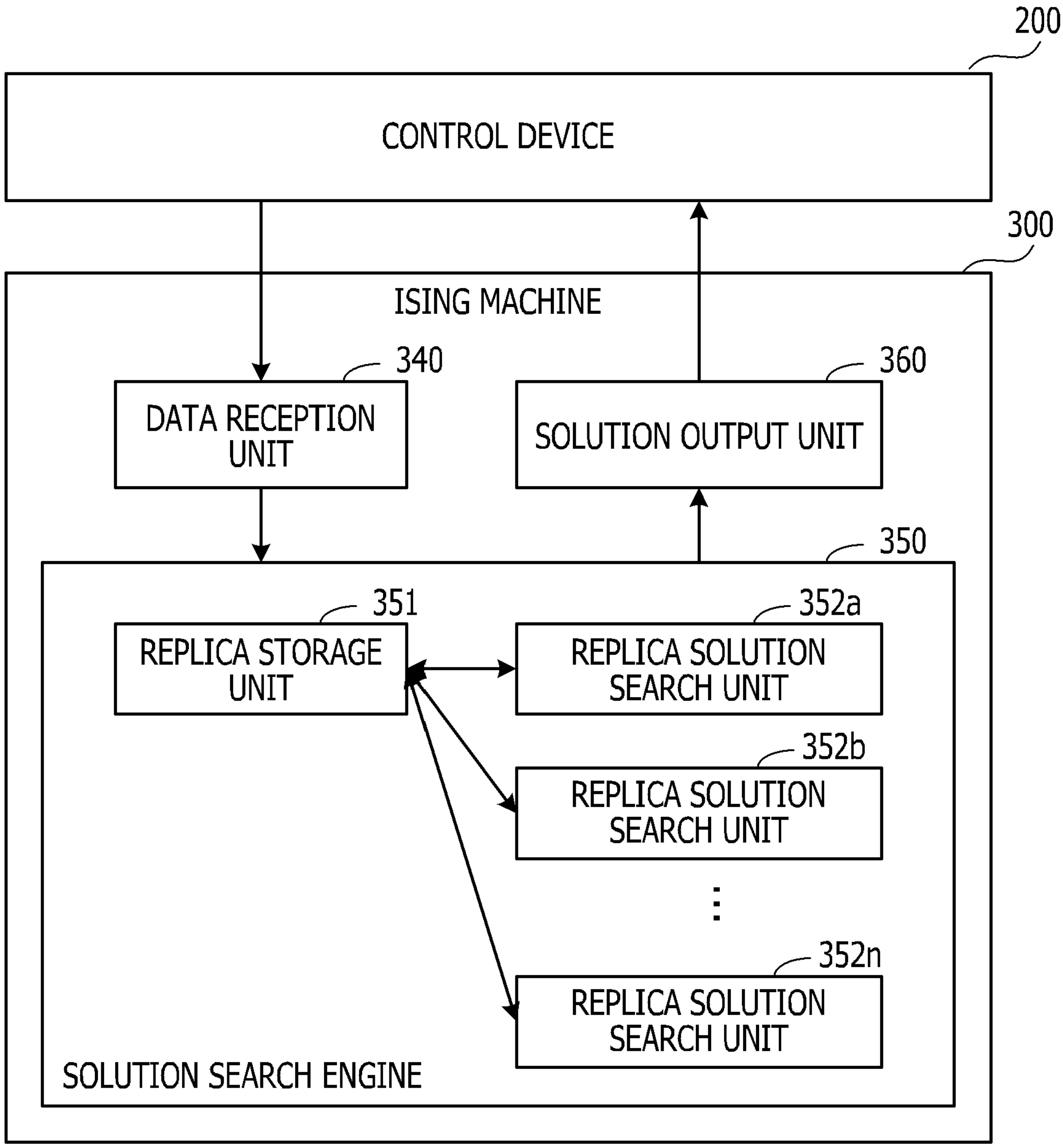
200
CONTROL DEVICE
300
ISING MACHINE
340
DATA RECEPTION UNIT
360
SOLUTION OUTPUT UNIT
350
351
REPLICA STORAGE UNIT
352a
REPLICA SOLUTION SEARCH UNIT
352b
REPLICA SOLUTION SEARCH UNIT
352n
REPLICA SOLUTION SEARCH UNIT
SOLUTION SEARCH ENGINE

FIG. 11

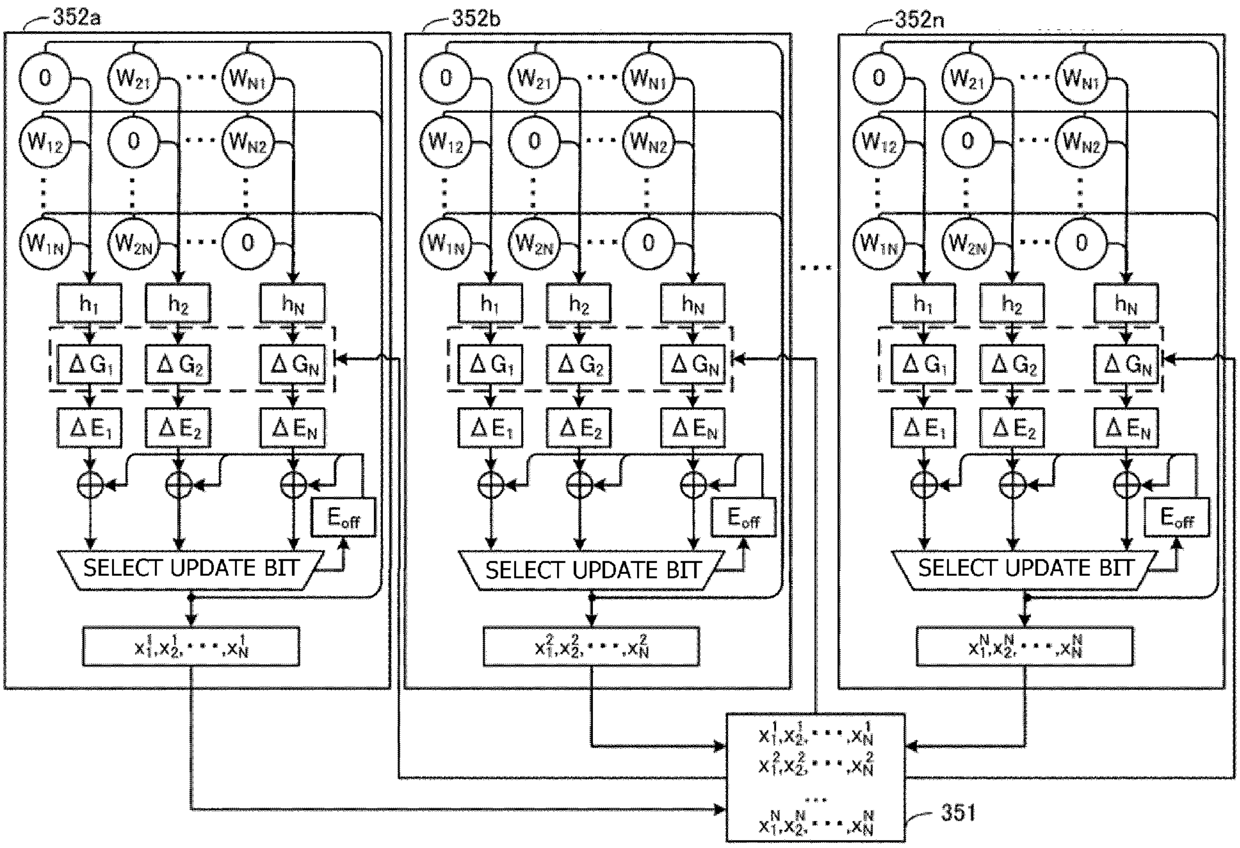

FIG. 12

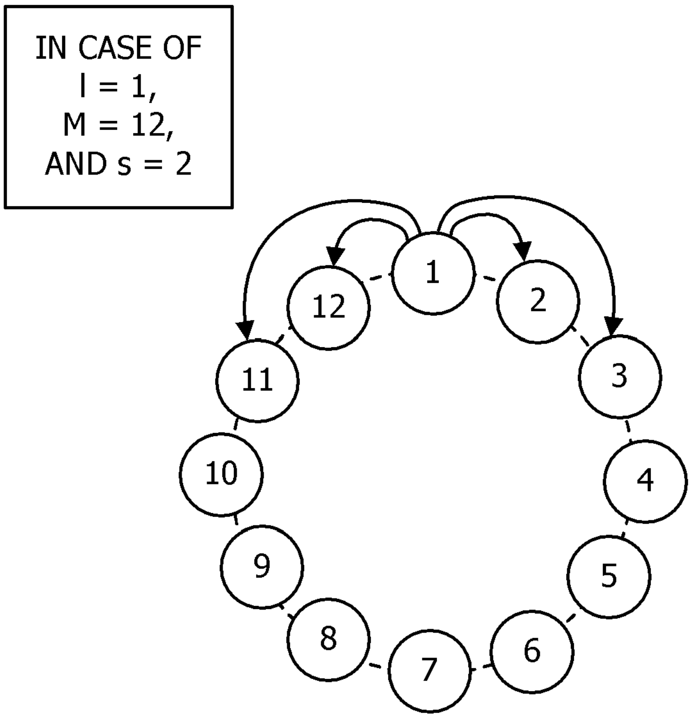

FIG. 13

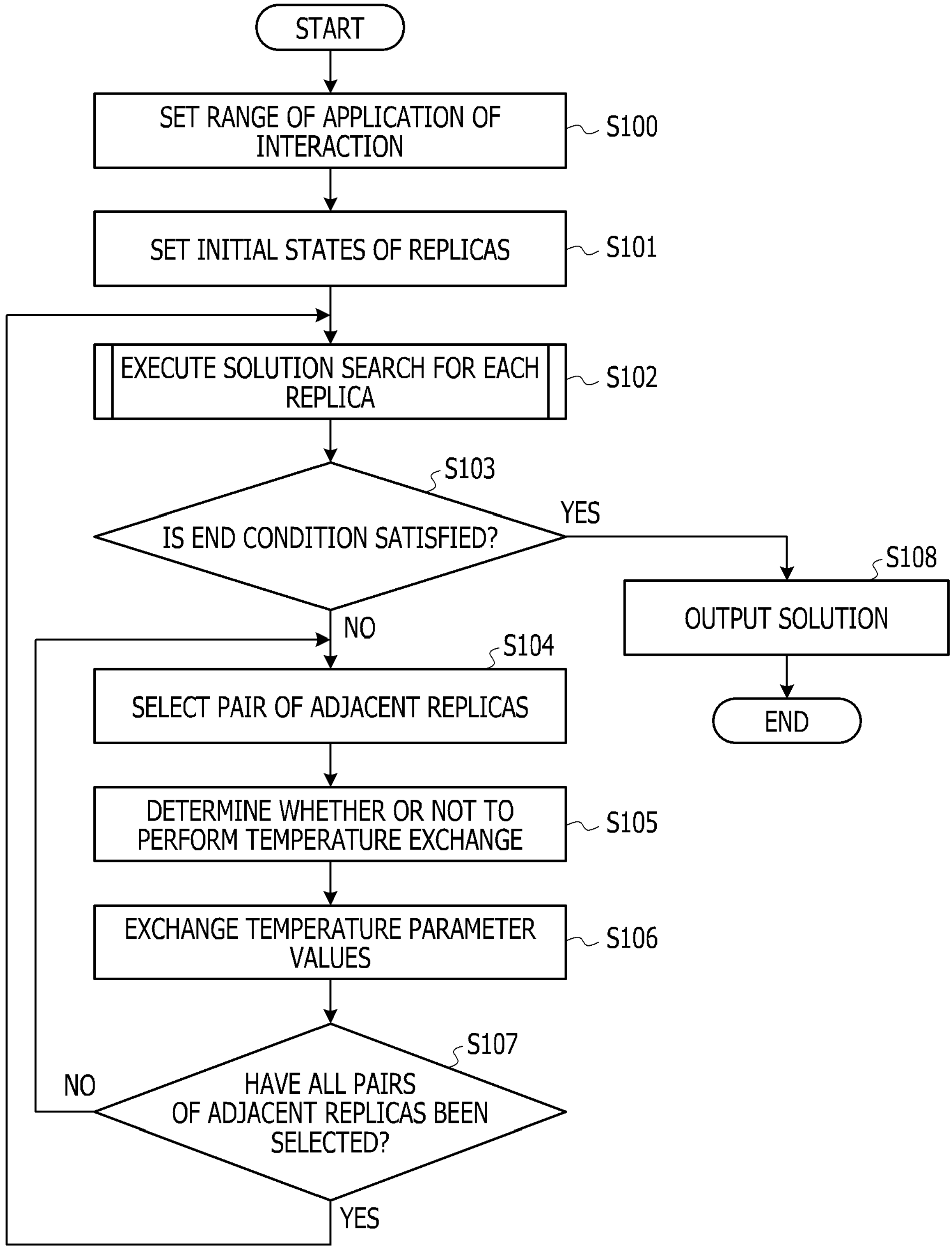
START
SET RANGE OF APPLICATION OF INTERACTION
S100
SET INITIAL STATES OF REPLICAS
S101
EXECUTE SOLUTION SEARCH FOR EACH REPLICA
S102
S103
IS END CONDITION SATISFIED?
YES
NO
S108
OUTPUT SOLUTION
END
S104
SELECT PAIR OF ADJACENT REPLICAS
DETERMINE WHETHER OR NOT TO PERFORM TEMPERATURE EXCHANGE
S105
EXCHANGE TEMPERATURE PARAMETER VALUES
S106
S107
HAVE ALL PAIRS OF ADJACENT REPLICAS BEEN SELECTED?
NO
YES

FIG. 14

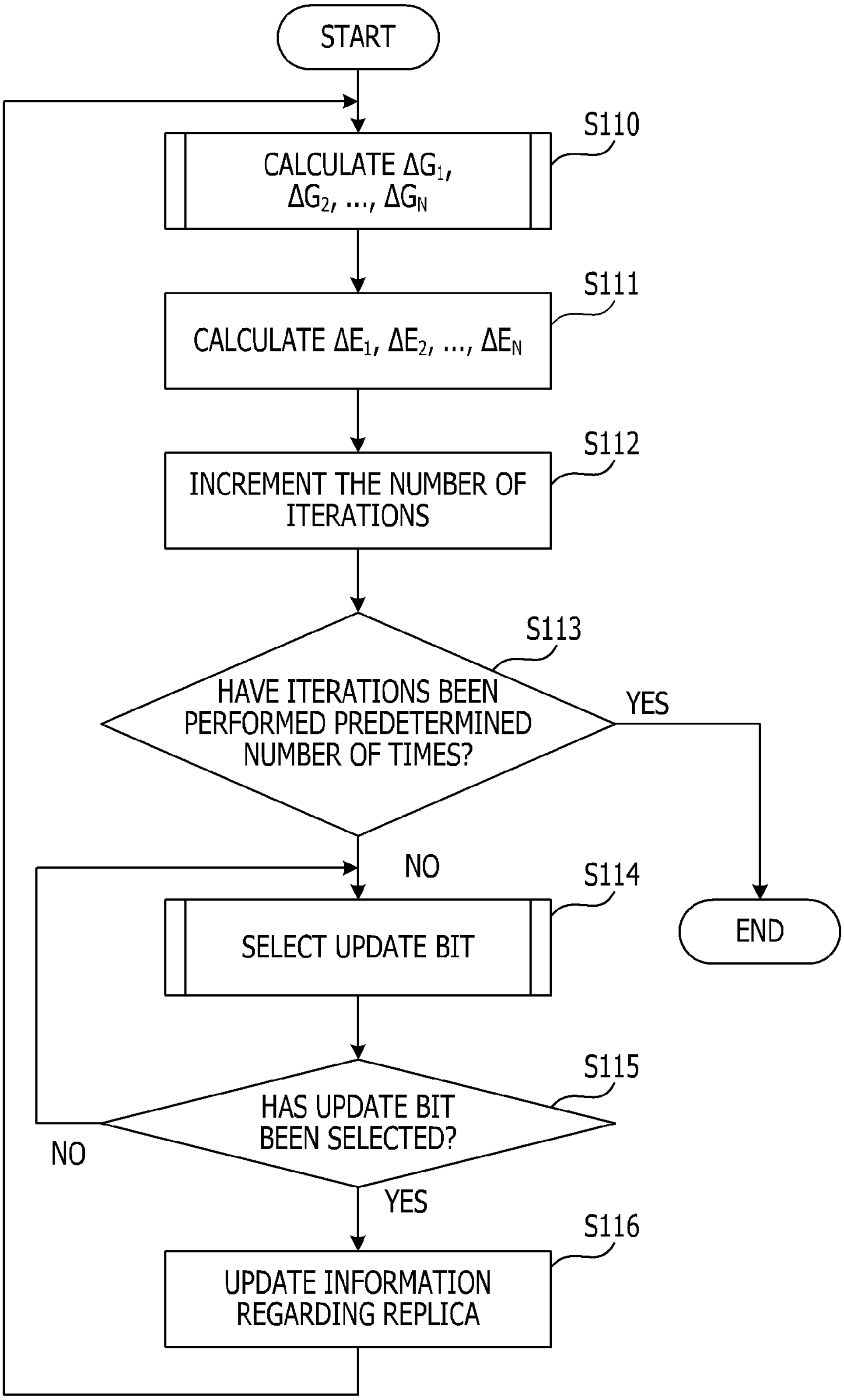
START
S110
CALCULATE $\Delta G_1$, $\Delta G_2$, ..., $\Delta G_N$
S111
CALCULATE $\Delta E_1$, $\Delta E_2$, ..., $\Delta E_N$
S112
INCREMENT THE NUMBER OF ITERATIONS
S113
HAVE ITERATIONS BEEN PERFORMED PREDETERMINED NUMBER OF TIMES?
YES
NO
END
S114
SELECT UPDATE BIT
S115
HAS UPDATE BIT BEEN SELECTED?
NO
YES
S116
UPDATE INFORMATION REGARDING REPLICA

FIG. 15

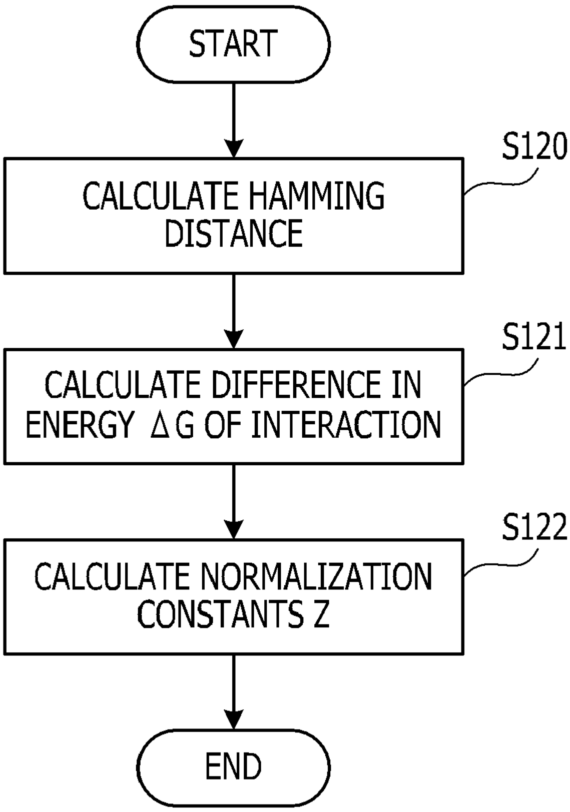
START
S120
CALCULATE HAMMING DISTANCE
S121
CALCULATE DIFFERENCE IN ENERGY ΔG OF INTERACTION
S122
CALCULATE NORMALIZATION CONSTANTS Z
END

FIG. 16

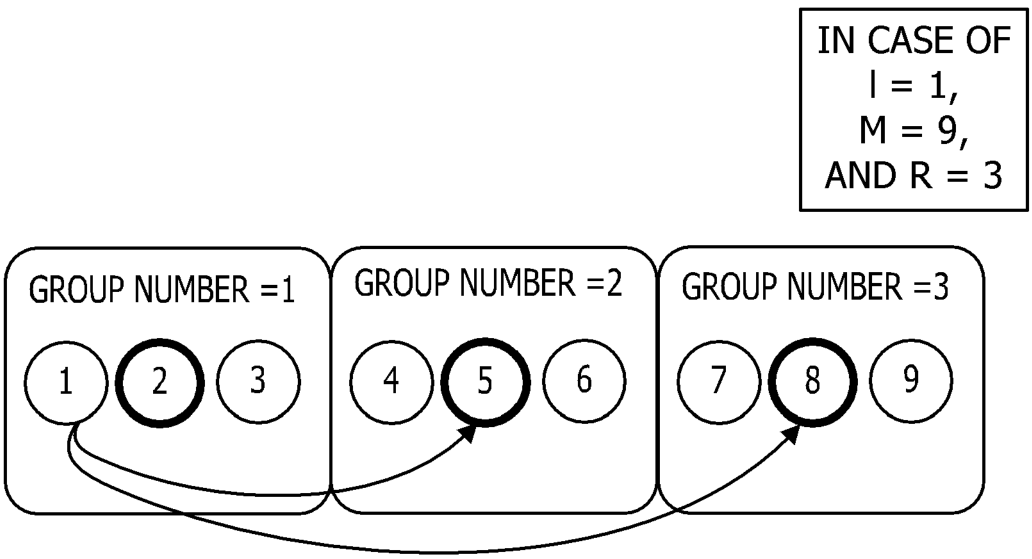
IN CASE OF
l = 1,
M = 9,
AND R = 3
GROUP NUMBER =1
GROUP NUMBER =2
GROUP NUMBER =3
1
2
3
4
5
6
7
8
9

FIG. 17

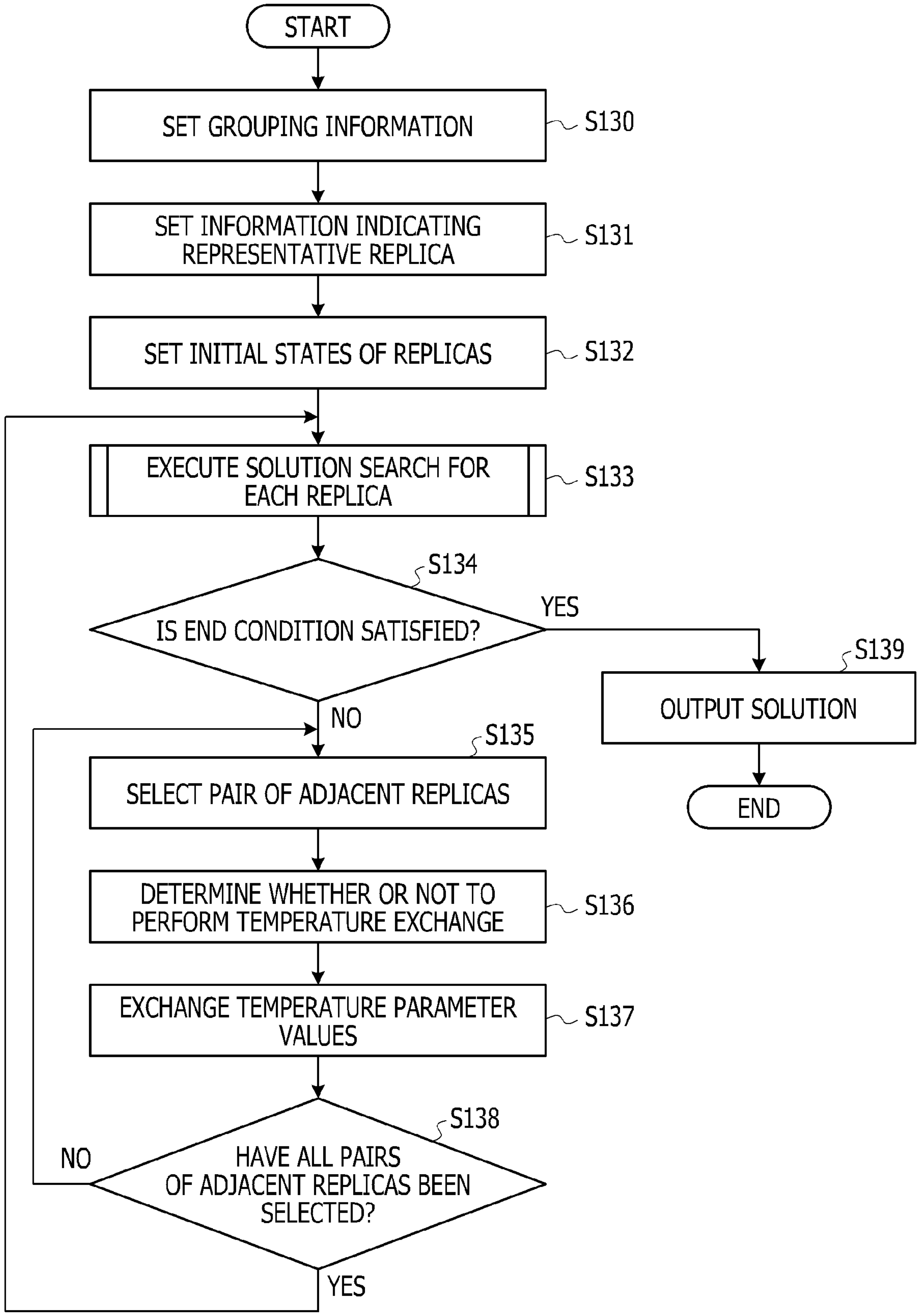
START
SET GROUPING INFORMATION
S130
SET INFORMATION INDICATING REPRESENTATIVE REPLICA
S131
SET INITIAL STATES OF REPLICAS
S132
EXECUTE SOLUTION SEARCH FOR EACH REPLICA
S133
S134
IS END CONDITION SATISFIED?
YES
S139
OUTPUT SOLUTION
END
NO
S135
SELECT PAIR OF ADJACENT REPLICAS
DETERMINE WHETHER OR NOT TO PERFORM TEMPERATURE EXCHANGE
S136
EXCHANGE TEMPERATURE PARAMETER VALUES
S137
S138
HAVE ALL PAIRS OF ADJACENT REPLICAS BEEN SELECTED?
NO
YES

FIG. 18

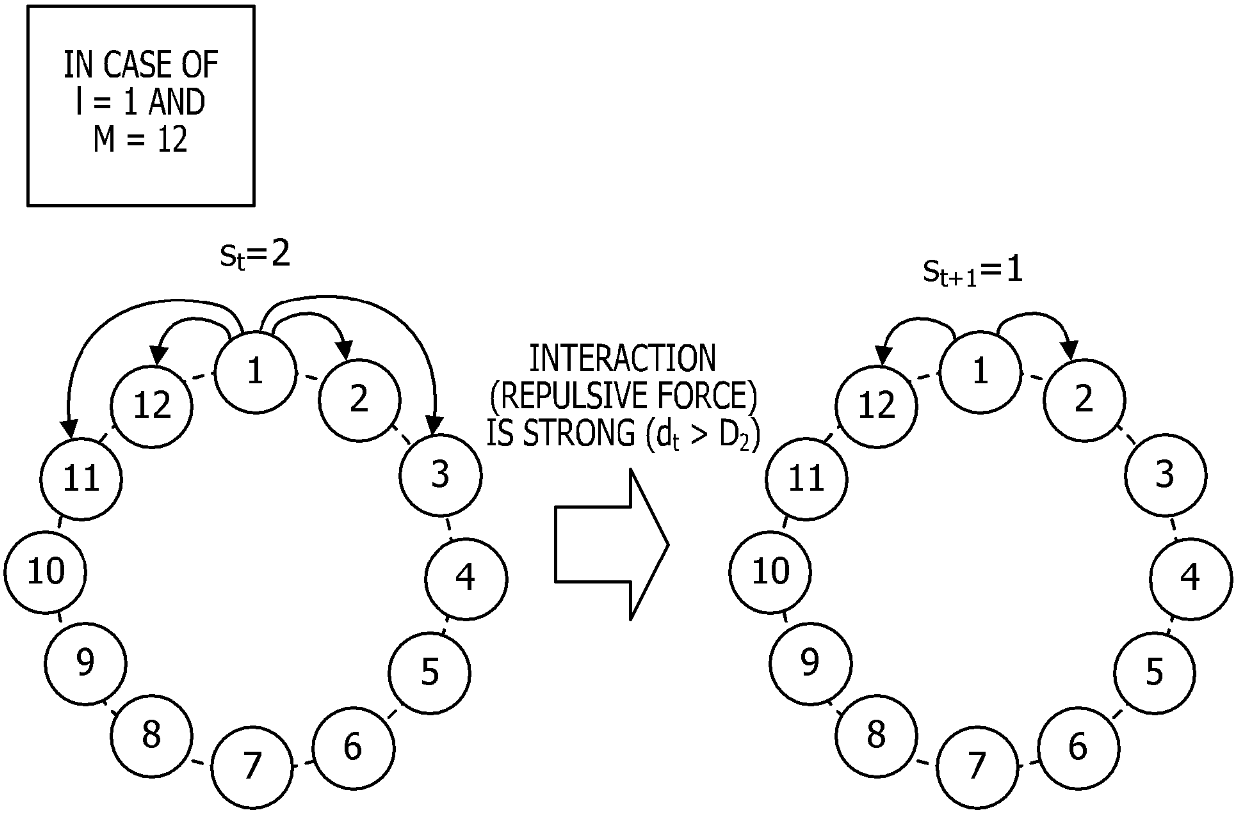
IN CASE OF
l = 1 AND
M = 12
$s_t$=2
1
2
3
4
5
6
7
8
9
10
11
12
INTERACTION
(REPULSIVE FORCE)
IS STRONG ($d_t$ > $D_2$)
$s_{t+1}$=1
1
2
3
4
5
6
7
8
9
10
11
12

FIG. 19

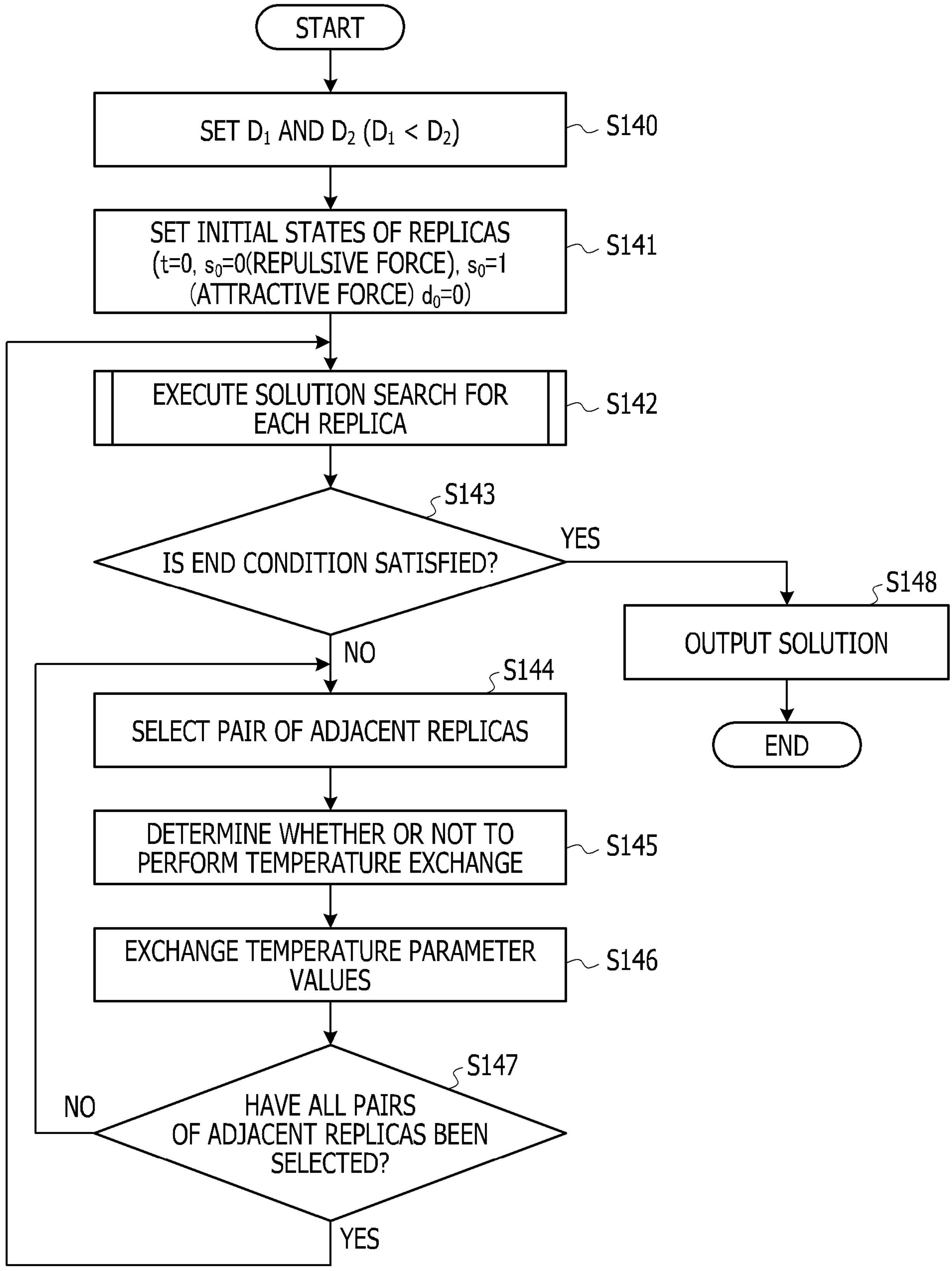
START
SET $D_1$ AND $D_2$ ($D_1 < D_2$)
S140
SET INITIAL STATES OF REPLICAS ($t=0$, $s_0=0$(REPULSIVE FORCE), $s_0=1$ (ATTRACTIVE FORCE) $d_0=0$)
S141
EXECUTE SOLUTION SEARCH FOR EACH REPLICA
S142
IS END CONDITION SATISFIED?
S143
YES
NO
OUTPUT SOLUTION
S148
END
SELECT PAIR OF ADJACENT REPLICAS
S144
DETERMINE WHETHER OR NOT TO PERFORM TEMPERATURE EXCHANGE
S145
EXCHANGE TEMPERATURE PARAMETER VALUES
S146
HAVE ALL PAIRS OF ADJACENT REPLICAS BEEN SELECTED?
S147
NO
YES

FIG. 20

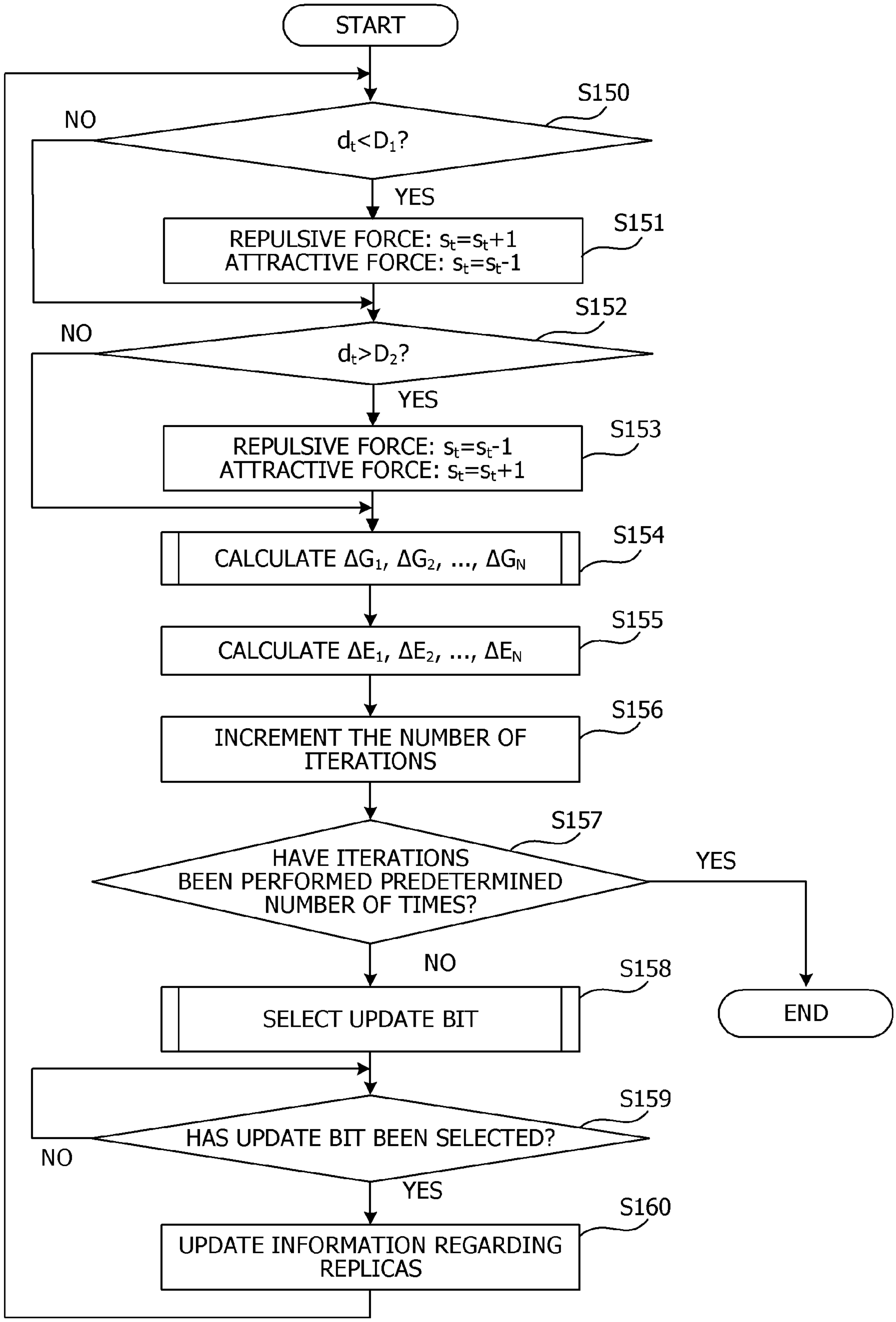
START
S150
$d_t<D_1$?
NO
YES
S151
REPULSIVE FORCE: $s_t=s_t+1$
ATTRACTIVE FORCE: $s_t=s_t-1$
S152
$d_t>D_2$?
NO
YES
S153
REPULSIVE FORCE: $s_t=s_t-1$
ATTRACTIVE FORCE: $s_t=s_t+1$
S154
CALCULATE $\Delta G_1, \Delta G_2, ..., \Delta G_N$
S155
CALCULATE $\Delta E_1, \Delta E_2, ..., \Delta E_N$
S156
INCREMENT THE NUMBER OF ITERATIONS
S157
HAVE ITERATIONS BEEN PERFORMED PREDETERMINED NUMBER OF TIMES?
YES
NO
S158
SELECT UPDATE BIT
END
S159
HAS UPDATE BIT BEEN SELECTED?
NO
YES
S160
UPDATE INFORMATION REGARDING REPLICAS

FIG. 21

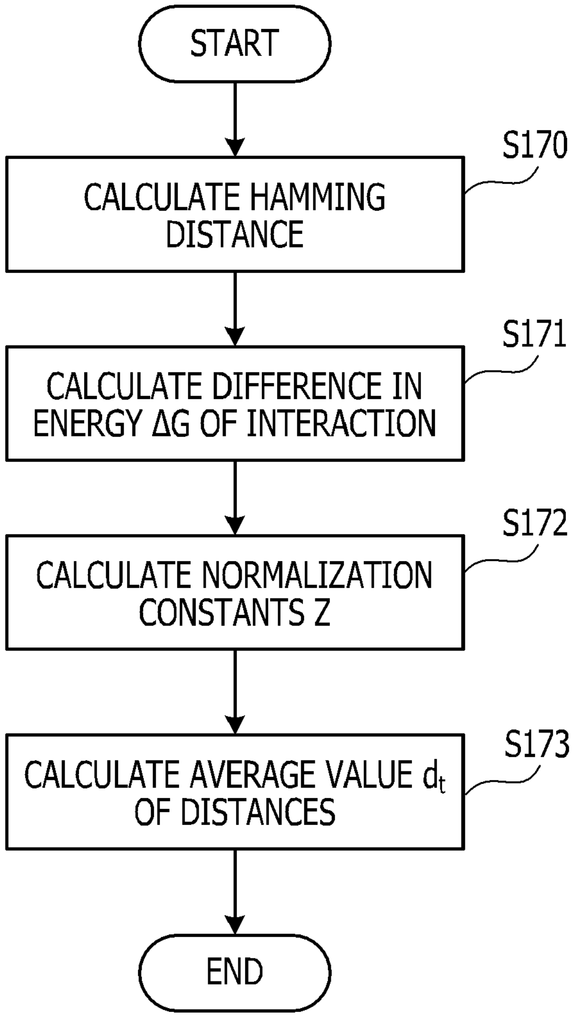
START
S170
CALCULATE HAMMING DISTANCE
S171
CALCULATE DIFFERENCE IN ENERGY ΔG OF INTERACTION
S172
CALCULATE NORMALIZATION CONSTANTS Z
S173
CALCULATE AVERAGE VALUE $d_t$ OF DISTANCES
END

FIG. 22

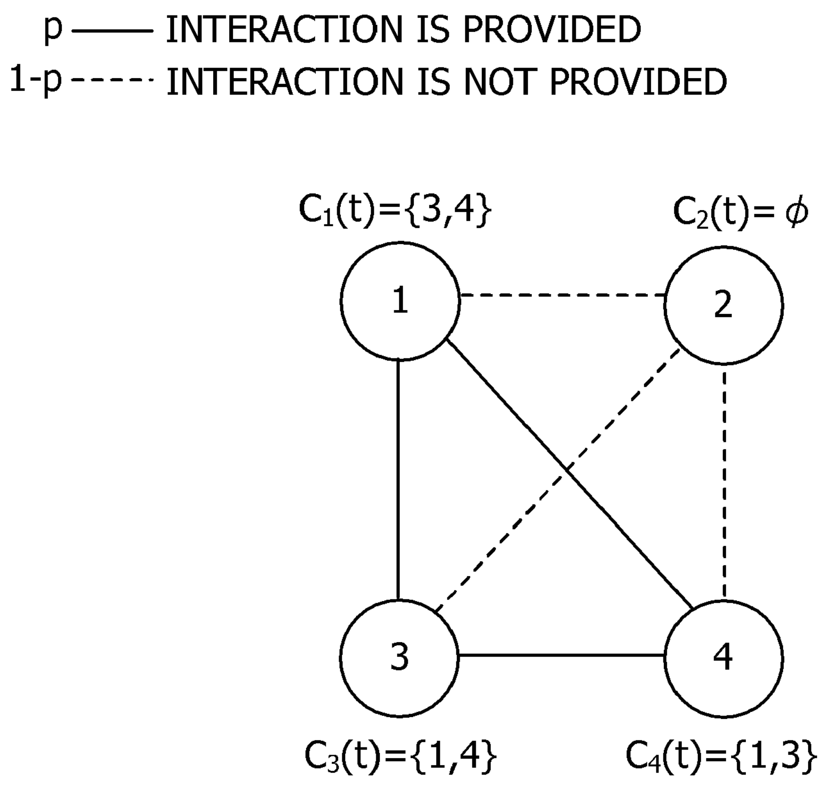
p INTERACTION IS PROVIDED
1-p INTERACTION IS NOT PROVIDED
C1(t)={3,4}
C2(t)=ϕ
1
2
3
4
C3(t)={1,4}
C4(t)={1,3}

FIG. 23

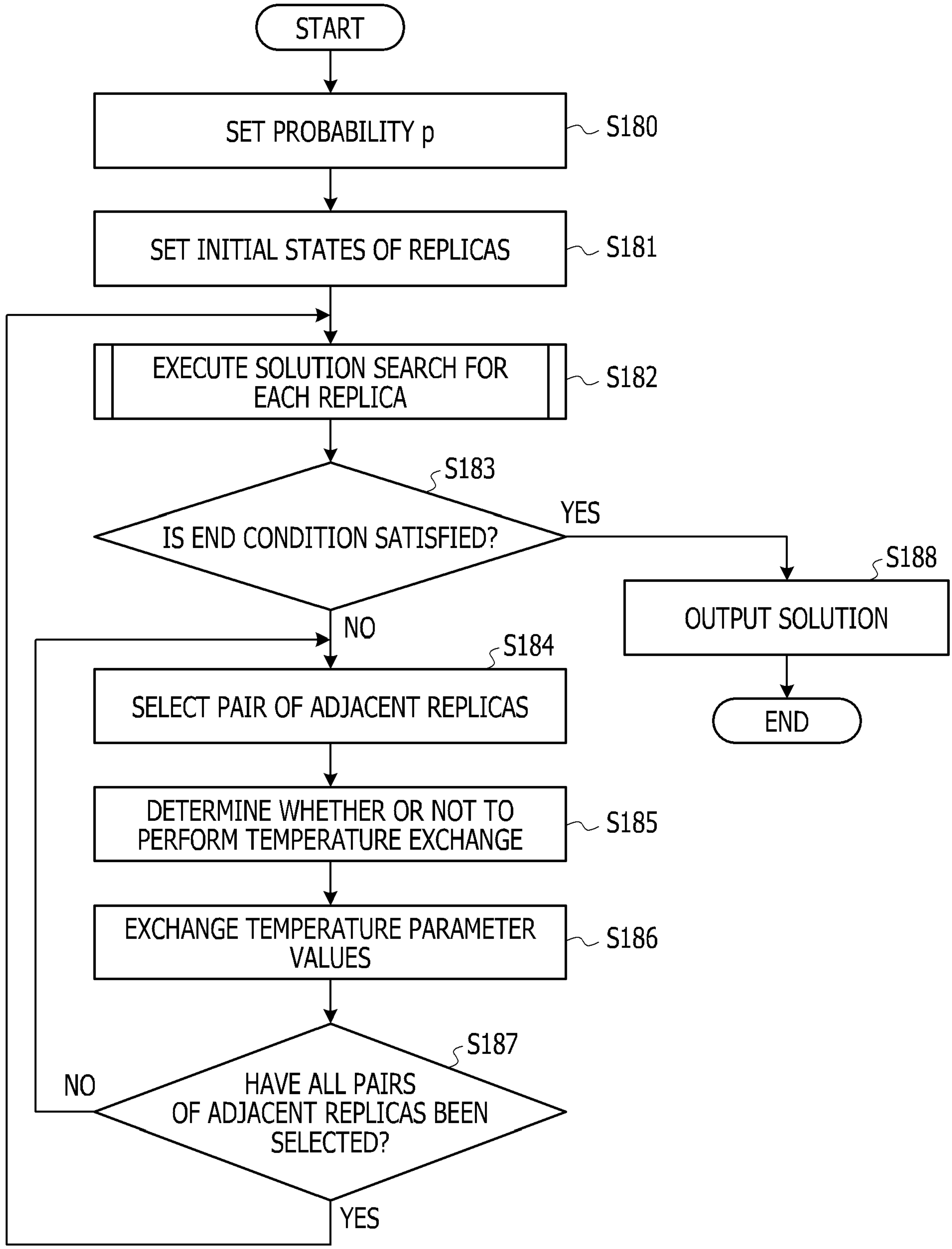
START
SET PROBABILITY p
S180
SET INITIAL STATES OF REPLICAS
S181
EXECUTE SOLUTION SEARCH FOR EACH REPLICA
S182
S183
IS END CONDITION SATISFIED?
YES
S188
OUTPUT SOLUTION
END
NO
S184
SELECT PAIR OF ADJACENT REPLICAS
DETERMINE WHETHER OR NOT TO PERFORM TEMPERATURE EXCHANGE
S185
EXCHANGE TEMPERATURE PARAMETER VALUES
S186
S187
HAVE ALL PAIRS OF ADJACENT REPLICAS BEEN SELECTED?
NO
YES

FIG. 24

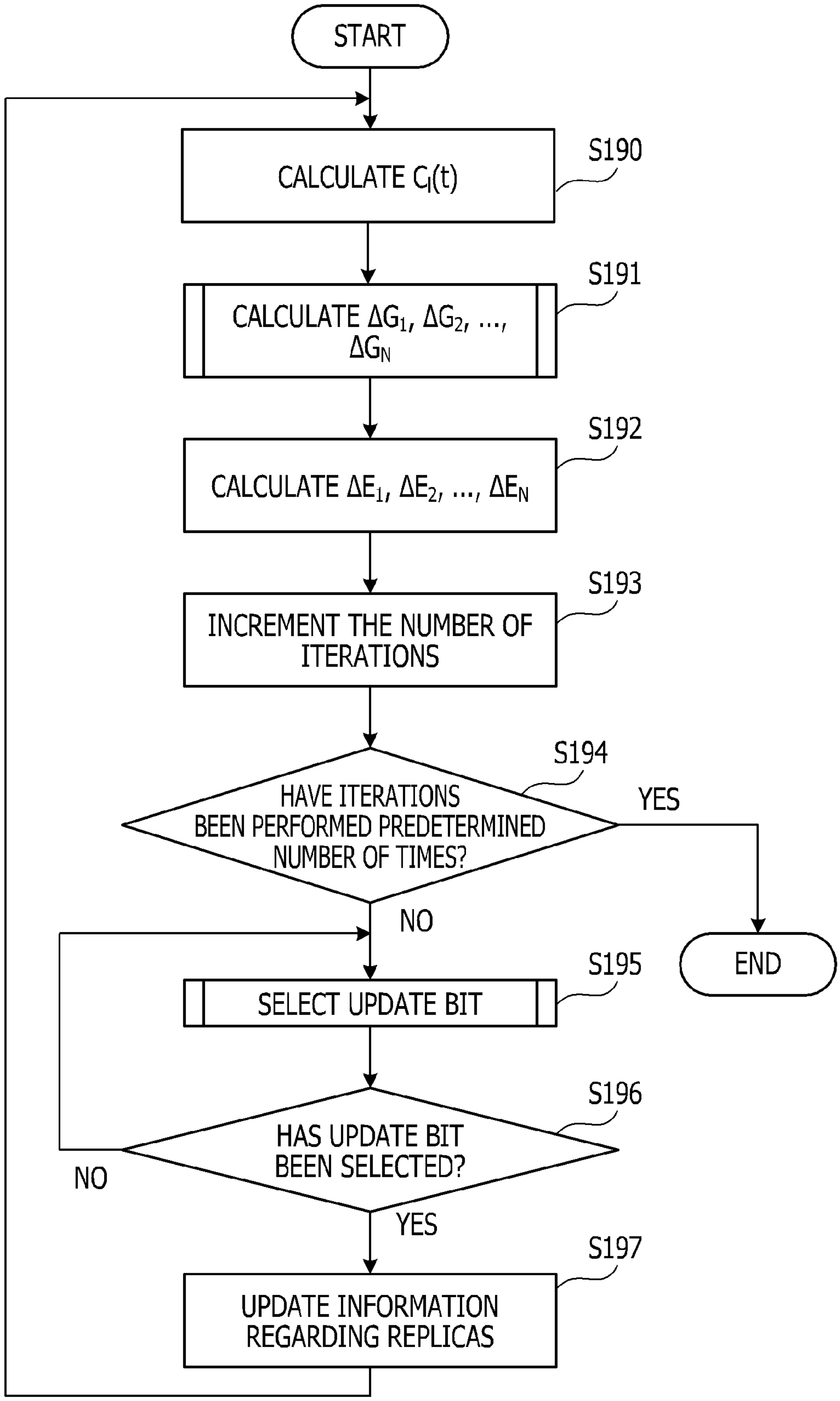
START
CALCULATE $C_l(t)$
S190
CALCULATE $\Delta G_1$, $\Delta G_2$, ..., $\Delta G_N$
S191
CALCULATE $\Delta E_1$, $\Delta E_2$, ..., $\Delta E_N$
S192
INCREMENT THE NUMBER OF ITERATIONS
S193
HAVE ITERATIONS BEEN PERFORMED PREDETERMINED NUMBER OF TIMES?
S194
YES
NO
END
SELECT UPDATE BIT
S195
HAS UPDATE BIT BEEN SELECTED?
S196
NO
YES
UPDATE INFORMATION REGARDING REPLICAS
S197

FIG. 25

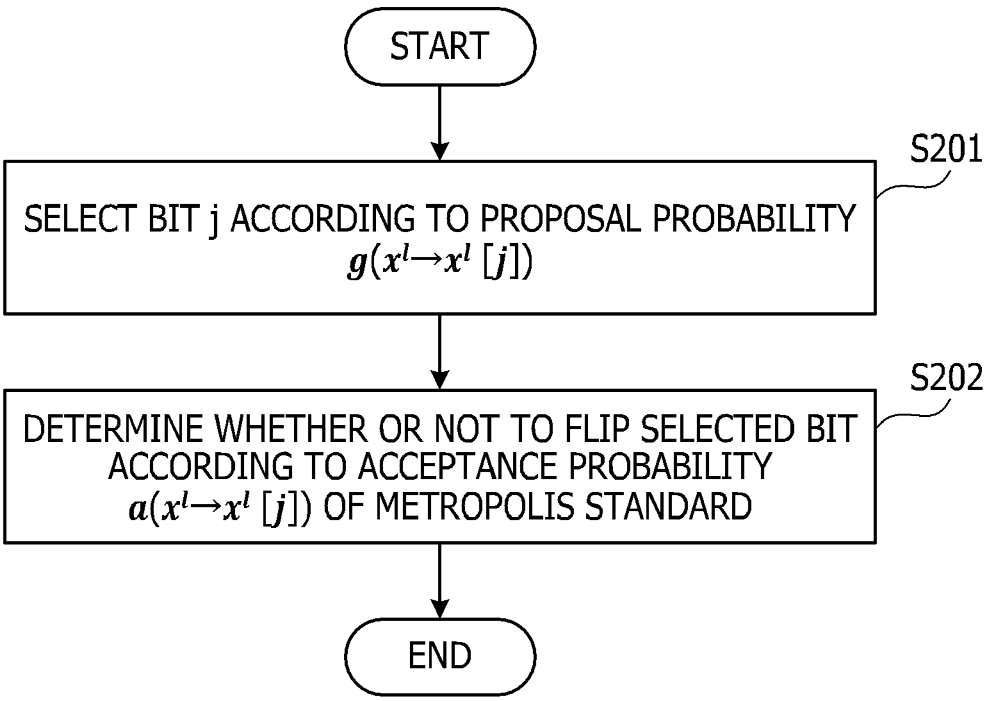
START
S201
SELECT BIT j ACCORDING TO PROPOSAL PROBABILITY $g(x^l \rightarrow x^l[j])$
S202
DETERMINE WHETHER OR NOT TO FLIP SELECTED BIT ACCORDING TO ACCEPTANCE PROBABILITY $a(x^l \rightarrow x^l[j])$ OF METROPOLIS STANDARD
END

FIG. 26

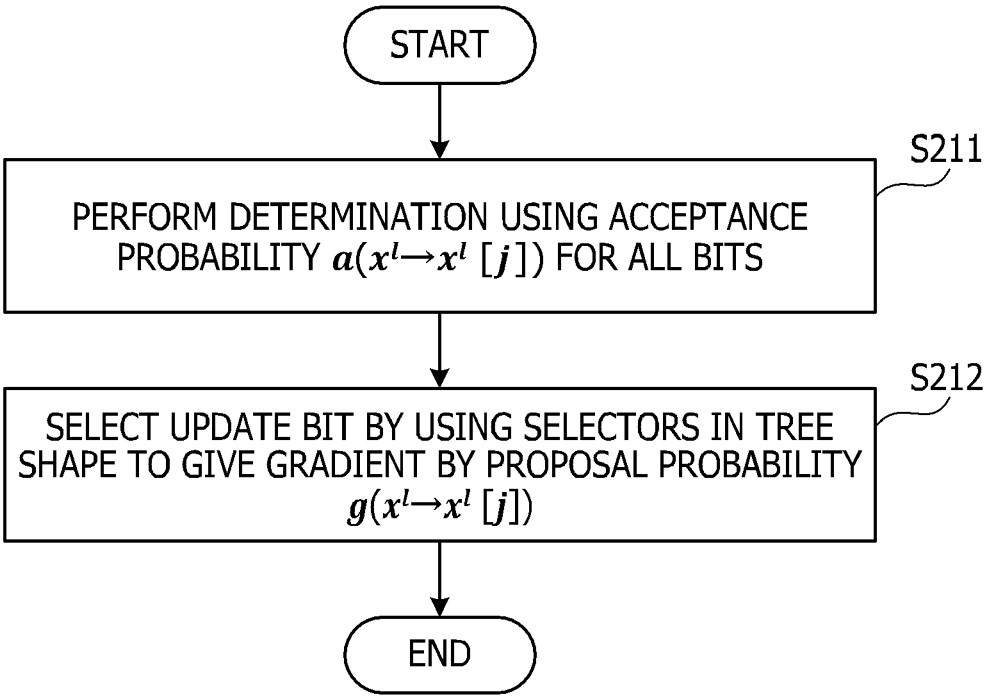
START
S211
PERFORM DETERMINATION USING ACCEPTANCE PROBABILITY $a(x^l \rightarrow x^l[j])$ FOR ALL BITS
S212
SELECT UPDATE BIT BY USING SELECTORS IN TREE SHAPE TO GIVE GRADIENT BY PROPOSAL PROBABILITY $g(x^l \rightarrow x^l[j])$
END

FIG. 27

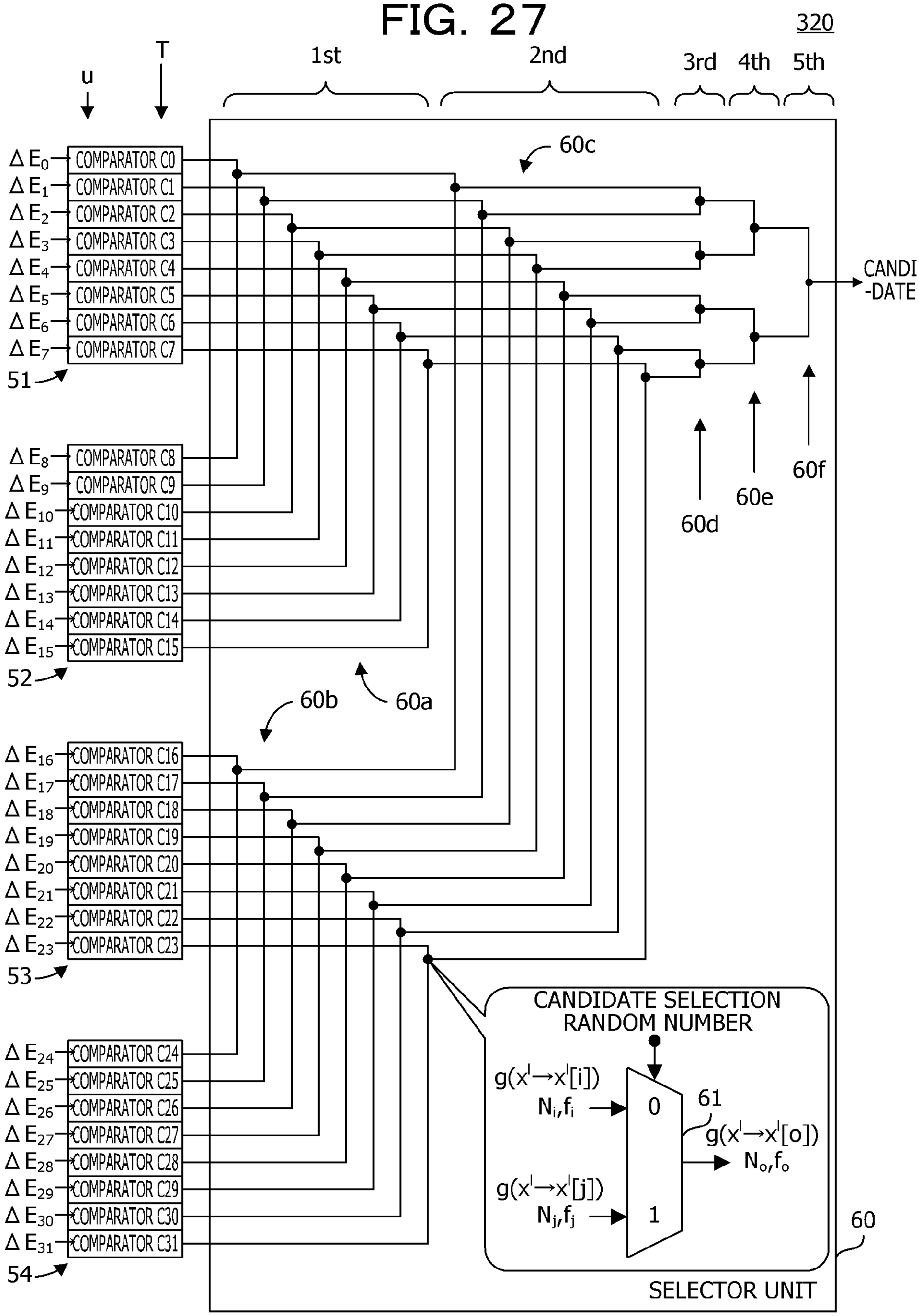
320
u
T
1st
2nd
3rd
4th
5th
60c
ΔE0 COMPARATOR C0
ΔE1 COMPARATOR C1
ΔE2 COMPARATOR C2
ΔE3 COMPARATOR C3
ΔE4 COMPARATOR C4
ΔE5 COMPARATOR C5
ΔE6 COMPARATOR C6
ΔE7 COMPARATOR C7
51
CANDI -DATE
60d
60e
60f
ΔE8 COMPARATOR C8
ΔE9 COMPARATOR C9
ΔE10 COMPARATOR C10
ΔE11 COMPARATOR C11
ΔE12 COMPARATOR C12
ΔE13 COMPARATOR C13
ΔE14 COMPARATOR C14
ΔE15 COMPARATOR C15
52
60b
60a
ΔE16 COMPARATOR C16
ΔE17 COMPARATOR C17
ΔE18 COMPARATOR C18
ΔE19 COMPARATOR C19
ΔE20 COMPARATOR C20
ΔE21 COMPARATOR C21
ΔE22 COMPARATOR C22
ΔE23 COMPARATOR C23
53
CANDIDATE SELECTION RANDOM NUMBER
g(x'→x'[i])
Ni,fi
0
61
g(x'→x'[o])
No,fo
g(x'→x'[j])
Nj,fj
1
ΔE24 COMPARATOR C24
ΔE25 COMPARATOR C25
ΔE26 COMPARATOR C26
ΔE27 COMPARATOR C27
ΔE28 COMPARATOR C28
ΔE29 COMPARATOR C29
ΔE30 COMPARATOR C30
ΔE31 COMPARATOR C31
54
60
SELECTOR UNIT

FIG. 28

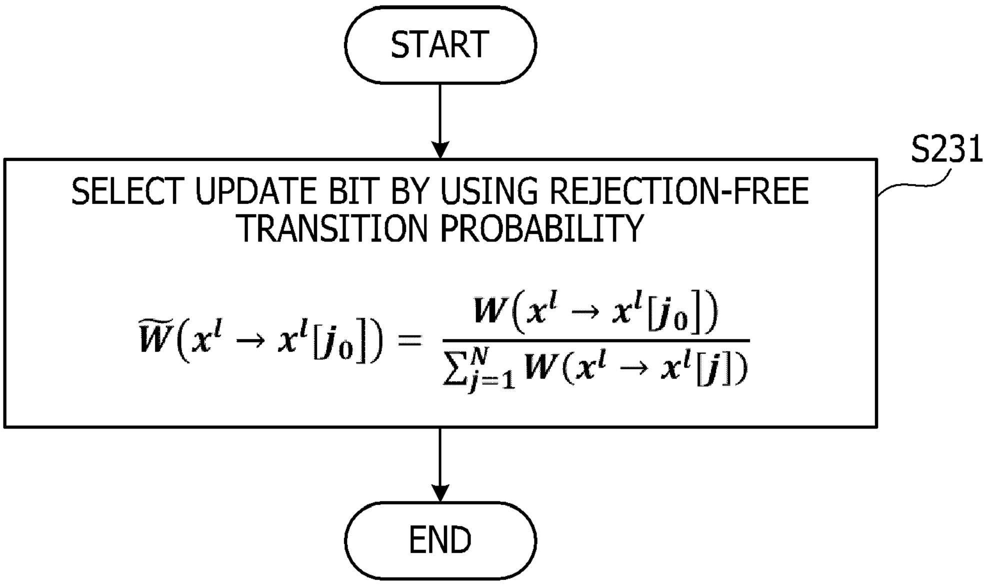
START
S231
SELECT UPDATE BIT BY USING REJECTION-FREE TRANSITION PROBABILITY
$\widetilde{W}(x^l \rightarrow x^l[j_0]) = \frac{W(x^l \rightarrow x^l[j_0])}{\sum_{j=1}^{N} W(x^l \rightarrow x^l[j])}$
END

FIG. 29

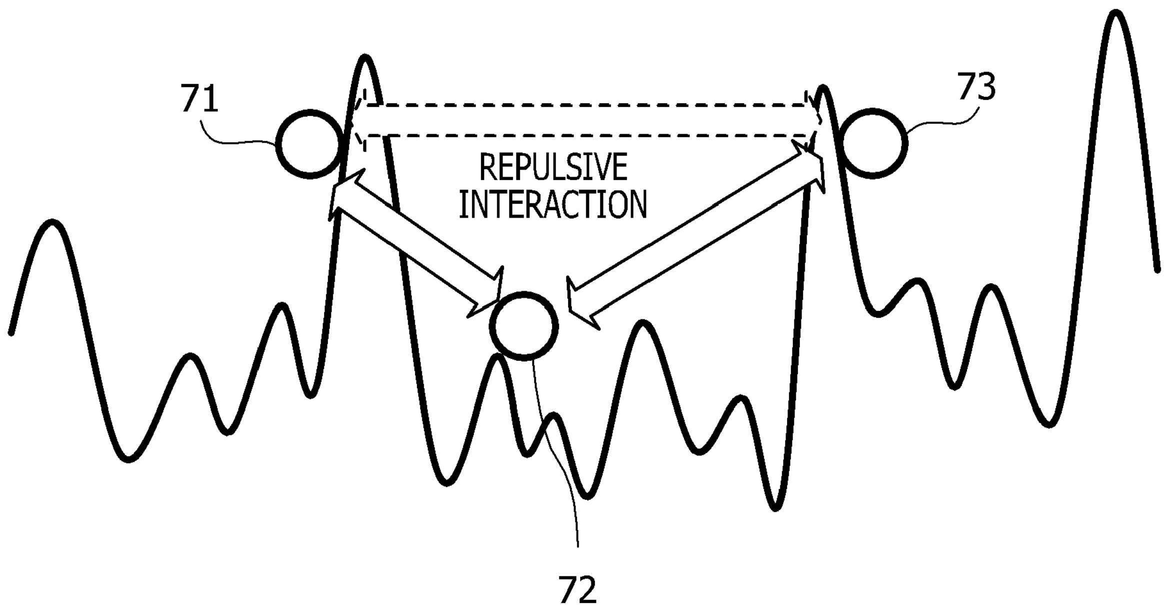

FIG. 30

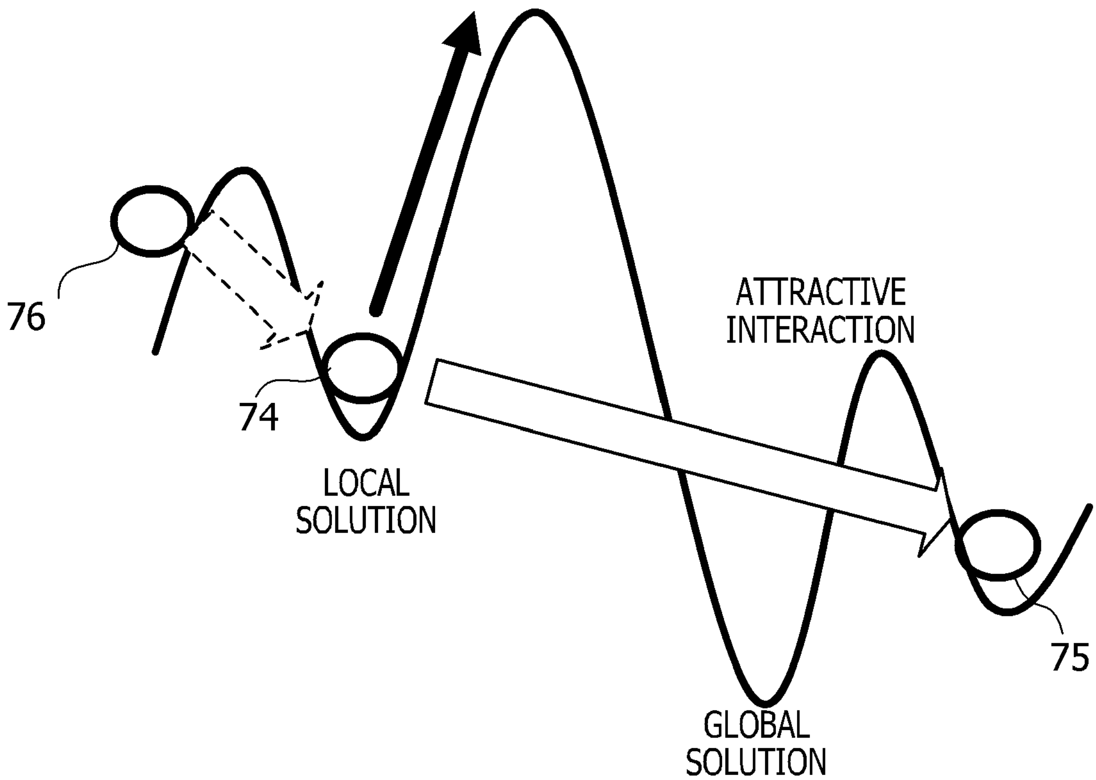
76
74
LOCAL
SOLUTION
ATTRACTIVE
INTERACTION
GLOBAL
SOLUTION
75

FIG. 31

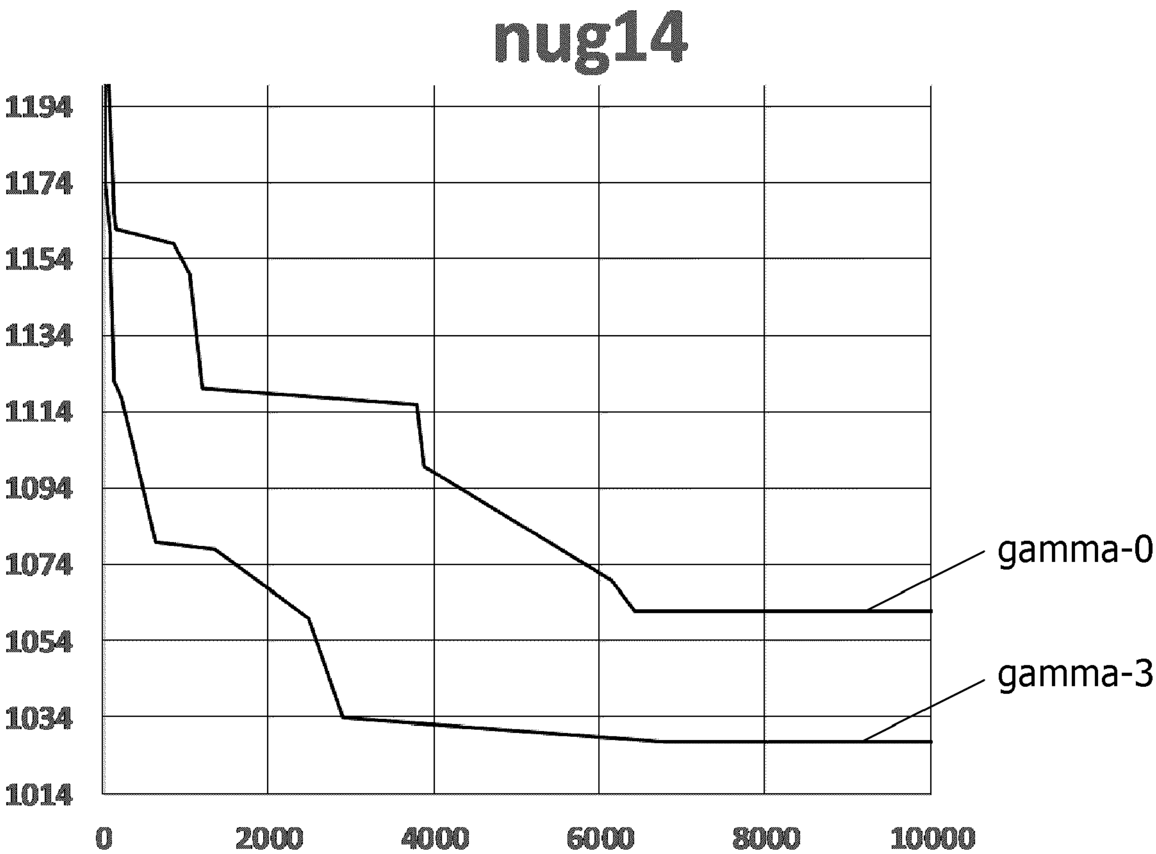
nug14
1194
1174
1154
1134
1114
1094
1074
1054
1034
1014
0
2000
4000
6000
8000
10000
gamma-0
gamma-3

FIG. 32

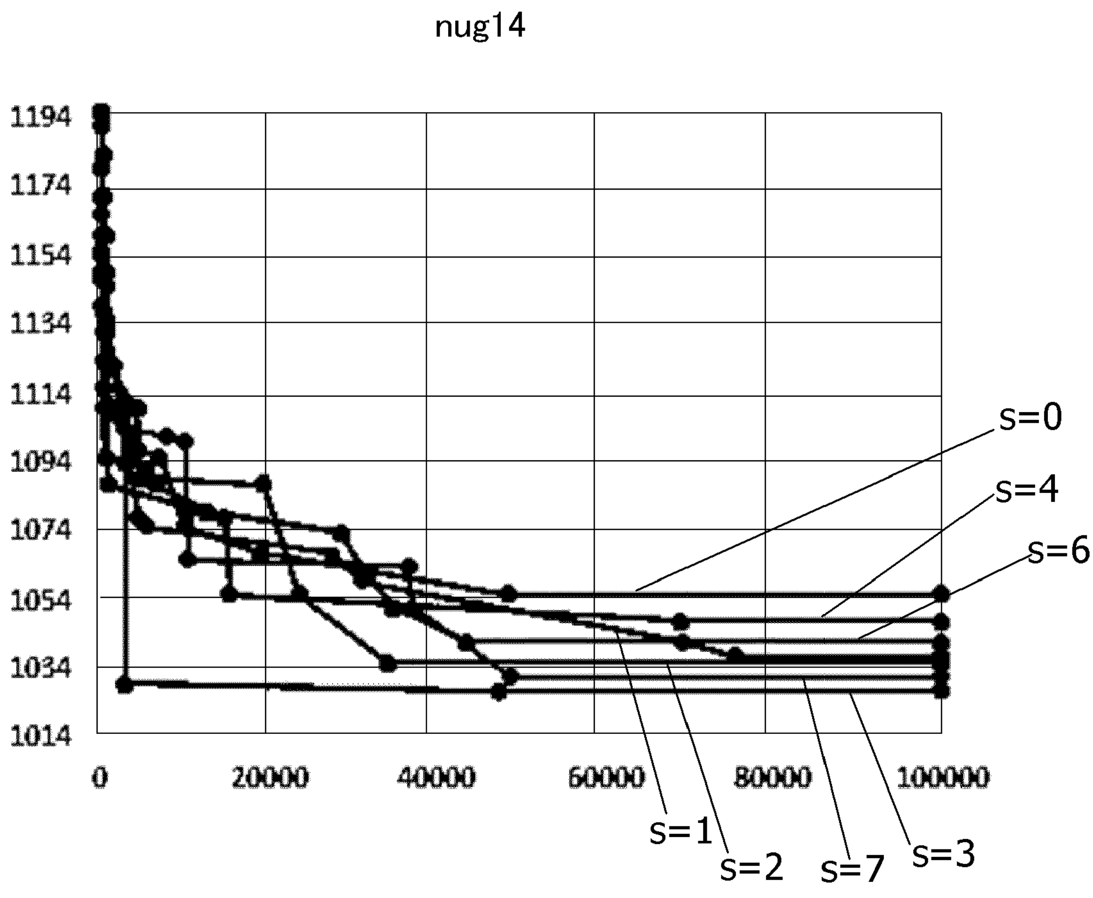
nug14
1194
1174
1154
1134
1114
1094
1074
1054
1034
1014
0
20000
40000
60000
80000
100000
s=0
s=4
s=6
s=1
s=2
s=7
s=3

FIG. 33

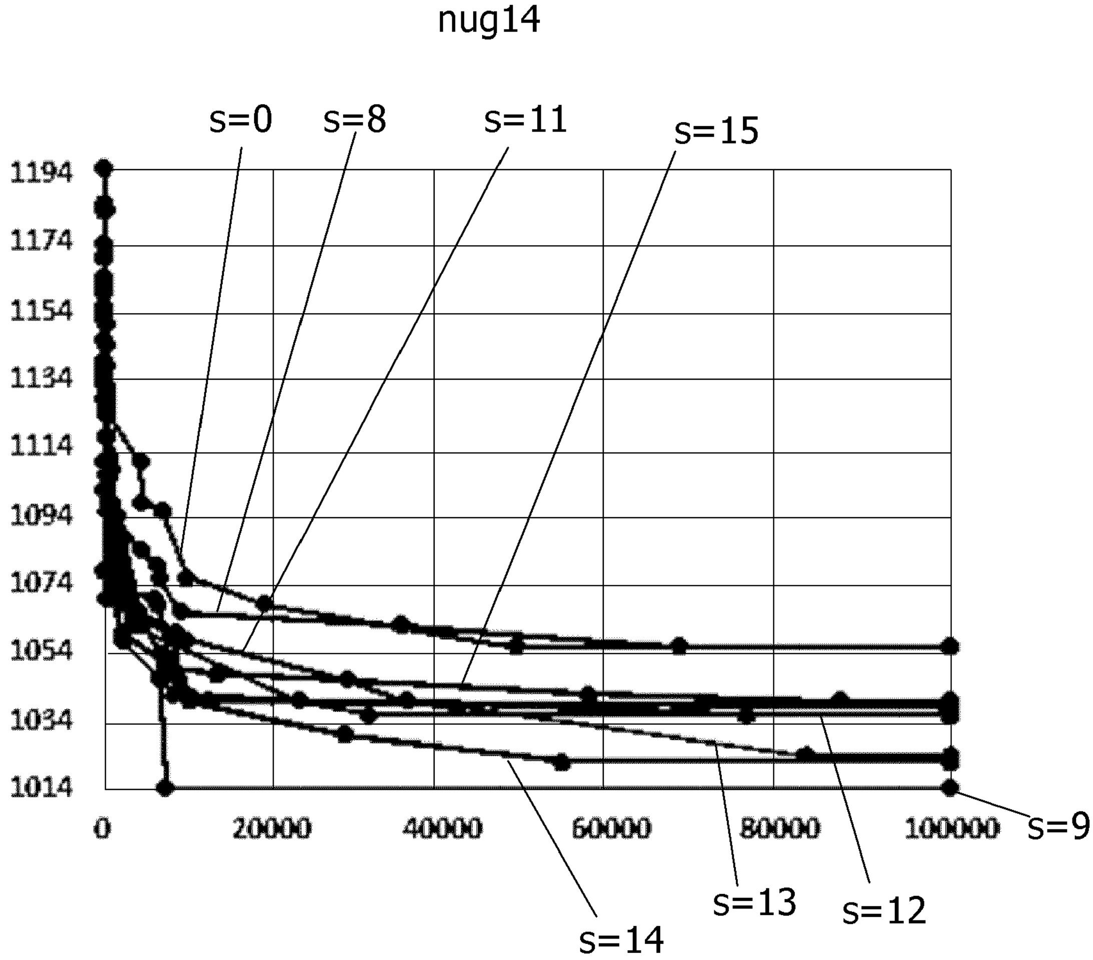
nug14
s=0
s=8
s=11
s=15
1194
1174
1154
1134
1114
1094
1074
1054
1034
1014
0
20000
40000
60000
80000
100000
s=9
s=13
s=12
s=14

Europäisches Patentamt
European Patent Office
Office européen des brevets

# EUROPEAN SEARCH REPORT

Application Number
EP 21 17 9995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/090026 A1 (SHIBASAKI TAKAYUKI [JP]) 19 March 2020 (2020-03-19)<br>* paragraph [0003] - paragraph [0006] *<br>* paragraph [0124] - paragraph [0149]; figures 4, 7, 8 *<br>----- | 1-16 | INV.<br>G06N3/04<br>G06N5/00<br>G06N7/00<br>G06N3/08 |
| X | DABIRI KEIVAN ET AL: "Replica Exchange MCMC Hardware With Automatic Temperature Selection and Parallel Trial",<br>IEEE TRANSACTIONS ON PARALLEL AND DISTRIBUTED SYSTEMS, IEEE, USA,<br>vol. 31, no. 7, 5 March 2020 (2020-03-05), pages 1681-1692, XP011776259,<br>ISSN: 1045-9219, DOI: 10.1109/TPDS.2020.2972359<br>[retrieved on 2020-03-04]<br>Sections 1 - 4;<br>* abstract *<br>----- | 1-16 | |
| A,D | CARLO BALDASSI ET AL: "Unreasonable Effectiveness of Learning Neural Nets: Accessible States and Robust Ensembles",<br>ARXIV.ORG, CORNELL UNIVERSITY LIBRARY, 201 OLIN LIBRARY CORNELL UNIVERSITY ITHACA, NY 14853,<br>20 May 2016 (2016-05-20), XP080702567,<br>Sections I - II, IV;<br>* abstract *<br>-----<br>-/-- | 1-16 | TECHNICAL FIELDS SEARCHED (IPC)<br>G06N |

1 The present search report has been drawn up for all claims

| Place of search | Date of completion of the search | Examiner |
|---|---|---|
| Munich | 22 December 2021 | Baudino, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 17 9995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OKUYAMA TAKUYA ET AL: "An Ising Computer Based on Simulated Quantum Annealing by Path Integral Monte Carlo Method", 2017 IEEE INTERNATIONAL CONFERENCE ON REBOOTING COMPUTING (ICRC), IEEE, 8 November 2017 (2017-11-08), pages 1-6, XP033273696, DOI: 10.1109/ICRC.2017.8123652 [retrieved on 2017-11-28] Sections I - III; * abstract * ----- | 1-16 | |

TECHNICAL FIELDS SEARCHED (IPC)

1 The present search report has been drawn up for all claims

| Place of search | Date of completion of the search | Examiner |
|---|---|---|
| Munich | 22 December 2021 | Baudino, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 21 17 9995

This annex lists the patent family members relating to the patent documents cited in the above-mentioned European search report. The members are as contained in the European Patent Office EDP file on
The European Patent Office is in no way liable for these particulars which are merely given for the purpose of information.

22-12-2021

| Patent document cited in search report | Publication date | Patent family member(s) | Publication date |
|---|---|---|---|
| US 2020090026 A1 | 19-03-2020 | JP 2020046718 A | 26-03-2020 |
| | | US 2020090026 A1 | 19-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019082793 A
- US 20190087546


### Non-patent literature cited in the description


- **GREGOIRE CLARTE ; ANTOINE DIEZ.** Collective sampling through a Metropolis-Hastings like method: kinetic theory and numerical experiments. *arXiv:1909.08988v1 [math.ST,* 18 September 2019
- **BALDASSI, CARLO.** Unreasonable Effectiveness of Learning Neural Networks: From Accessible States and Robust Ensembles to Basic Algorithmic Schemes. *PNAS,* 15 November 2016, E7655-E7662